(19) Europäisches Patentamt
European Patent Office
Office européen des brevets

(11) **EP 3 116 841 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(21) Anmeldenummer: **15709905.2**

(22) Anmeldetag: **11.03.2015**

(51) Int Cl.:
*C04B 28/14* (2006.01)    *E04B 1/94* (2006.01)
*E06B 5/16* (2006.01)    *C04B 20/10* (2006.01)

(86) Internationale Anmeldenummer:
**PCT/EP2015/055109**

(87) Internationale Veröffentlichungsnummer:
**WO 2015/136011 (17.09.2015 Gazette 2015/37)**

(54) **FEUERWIDERSTANDSKÖRPER UND VERFAHREN ZUR HERSTELLUNG DESSELBEN**

FIRE RESISTANCE ELEMENT AND METHODS FOR THE PRODUCTION THEREOF

ÉLÉMENT DE RÉSISTANCE AU FEU ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2014 DE 102014103249**

(43) Veröffentlichungstag der Anmeldung:
**18.01.2017 Patentblatt 2017/03**

(73) Patentinhaber: **PTA Solutions GmbH**
**80802 München (DE)**

(72) Erfinder:
• **STURZENEGGER, Philip**
**80802 München (DE)**
• **GONZENBACH, Urs T.**
**80802 München (DE)**

(74) Vertreter: **Zimmermann & Partner Patentanwälte mbB**
**Josephspitalstr. 15**
**80331 München (DE)**

(56) Entgegenhaltungen:
**DE-A1- 3 806 062    US-A- 6 039 800**

• **Zora Bazelová ET AL: "THE EFFECT OF SURFACE ACTIVE SUBSTANCE CONCENTRATION ON THE PROPERTIES OF FOAMED AND NON-FOAMED GYPSUM",** Ceramics - Silikáty, 30. April 2010 (2010-04-30), Seiten 379-385, XP055193170, Gefunden im Internet: URL:http://www.ceramics-silikaty.cz/2010/pdf/2010_04_379.pdf [gefunden am 2015-06-02]

**Beschreibung**

**I. Technischer Hintergrund**

Gebiet der Erfindung

Die Erfindung betrifft einen Feuerwiderstandskörper, ein Herstellverfahren für Feuerwiderstandskörper und ein Bauteil mit einem solchen Feuerwiderstandskörper.

Stand der Technik

Aus dem Stand der Technik sind Bauteile für das Bauwesen mit Feuerschutzwirkung bekannt. Zu diesem Zweck werden beispielsweise Platten aus Gips aufgrund ihrer feuerhemmenden Wirkung eingesetzt.

Werden solche Gipsplatten im Brandfall erhitzt, so spaltet sich das im Gips gebundene Kristallwasser ab und verdunstet. Dadurch werden die Gipsplatten gekühlt: Die von einem Brand erzeugte Hitze muss zunächst die Hydratisierungsreaktion rückgängig machen und das Wasser freisetzen. Die dabei geleistete Arbeit erfordert Energie. Das freigesetzte Wasser nimmt anschliessend durch das Verdampfen erneut Energie auf. Durch die Absorption dieser Energie wird Wärme entzogen und das System somit gekühlt. Selbst ein dehydratisierter Gipskörper ist anschließend noch bis zu einem gewissen Grad brandbeständig. Daher ist Gips für den baulichen Brandschutz sehr geeignet.

Zum Zweck des Brandschutzes werden gewöhnlich im Endlosverfahren hergestellt Gipsplatten in Standardgrössen verwendet, die sodann geeignet zugeschnitten werden. Dies ist allerdings mit hohem Aufwand an manueller Arbeit verbunden und daher ein beträchtlicher Kostenfaktor. Weiter ist es aus diesem Grund schwierig, eine gleichbleibende Qualität der Bauteile sicherzustellen.

Zudem sind die Bauteile aus Gips relativ schwer. Dies erschwert den Einbau zusätzlich und schränkt darüber hinaus auch die möglichen Einsatzgebiete ein. Eine Reduktion in der Materialdichte wird jedoch als problematisch erachtet, da dies nach herrschender Auffassung auf Kosten der Stabilität und der Materialintegrität geht.

Es besteht daher ein Bedarf an alternativen Bauteilen, die die Feuerschutzwirkung und möglichst viele sonstige Vorteile der bekannten Gipsplatten, nicht aber deren Nachteile, zumindest nicht in vollem Umfang, aufweisen.

Zora Bazelová ET AL: "THE EFFECT OF SURFACE ACTIVE SUBSTANCE CONCENTRATION ON THE PROPERTIES OF FOAMED AND NON-FOAMED GYPSUM", offenbart einen Feuerwiderstandskörper, umfassend ein poröses Material auf Gipsbasis mit einem darin enthaltenen amphiphilen Additiv in Form von Natriumlaurylsulfat.

US 6 039 800 A offenbart einen Feuerwiderstandskörper, umfassend ein poröses Material auf Gipsbasis mit einem darin enthaltenen Additiv in Form von Cocamidopropylbetain.

**II. Zusammenfassung der Erfindung**

Vor diesem Hintergrund werden daher ein Feuerwiderstandskörper und ein Verfahren zur Herstellung desselben vorgeschlagen, welche zumindest einige der beschriebenen Nachteile vermindern. Beispielsweise haben Aspekte der Erfindung den Vorteil, Feuerwiderstandskörper und daraus herstellbare Brandschutzbauteile bereitzustellen, welche über eine niedrige Dichte verfügen sowie den einschlägigen Normen für Brandschutzbauteile gerecht zu werden. Ein weiterer Vorteil liegt darin, dass die gewonnenen Feuerwiderstandskörper flexibel einsetzbar, sowie vergleichsweise einfach zu verarbeiten sind.

Gemäß einem Aspekt werden Feuerwiderstandskörper gemäß den Ansprüchen 1 bis 9, ein Bauteil gemäß Anspruch 11, und Verfahren gemäß den Ansprüchen 10 und 12 zur Verfügung gestellt. Diese Aspekte können mit den übrigen hierin genannten Aspekten kombiniert werden.

Ausführungsformen der Erfindung bieten Vorteile hinsichtlich des Gewichts und der Flexibilität beim Einbau, da das Material in nahezu beliebige Formen gegossen werden kann. Auch bieten Ausführungsformen einen hohen Feuerwiderstand. Ausführungsformen sind zudem kostengünstig herstellbar. Ausführungsformen können auch als Isolationsmaterial verwendet werden, denn durch die Porosität können sie über eine verhältnismässig geringe thermische Leitfähigkeit verfügen. Einstückige oder monolithische Ausführungen sind möglich; sie sind homogener und weniger anfällig für Brüche als zusammengesetzte Körper.

Im Weiteren soll die Erfindung anhand von in Figuren dargestellten Ausführungsbeispielen erläutert werden, aus denen sich weitere Vorteile und Abwandlungen ergeben.

Figur 1 zeigt ein Ablaufdiagramm eines Verfahrens zur Herstellung eines Feuerwiderstandskörpers gemäß einem Aspekt der Erfindung;
Figur 2 stellt schematisch ein partiell hydrophobisiertes Partikel dar;
Figur 3 stellt schematisch das Prinzip der Schaumstabilisierung mittels partiell hydrophobisierter Partikel dar;

Figur 4 und 5 zeigen Ansichten von Feuerwiderstandskörpern gemäß jeweiliger Ausführungsformen der Erfindung;

Figur 6 zeigt eine schematische Querschnittsansicht eines Feuerwiderstandskörpers gemäß einer Ausführungsform der Erfindung;

Figur 7 zeigt weitere Ansichten von Feuerwiderstandskörpern gemäß jeweiliger Ausführungsformen der Erfindung;

Figur 8 zeigt Diagramme der zu den Feuerwiderstandskörpern von Figur 7 gehörigen Größenverteilungen der Makroporen;

Figur 9a, 9b, 10a, 10b zeigen zonierte Einlagen für Türblätter einer Feuerwiderstandstür gemäß Ausführungsformen der Erfindung;

Figur 11-14 zeigen erfindungsgemässe Feuerwiderstandskörper mit zwei Zonen und Querschnitte durch dieselben;

Figur 15a, 15b zeigen Ansichten eines Feuerwiderstandskörpers, dessen eine Kante eine Nut und dessen gegenüberliegende Kante eine Feder aufweist;

Figur 16a, 16b zeigen Ansichten eines Feuerwiderstandskörpers analog zu Figur 15a, 15b, welcher zusätzlich Zonen verschiedener Dichte aufweist;

Figur 17a, 17b zeigen Ansichten zweier mittels Nut und Feder zusammensetzbarer Feuerwiderstandskörper;

Figur 18-20 zeigen Ansichten weiterer mittels Nut und Feder zusammensetzbarer Feuerwiderstandskörper;

Figur 21 zeigt eine Seitenansicht einer Türblatteinlage für eine Feuerwiderstandstür gemäß einer Ausführung der Erfindung;

Figur 22 zeigt eine Frontalansicht einer möglichen Variante der Türblatteinlage von Figur 21;

Figur 23a-c zeigen weitere Ansichten einer Türblatteinlage für eine Feuerwiderstandstür gemäß einer Ausführung der Erfindung;

Figur 24a, 24b zeigen Ansichten eines plattenartigen Brandschutzkörpers mit integrierten funktionalen Elementen gemäß einer Ausführung der Erfindung;

Figur 25a, 25b zeigen Ansichten eines geformten Feuerwiderstandskörpers in Form eines Schlosskastens gemäß einer Ausführung der Erfindung;

Figur 26a-26c zeigen Ansichten eines weiteren geformten Feuerwiderstandskörpers in Form eines Schlosskastens gemäß einer Ausführung der Erfindung;

Figur 27 und 28 zeigen Türblatteinlagen mit jeweils darin eingesetzten Schlosskästen gemäß jeweiliger Ausführungen der Erfindung;

Figur 29a, 29b zeigen Ansichten einer Türblatteinlage mit einem darin integrierten Schlosskasten gemäß einer Ausführung der Erfindung;

Figur 30a, 30b zeigen Ansichten einer Brandschutzklappe gemäß einer Ausführung der Erfindung;

Figur 31a, 31b zeigen Ansichten eines geformten Brandschutzkörpers ausgeprägt als Kabelkanal gemäß einer Ausführung der Erfindung; und

Figur 32a, 32b zeigen Ansichten eines geformten Brandschutzkörpers ausgeprägt als Kabelkanal, Kabel- oder Rohrdurchführung gemäß einer weiteren Ausführung der Erfindung.

## III. Grundverfahren

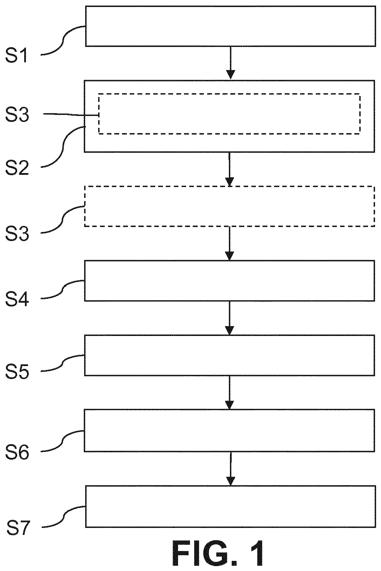

Im Folgenden wird mit Bezug auf Figur 1 das Verfahren zur Herstellung eines Feuerwiderstandskörpers gemäß Aspekten der Erfindung beschrieben. Das Verfahren gliedert sich in folgende Verfahrensschritte:

S1: Zunächst wird ein Gipspulver bereitgestellt;

S2: Das Gipspulver wird in Wasser dispergiert;

S3: Partiell hydrophobisierte Partikel werden in der Wasser-Gips-Dispersion bereitgestellt;

S4: Die Wasser-Gips-Dispersion wird zur Bildung eines Nassschaums aufgeschäumt;

S5: Die partiell hydrophobisierten Partikel stabilisieren Luftbläschen des Nassschaums, indem sie sich an den Wasser-Luft-Grenzflächen anlagern, welche die Wände der Luftbläschen bilden;

S6: Die aufgeschäumte Wasser-Gips-Dispersion härtet zu dem Feuerwiderstandskörper aus, wobei die stabilisierten Luftbläschen Makroporen des Feuerwiderstandskörpers bilden; und

S7: Der Feuerwiderstandskörper wird getrocknet.

Als Ergebnis werden nach Aushärtung des Feuerwiderstandskörpers geschlossene Makroporen mit wohldefinierter Form und Größe erhalten. Insbesondere wird eine besonders homogene Verteilung der Makroporen erhalten. Das hier beschriebene Verfahren ermöglicht es somit, einen stabilen Schaum zu bilden, mittels dessen reproduzierbar uniforme, geschlossene Makroporen in dem Feuerwiderstandskörper erhalten werden.

Im Folgenden werden weitere Einzelheiten zu den jeweiligen Verfahrensschritten erläutert.

In den Schritten S1 und S2 wird das Gipspulver bereitgestellt und in Wasser dispergiert. Das Wasser kann hierbei bereits weitere Additive enthalten (z.B. irgendwelche hierin beschriebenen Additive) und/oder mit weiteren Flüssigkeiten vermischt sein. Das Gipspulver kann aus mehreren Behältern und/oder in mehreren Schritten bereitgestellt werden, und kann mehrere verschiedene Gipspulversorten umfassen.

Auch das Gipspulver muss kein reines Gipspulver sein, sondern es kann bereits mit weiteren Additiven vermischt sein, z.B. mit jedweden hierin beschriebenen Additiven. Einzelheiten zu dem Gipspulver sind in Abschnitt IV.a unten beschrieben, und mögliche weitere Additive sind in den Abschnitten IV.b-e unten beschrieben.

Das Dispergieren des Gipspulvers in Wasser kann durch einen beliebigen Dispergiervorgang erfolgen, etwa durch Zuführen eines kontinuierlichen Zustroms von Gipspulver in das fließende Wasser, oder durch Einmischen des Gipspulvers in einen mit stehendem Wasser gefüllten Container. Das Mischungsverhältnis von Gips zu Wasser bzw. zu Flüssigkeit ist variiert für verschiedene Gipse und wird so eingestellt, dass eine konzentrierte Dispersion entsteht, die aber noch giessbar ist.

In Schritt S3 werden partiell hydrophobisierte Partikel in der Wasser-Gips-Dispersion bereitgestellt. Die Bereitstellung der partiell hydrophobisierten Partikel kann auf verschiedene Wege erfolgen, von denen einige Wege (i)-(iii) im Folgenden beispielhaft beschrieben sind:

(i) Gemäß einem ersten Weg wird ein amphiphiles Hydrophobisierungs-Additiv zugegeben, wobei das Hydrophobisierungs-Additiv zumindest einen Teil der Gipspartikel partiell hydrophobisiert. Gemäß diesem Weg werden die Gipspartikel des Gipspulvers selbst (oder zumindest einige davon) zu den partiell hydrophobisierten Partikeln umgewandelt. Mögliche Hydrophobisierungs-Additive sind in Abschnitt IV.b beschrieben.

Die Zugabe des Hydrophobisierungs-Additivs kann in das Wasser (vor oder gemeinsam mit der Zugabe des Gipspulvers ins Wasser) oder in die bereits bestehende Wasser-Gips-Dispersion erfolgen.

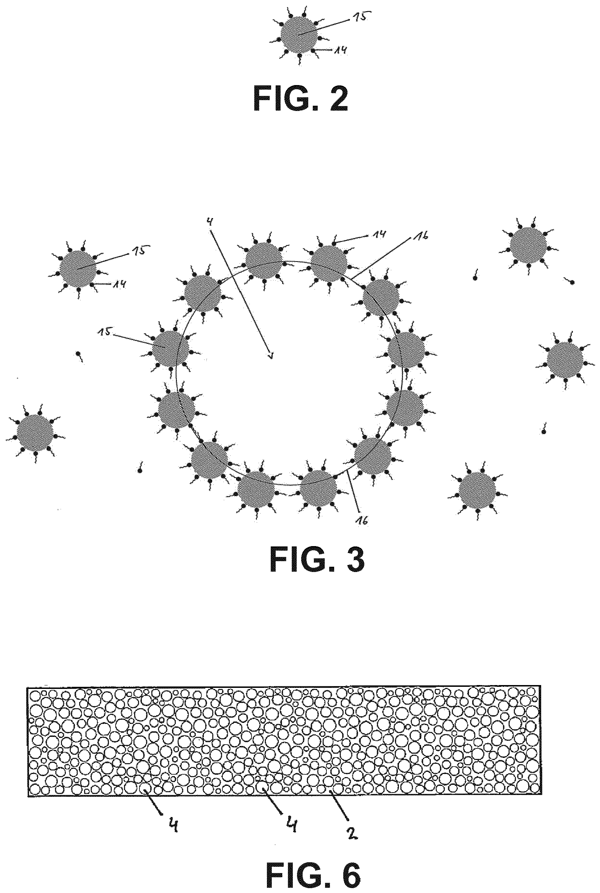

Die Hydrophobisierung der Gipspartikel erfolgt, wie in Figur 2 dargestellt, indem das amphiphile Hydrophobisierungs-Additiv 14 eine ein-molekulare Schicht um die Gipspartikel 15 bildet. Dabei sind die hydrophilen Köpfe des Hydrophobisierungs-Additivs 14 zu den Gipspartikeln 15 hin gerichtet, und die hydrophoben Schwänze sind von den Gipspartikeln 15 weg gerichtet. Dadurch bilden die hydrophoben Schwänze eine die Gipspartikel 15 umhüllende hydrophobe Schicht, die die partielle Hydrophobisierung der Gipspartikel 15 bewirkt.

Unter einer partiellen Hydrophobisierung wird hierbei verstanden, dass das wasserbasierte Lösungsmittel zum Zeitpunkt der Schaumbildung auf dem jeweiligen Partikel einen Kontaktwinkel von 55-85 bildet.

(ii) Gemäß einem zweiten Weg, welcher nicht gemäß der Erfindung ist, werden partiell hydrophobisierte Partikel zugegeben.

Wiederum kann die Zugabe in das Wasser (vor oder gemeinsam mit der Zugabe des Gipspulvers ins Wasser) oder in die bereits bestehende Wasser-Gips-Dispersion erfolgen. Die partiell hydrophobisierten Partikel können zuvor hydrophobisierte Partikel sein. Die Partikel haben somit typischerweise einen relativ hydrophileren Kern, welcher mittels zusätzlicher Schritte, etwa mittels Zugabe eines Additivs, eigens partiell hydrophobisiert wurde. Typischerweise hat somit eine Schale der (partiell) hydrophobisierten Partikel eine höhere Hydrophobizität als der Kern der Partikel. Dadurch kann die Hydrophobizität der Partikel genau an die jeweiligen Bedürfnisse angepasst werden. Die (partiell) hydrophobisierten Partikel können von Gips verschiedene Partikel oder hydrophobisiertes Gipspulver sein. Im letzten Fall können die hydrophobisierten Partikel Gipspulver von Schritt S1 und S2 sein, wobei das Gipspulver bereits zuvor partiell hydrophobisiert wurde (siehe etwa Beschreibung von Weg (i)), oder es kann ein zusätzlich zugegebenes Gipspulver sein. Beispiele für geeignete partiell hydrophobisierbare Partikel sind in Abschnitt IV.c beschrieben.

(iii) Gemäß einem weiteren Weg werden weitere hydrophile Partikel zugegeben, die verschieden vom Gips der Schritte S1 und S2 sind; und ein Hydrophobisierungs-Additiv wird zugegeben, wobei das Hydrophobisierungs-Additiv zumindest einen Teil dieser weiteren Partikel partiell hydrophobisiert. Dieser Weg entspricht Weg (i) und kann mit diesem kombiniert werden, wobei hier anstelle der Gipspartikel (oder zusätzlich zu diesen) weitere Partikel zugegeben und partiell hydrophobisiert werden.

Schritt S3 kann vor, während oder nach dem Schritt S2 erfolgen. Dies ist in Figur 1 beispielhaft durch verschiedene mögliche Positionen des gestrichelt dargestellten Schrittes S3 angedeutet. Beispielsweise kann die Zugabe des Hydrophobisierungs-Additivs zum Wasser erfolgen, bevor das Gipspulver in dem (bereits mit dem Hydrophobisierungs-Additiv vermischten) Wasser dispergiert wird. Alternativ kann die Zugabe des Hydrophobisierungs-Additivs zum Gipspulver erfolgen, bevor das Gipspulver in dem Wasser dispergiert wird.

Auch kann die Zugabe des Hydrophobisierungs-Additivs zum Wasser gleichzeitig mit den Gipspartikeln erfolgen, etwa aus einem separaten Zugabekanal oder aus dem gleichen Zugabekanal wie die Gipspartikel, mit denen das Hydrophobisierungs-Additiv zuvor vermischt wurde. Die letztgenannten Varianten führen dazu, dass das Hydrophobisierungs-Additiv sofort bei Entstehung der Wasser-Gips-Dispersion (Schritt S2) bereitgestellt ist.

Das Hydrophobisierungs-Additiv kann somit von Anfang an mit dem Gipspulver in einer Pulvermischung enthalten sein, oder separat zum Wasser bzw. der Wasser-Gips-Dispersion zugegeben werden.

In Schritt S4 wird die Wasser-Gips-Dispersion aufgeschäumt, wobei ein Nassschaum gebildet wird. Die Schaumbildung kann über verschiedene Methoden erfolgen. Das Aufschäumen kann beispielsweise durch Einbringen von Gasen erfolgen: Hierbei wird durch das Einbringen geeigneter Gasmengen die Dispersion in einen Nassschaum überführt. Gase können zum Beispiel mechanisch in die Dispersion eingearbeitet oder in dieser chemisch erzeugt werden. Es ist auch möglich, in einem geeigneten Prozess Flüssiggase fein in der Dispersion zu verteilen und danach expandieren zu lassen. Beispielsweise kann das Aufschäumen durch Zumischen von Wasserstoffperoxid ($H_2O_2$) zu der Zusammensetzung und nachfolgender Zersetzung des Peroxids erfolgen.

Weitere Details zu dem Schäumungsmittel sind in Abschnitt IV.d beschrieben.

Durch das Einbringen geeigneter Mengen an Gasen in Schritt S4 wird eine Dispersion, die partiell hydrophobisierte Partikel enthält, unter Anlagerung dieser Partikel an der Luft-Wasser Grenzfläche in einen stabilen Nassschaum überführt.

Die Partikelstabilisierung (Schritt S5, der gleichzeitig mit Schritt S4 beginnen kann), wird im Folgenden genauer beschrieben. Ohne an diese Theorie gebunden zu sein, wird die Stabilisierung wie folgt erreicht: Durch ihre partielle Hydrophobizität bedingt, lagern sich die partiell hydrophobisierten Partikel präferentiell an der Oberfläche der Schaumbläschen des Nassschaums, d.h. an der Grenzfläche zwischen Dispersion und dem gasgefüllten Inneren der Schaumbläschen an. Die hydrophobisierten Partikel unterstützen die Bildung von kleinen, homogen verteilten Gasbläschen und stabilisieren die geformten Bläschen höchst effizient. Durch die Anlagerung der Partikel an den Bläschen wird die freie Energie des Systems stark reduziert. Daraus und aus dem Fakt, dass die partiell hydrophobisierten Partikel eine robuste Hülle um die Bläschen bilden und die Grenzflächen zwischen benachbarten Bläschen effektiv auf Distanz halten, wird klar, dass fachmännisch ausgeführte partikelstabilisierte Schäume die üblichen Zerfallsprozesse wie Entwässerung, also Phasenseparation Schaum - Dispersion, Porenwachstum durch Koaleszenz oder Ostwaldreifung nicht oder deutlich verlangsamt zeigen. Die erfindungsgemäßen partiell hydrophobisierten Partikel besetzen bevorzugt einen Großteil der Grenzfläche, typischerweise 50 %, besonders bevorzugt mehr als 60 % oder sogar mehr als 66 % des Flächeninhalts der Grenzfläche. Die erfindungsgemäßen partiell hydrophobisierten Partikel besetzen beispielsweise bis zu 50%, bevorzugt bis zu 70% oder sogar 80%, gegebenenfalls bis zu 95% des Flächeninhalts der Grenzfläche Die Figuren 2 und 3 zeigen schematisch die Stabilisierung einer Luftblase 4 durch partiell hydrophobisierte Partikel. In Figur 2 sind Gipspartikel 15 durch Amphiphile 14 partiell hydrophobisiert (gemäß dem oben beschriebenen Weg (i) von Schritt S3): Die Amphiphile 14 bilden eine ein-molekulare Schicht um das Gipspartikel 15, wobei der hydrophile Kopf der Amphiphile 14 zu den Gipspartikeln 15 hin gerichtet ist und der hydrophobe Schwanz von den Gipspartikeln 15 weg gerichtet ist.

In Figur 3 ist zu sehen, dass die partiell hydrophobisierten Partikel 15 an der Luft-Wasser-Grenzfläche 16 angelagert sind, die die Luftblase 4 des Schaums als Wand umhüllt, und damit den Flächeninhalt der Grenzfläche verringern. Wie oben beschrieben, wird durch die damit einhergehende Verringerung der freien Energie sowie durch die robuste Hülle der partiell hydrophobisierten Partikel 15 die Luftblase 4 effektiv stabilisiert.

In Figur 3 sind auch nicht an der Grenzfläche lagernde Gipspartikel teil-hydrophobisiert. Es können alle oder nur einige Gipspartikel teil-hydrophobisiert sein. Im letzteren Fall lagern sich die teil-hydrophobisierten Gipspartikel 15 präferentiell, aber nicht zwingend immer an der Luft-Wasser Grenzfläche an.

Der Mechanismus der Partikelstabilisierung unterscheidet sich grundlegend von einer Stabilisierung von Schaum z.B. mittels Tensiden, wie sie etwa in EP 2045227 A1 beschrieben ist. Die Tenside reduzieren die freie Energie pro Flächenbetrag der Luft-Wasser-Grenzfläche, indem sie die Oberflächenspannung der Luft-Wasser-Grenzfläche verringern. Im Gegensatz dazu wird bei der erfindungsgemäßen Stabilisierung der Flächenbetrag der energetisch ungünstigen Luft-Wasser-Grenzfläche selbst reduziert, in dem ein Teil dieser Grenzfläche durch die energetisch günstigeren Grenzflächen Luft-partiell hydrophobisierte Partikel sowie partiell hydrophobisierte Partikel-Wasser ersetzt wird (Figur 2). Ein weiterer Vorteil partiell hydrophobisierter Partikel besteht darin, dass die thermische Energie um Grössenordnungen zu gering ist, um einmal an die Grenzfläche angelagerte Partikel von derselben wieder zu entfernen. Einmal an die Grenzfläche 16 adsorbierte Partikel desorbieren daher praktisch nicht mehr. Die Partikel-Stabilisierung ist dermassen effizient, dass Entwässerung, Koaleszenz und Ostwaldreifung nahezu komplett unterbunden werden können.

Im Unterschied dazu liegt der mit der Adsorption eines grenzflächenaktiven Moleküls (Tensids) an die Luft-Wasser-Grenzfläche verbundene Energiegewinn dagegen im Bereich der thermischen Energie. Deshalb unterliegen Moleküle wie Tenside an der Grenzfläche einem Adsorptions- Desorptionsgleichgewicht. Durch diese Dynamik im System schreiten die thermodynamisch begünstigten Zerfallsprozesse eines Schaums stetig voran.

Diese Unterschiede haben weitreichende Konsequenzen für die Stabilität des Schaums und für daraus gefertigte Bauteile, denn die Eigenschaften poröser Materialien werden massgeblich durch ihre Mikrostruktur bestimmt.

Nassschäume sind von Natur aus instabil, das heisst, sie sind ab dem Zeitpunkt ihrer Ausbildung fortschreitenden Zerfallsprozessen unterworfen. Damit, Qualität, Funktionalität und Produktsicherheit von porösen Brandschutzkörpern im Brandfall sichergestellt werden können, war es bisher - ohne Kontrolle der Mikrostruktur im gesamten Bauteilvolumen und über die Dauer des ganzen Herstellungsprozesses - problematisch, Brandschutzkörper, insbesondere solche mit einer grösseren Ausdehnung, aus hochporösem Gips herzustellen. Das erfindungsgemässe Verfahren stellt dagegen durch die Verwendung von anorganischen Schaumstabilisatoren eine solche exzellente Kontrolle der Mikrostruktur sicher. Dadurch wird es ermöglicht, dass ein mit der vorgegebenen Dichte und Porengrösse hergestellter Nassschaum zuverlässig bis zur Verfestigung stabil bleibt und keinen kritischen Grad an Entwässerung, also Phasenseparation Schaum - Dispersion, oder an Porenwachstum durch Koaleszenz oder Ostwaldreifung zeigt. Wie oben erwähnt, sind partikel-stabilisierte Nassschäume insbesondere sehr viel stabiler als etwa durch grenzflächenaktive Substanzen wie Tenside stabilisierte Schäume. Es erweist sich, dass partikel-stabilisierte Nassschäume über mehrere Tage hinweg ihre bei der Herstellung eingestellte Mikrostruktur erhalten. Damit ist gewährleistet, dass sich die bei der Schaumbildung eingestellte Mikrostruktur über die Zeitdauer der nachgeschalteten Prozessschritte bis zur Fertigstellung des porösen Formbauteils nicht mehr erheblich ändert. Die Eigenschaften des Schaums und der sich daraus bildenden Poren ist auch über den gesamten Körper hinweg uniform, also im Wesentlichen Gradienten-frei. Infolge dieser hohen Stabilität, Reproduzierbarkeit und Uniformität des Schaums und der daraus resultierenden Mikrostruktur führt der Einsatz der Partikel-Stabilisation zu außerordentlich sicheren porösen Brandschutzmaterialien.

Hierin werden nasse Schäume, die durch die Anlagerung von Partikeln an der Luft-Wasser Grenzfläche stabilisiert sind, auch partikel-stabilisierte Schäume genannt (im Gegensatz zu auf andere Weise, z.B. durch Tenside, stabilisierten Schäume). In anderem Zusammenhang sind weitere Details zu partikel-stabilisierten Schäumen in der WO 2007/068127 A1 beschrieben, deren Inhalt durch Bezugnahme hierin einbezogen wird. Im Ergebnis stabilisieren die partiell hydrophobisierten Partikel den Schaum und ermöglichen reproduzierbar homogen verteilte Gasbläschen im Schaum.

In Schritt S6 wird der Feuerwiderstandskörper schließlich abgebunden. Dieser Schritt unterscheidet sich von dem üblichen Abbinden von Gips lediglich darin, dass der Schaum, wie zu Schritt S5 geschildert, in besonders hohem Maße stabil bleibt. Bei dem Abbinden werden die Gipspartikel zunehmend hydratisiert. Dabei kann zwar zumindest im Fall von Weg (i) ein Teil der schaumstabilisierenden Wirkung graduell verloren gehen. Dies geschieht aber erst, nachdem sich der Feuerwiderstandskörper schon ausreichend verfestigt hat, so dass die Luftbläschen erhalten bleiben. Zusätzlich, und ohne auf diese Theorie beschränkt zu sein, können die Partikel an der Grenzfläche spät hydratisiert werden, da sie nur teilweise benetzt sind. Bei der späten Hydratisierung gilt umso mehr, dass sich der übrige Feuerwiderstandskörper schon ausreichend verfestigt hat. Insgesamt konnte festgestellt werden, dass aus den Luftbläschen zuverlässig Makroporen des Feuerwiderstandskörpers mit genau einstellbaren Eigenschaften und einer homogenen Verteilung hervorgehen.

Insbesondere sind die Makroporen aufgrund der sehr hohen Schaumstabilität geschlossen (siehe Schritt S5).

In Schritt S7 wird der Feuerwiderstandskörper auf beliebige Weise getrocknet. Nach dem Abschluss des Trocknens ist der Feuerwiderstandskörper fertig, und das gipsbasierte Material des Feuerwiderstandskörpers ist vorzugsweise ein Kalziumsulfat-Dihydrat.

Im Folgenden werden weitere optionale Aspekte bzw. weitere Schritte des Verfahrens erläutert.

Gemäß einem Aspekt umfasst das Verfahren zusätzlich das Zugeben weiterer Additive (z.B. in irgendeinem der Schritte S1-S3). Additive können somit von Anfang an in der Zusammensetzung enthalten sein oder später dazugemischt werden.

Gemäß einem Aspekt wird die Größe der Makroporen durch Wahl des Mischungsverhältnisses der hierin genannten Komponenten, optional weiterer Additive, sowie der Bedingungen beim Bilden des Nassschaums beeinflusst. Mengen des Hydrophobisierungs-Additivs, die von der Idealkonzentration abweichen, führen dabei zu größerem Durchmesser der Makroporen. Zudem kann der Durchmesser der Poren verkleinert werden, wenn Formulierungen höherer Viskosität verschäumt werden. Auf diese Weise ist ein Mediandurchmesser der Makroporen zwischen 0,1 mm und 5 mm kontrolliert einstellbar. Die Porosität und damit die Dichte des Materials werden über die Konzentration an Schäumungsmittel definiert.

Gemäß einem Aspekt wird in einem weiteren Schritt die Gips-Wasser-Dispersion in eine gewünschte Hohlform (Gussform) mit den gewünschten Endmassen des zu erhaltenden Feuerwiderstandskörpers bzw. eines Bereichs desselben gegossen (wobei Schrumpfungs- oder Expansionsprozesse berücksichtigt werden können, falls erforderlich). Dies kann vor oder nach dem Aufschäumen erfolgen. Der Gipsschaum wird dann in Schritt S6 in der Hohlform ausgehärtet und getrocknet. Der resultierende Feuerwiderstandskörper kann sodann optional entformt und weiter getrocknet werden.

Gemäß einem bevorzugten Aspekt wird die Zusammensetzung vor, während oder nach dem Aufschäumen in die Hohlform gegeben. Der Schaum ist so stabil, dass dies nicht zu einer zu signifikanten Beeinträchtigung der Homogenität der Makroporen führt. Optional kann ein weiterer Aufschäumvorgang in der Gussform vorgenommen werden, z.B. durch Einbringen weiteren Gases. Optional kann die Gussform vor dem Aushärten der Zusammensetzung gerüttelt werden.

Weitere Details zu dem Verfahren sind weiter unten beschrieben. Auch wenn die weiteren Details als Eigenschaften des mit dem hier beschriebenen Verfahren erhaltenen Feuerwiderstandskörpers beschrieben sind, sind aus dieser Beschreibung auch die entsprechenden Verfahrensschritte ableitbar. Beispielsweise sind weitere Details zum amphiphilen Hydrophobisierungs-Additiv und zu den optionalen weiteren Additiven in Abschnitt IV.b beschrieben, und es ist klar, dass diese Additive in dem Schritt S3 eingesetzt werden können.

Im Folgenden werden drei Ausführungsbeispiele für die Herstellung eines Feuerwiderstandskörpers gemäß Weg (i) beschrieben.

Ausführungsbeispiel 1:

Für die Herstellung eines Feuerwiderstandskörpers gemäß einem ersten Ausführungsbeispiel wurden folgende Ausgangsmaterialien verwendet, wobei sich die Gewichtsprozente auf das Gesamtgewicht der Ausgangsmaterialien einschliesslich des Wassers beziehen:

54,748 Gew.-% Gips;

44,510 Gew.-% Wasser;

0,2227 Gew.-% Heptylamin als Hydrophobisierungs-Additiv gemäß Schritt S3, Weg (i);

0,010 Gew.-% Zitronensäure, 0,0360 Gew.-% Braunstein als weitere Additive; und

0,469 Gew.-% Wasserstoffperoxid (50 %-Lösung) als Aufschäummittel.

Mit diesen Ausgangsmaterialien wurde ein Feuerwiderstandskörper gemäß den oben beschriebenen Schritten S1 bis S6 hergestellt. Im Einzelnen wurde das Wasser vorgelegt und gerührt. Zitronensäure, Braunstein und Heptylamin wurden dazugegeben und gemischt. Danach wurde die Wasserphase zum Gips zugegeben und die resultierende Wasser-Gips-Dispersion gerührt und homogenisiert. Anschliessend wurde das Wasserstoffperoxid dazugegeben und mit der Dispersion vermengt. Das Gemisch wurde in eine Hohlform (Gussform) abgegossen und darin aufgeschäumt. Sobald der Feuerwiderstandskörper ausreichend abgebunden hat, wurde er entformt und getrocknet. Typischerweise dauert die Abbindereaktion zwischen 15 min und 30 min.

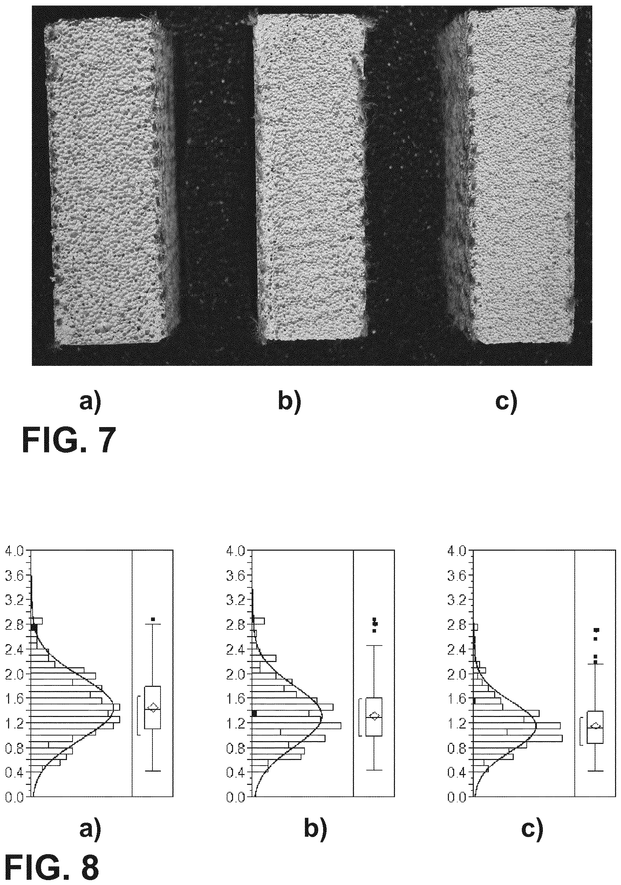

Der resultierende Feuerwiderstandskörper gemäß Ausführungsbeispiel 1 verfügt über eine Dichte von 317 kg/m$^3$. Der Median der Porengrössenverteilung der Makroporen beträgt 1.42 mm bei einem 10% Quantil von 0.79 mm und einem 90% Quantil von 2.08 mm. Im Beispiel wurde ein Feuerwiderstandskörper mit Abmessungen 500x500x64 mm hergestellt, wobei auch beliebige andere Abmessungen möglich sind. Der resultierende Feuerwiderstandskörper ist in Figur 7a dargestellt, und seine Mikrostruktur (Eigenschaften der Mikroporen) ist in Abschnitt V a. beschrieben.

Der Feuerwiderstandskörper wurde in einen Hohlkörper aus Stahlblech etwa gleichen Ausmasses (500x500x64 mm) eingesetzt, um ein Brandschutzbauteil zu erhalten. Dieses Brandschutzbauteil wurde sodann einer Brandprüfung nach DIN 4102 und DIN EN 1634-1 unterzogen. Es wurde bestätigt, dass das Brandschutzbauteil die Bedingungen erfüllt, die für die Feuerwiderstandsklasse T90 nach DIN 4102 Teil 5 gefordert werden.

Ausführungsbeispiel 2:

Für die Herstellung eines Feuerwiderstandskörpers gemäß einem zweiten Ausführungsbeispiel wurden folgende Ausgangsmaterialien verwendet, wobei sich die Gewichtsprozente auf das Gesamtgewicht der Ausgangsmaterialien einschliesslich des Wassers beziehen:

54,775 Gew.-% Gips;

44,685 Gew.-% Wasser;

0,227 Gew.-% Heptylamin als Hydrophobisierungs-Additiv gemäß Schritt S3, Weg (i);

0,010 Gew.-% Zitronensäure und 0,0220 Gew.-% Braunstein als weitere Additive; und

0,281 Gew.-% Wasserstoffperoxid (50 %- Lösung) als Aufschäummittel.

Der Herstellungsprozess ist analog mit demjenigen aus dem ersten Ausführungsbeispiel. Der resultierende Feuerwiderstandskörper verfügt über eine Dichte von 394 kg/m$^3$. Der Median der Porengrössenverteilung der Makroporen beträgt 1.29 mm bei einem 10%-Quantil von 0.74 mm und einem 90% Quantil von 1.92 mm. Der resultierende Feuerwiderstandskörper ist in Figur 7b dargestellt, und seine Mikrostruktur (Eigenschaften der Mikroporen) ist in Abschnitt V a. beschrieben.

Für einen erfindungsgemässen Feuerwiderstandskörper mit vergleichsweise höherer Dichte, wie er in dem Ausführungsbeispiel 2 dargelegt wird, können Feuerwiderstandsklassen bis zu T120 nach DIN 4102 Teil 5 erreicht werden.

Ausführungsbeispiel 3:

Für die Herstellung eines Feuerwiderstandskörpers gemäß einem dritten Ausführungsbeispiel wurden folgende Ausgangsmaterialien verwendet, wobei sich die Gewichtsprozente auf das Gesamtgewicht der Ausgangsmaterialien einschliesslich des Wassers beziehen:

54,788 Gew.-% Gips;

44,773 Gew.-% Wasser;

0,227 Gew.-% Heptylamin als Hydrophobisierungs-Additiv gemäß Schritt S3, Weg (i);

0,010 Gew.-% Zitronensäure, 0,0140 Gew.-% Braunstein als weitere Additive; und

0,188 Gew.-% Wasserstoffperoxid (50 %- Lösung) als Aufschäummittel.

Der Herstellungsprozess ist analog zu demjenigen aus Ausführungsbeispiel 1. Der resultierende Feuerwiderstandskörper verfügt über eine Dichte von 517 kg/m$^3$. Der Median der Porengrössenverteilung der Makroporen beträgt 1.11 mm bei einem 10% Quantil von 0.71 mm und einem 90% Quantil von 1.67 mm. Der resultierende Feuerwiderstandskörper ist in Figur 7c dargestellt, und seine Mikrostruktur (Eigenschaften der Mikroporen) ist in Abschnitt V a. beschrieben.

Für einen erfindungsgemässen Feuerwiderstandskörper mit vergleichsweise höherer Dichte, wie er im in dem Ausführungsbeispiel 2 dargelegt wird, können Feuerwiderstandsklassen bis zu T120 nach DIN 4102 Teil 5 erreicht werden.

Bei diesen Ausführungsbeispielen sind die Feuerwiderstandsklassen T für Feuerschutzabschlüsse beispielhaft genannt; analoge Tests können alternativ durch die in DIN 4102 definierten Klassen F, G, L, E, I, K, R, S oder W ersetzt werden.

Die drei Ausführungsbeispiele zeigen, dass die Mikrostruktur durch geeignete Wahl der Zusammensetzung auf einfache Weise beeinflusst werden kann. Insbesondere kann die Dichte des Feuerwiderstandskörpers und der mittlere Porendurchmesser der Makroporen auf einfache und leicht zu ermittelnde Weise auf einen gewünschten Wert eingestellt werden, wie die obigen Ausführungsbeispiele zeigen.

Schließlich sollen im Folgenden verschiedene Aspekte des Verfahrens zur Herstellung des Feuerwiderstandskörpers erläutert werden. Zunächst wird ein Verfahren erläutert, welches dem oben beschriebenen Weg (i) entspricht. Dieses Verfahren umfasst:

- Bereitstellen einer schäumbaren Zusammensetzung, welche umfasst: eine Wasser-Gips-Dispersion, ein Hydrophobisierungs-Additiv, welches Partikel von im Wasser dispergierten Gipspartikeln der Wasser-Gips-Dispersion zumindest teilweise hydrophobisiert, optional weitere Additive; dies entspricht etwa den oben beschriebenen Schritten S1-S3, Weg (i);

- Bilden eines Nassschaums durch Aufschäumen der Zusammensetzung, wobei Luftbläschen des Nassschaums durch die zumindest teilweise hydrophobisierten Partikel des Bindemittels stabilisiert werden, indem die Partikel sich an den Wasser-Luft-Grenzflächen anlagern, welche die Wände der Luftbläschen bilden; dies entspricht etwa den oben beschriebenen Schritten S4-S5; und

- Abbinden des Nassschaums, wobei der Nassschaum zu dem Feuerwiderstandskörper aushärtet, und wobei die stabilisierten Luftbläschen Makroporen des Feuerwiderstandskörpers bilden, und anschliessendes Trocknen des Feuerwiderstandskörpers; dies entspricht etwa den oben beschriebenen Schritten S6-S7.

Gemäß einem weiteren Aspekt wird ein Verfahren zur Herstellung eines Feuerwiderstandskörpers zur Verfügung gestellt, welches umfasst:

- Bereitstellen einer schäumbaren Zusammensetzung, welche umfasst: eine Wasser-Gips-Dispersion, zumindest teilweise hydrophobisierte Partikel, optional weitere Additive; dies entspricht etwa den oben beschriebenen Schritten S1-S3;

- Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden; dies entspricht etwa den oben beschriebenen Schritten S4-S5; und

- Abbinden des Nassschaums, wobei der Nassschaum zu dem Feuerfestkörper aushärtet, und wobei die stabilisierten Luftbläschen Makroporen des Feuerfestkörpers bilden, und anschliessendes Trocknen des Feuerfestkörpers; dies entspricht etwa den oben beschriebenen Schritten S6-S7.

In der Verarbeitung von Gips zu porösen Feuerwiderstandskörpern spielt die Stabilität des Nassschaums eine besonders wichtige Rolle für die Qualität und die Produktsicherheit. Nur bei sehr hoher Nassschaumstabilität kann gewährleistet werden, dass schwankende Taktzeiten, wie sie in der Produktion vorkommen können, nicht zu ungewollt veränderten Dimensionen des Nassbauteils, der Mikrostruktur oder gar zur Ausbildung von Hohlräumen oder Lunkern führen.

Das folgende Beispiel soll die herausragende Nassschaumstabilität verdeutlichen, die dem erfindungsgemässen Verfahren eigen ist.

Ein erfindungsgemässer Nassschaum auf Basis handelsüblichen β-Gipses wird in einen mit Polypropylenfolie ausgekleideten Polymethylmethacrylat-Zylinder von 70 mm Durchmesser zu einer Höhe von 177 mm so aufgeschäumt, dass die Nassdichte 210 kg/m3 beträgt. Der Formulierung wurde so viel Zitronensäuremonohydrat zugesetzt, dass die Abbindezeit des Gipses auf über 11 Stunden verzögert werden konnte. Die Nassschaumprobe wird allseitig abgedeckt, um ein Austrocknen des Schaums zu verhindern. Das Schaumvolumen wird über eine Zeitspanne von 11 Stunden beobachtet und es wird festgestellt, dass sich die Höhe des Schaumzylinders während dieser Zeit um nicht mehr als 2.8% verringert.

Nach dem Abbinden wird der Schaum getrocknet und der Länge nach aufgeschnitten. Die Mikrostruktur des Schaums zeigt keine Gradienten. Ein Wachstum der Makroporen kann im Vergleich zu einer nach üblichen Taktzeiten hergestellten Referenzprobe nicht festgestellt werden.

Der erfindungsgemässe Nassschaum im Zustand vor der Abbindereaktion und daher noch fliessfähig zeichnet sich dadurch aus, dass er, in einem Zylinder von 70 mm Durchmesser und einer Höhe von 177 mm über eine Zeitspanne von 11 Stunden nicht mehr als 10, bevorzugt nicht mehr als 5, besonders bevorzugt nicht mehr als 3 und idealerweise nicht mehr als 2% seiner Höhe verliert. Die Schaummikrostruktur bleibt über die 11 Stunden erhalten und zeigt keine wesentlichen Unterschiede verglichen mit nach üblichen Taktzeiten hergestelltem Material.

### IV. Zusammensetzung

Im Folgenden werden weitere bevorzugte Aspekte geschildert, die sich auf Aspekte der Zusammensetzung beziehen. Hierin sind alle %-Angaben, soweit nicht anders angegeben, Gewichts-%. Dabei sind die Angaben, soweit nicht anders bezeichnet, auf das Trockengewicht des fertigen Feuerwiderstandskörpers inklusive Kristallwasser bezogen.

Eine Ausnahme davon sind die Zahlen bezüglich Mindestmengen anorganischen Materials und Maximalmenge organischen Materials; diese beziehen sich auf das hydratisierte Trockenprodukt. In übrigen Fällen beziehen sich die Angaben zu den Ausgangsmaterialien auf den unhydratisierten Gips.

Die Zusammensetzung bezieht sich auf den fertigen Feuerwiderstandskörper. Da die Menge an enthaltenem Kristallwasser einfach zum Beispiel über Thermogravimetrie zu ermitteln ist, können die Angaben aber auch für das Herstellungsverfahren desselben herangezogen werden.

a. Gips

Der Feuerwiderstandskörper umfasst ein poröses Material auf Gipsbasis. Hierbei wird unter Gips das Mineral $CaSO_4$, im fertigen Feuerwiderstandskörper generell als Dihydrat, verstanden.

Der Feuerwiderstandskörper kann zusätzlich zum Gips auch weitere Stoffe enthalten, z.B. weitere anorganische Materialien, etwa Minerale wie Quarz, Anhydrit, Aluminiumoxid, Aluminiumhydroxid, Magnesiumhydroxid, unexpandierte Perlite oder Vermiculite oder Ton. Auch kann der Feuerwiderstandskörper weitere Additive enthalten. Einige dieser zusätzlichen Stoffe sind weiter unten beschrieben.

Dass der Feuerwiderstandskörper auf Gipsbasis hergestellt ist, bedeutet, dass der Feuerwiderstandskörper bevorzugt mindestens 50% Gips enthält. Gemäß einem bevorzugten Aspekt ist der Gipsanteil mindestens 85%, wie etwa mindestens 90%, vorzugsweise mindestens 95%, besonders vorzugsweise mindestens 98% oder sogar mindestens 99%.

Gemäß einem bevorzugten Aspekt ist der Feuerwiderstandskörper zementfrei, da somit eine kurze Abbindezeit ermöglicht ist. Alternativ kann der Feuerwiderstandskörper bis zu 10% Zement enthalten, z.B. 0.5% - 10% Zement. Der Zement kann in letzterem Fall beispielsweise Kalziumsilikat, Kalziumaluminat, Geopolymere wie zum Beispiel Flugasche, Natriumsilikat, Kaliumsilikat oder Lithiumsilikat enthalten.

In einer besonderen Ausführungsform umfasst der Feuerwiderstandskörper einen Anteil an anorganischem Material von mindestens 90%, bevorzugt von mindestens 96%, und besonders bevorzugt von mindestens 99% oder sogar 99.5 %.

Beim Herstellungsverfahren werden unhydrierter Gips oder Halbhydrate typischerweise als Pulver zugegeben. Unter Gipspulver wird hierbei eine Menge von Gipspartikeln verstanden, die bevorzugt einen Mediandurchmesser von 0.2-45 $\mu$m aufweisen.

b. Additiv I (Hydrophobisierungs-Additiv):

Das Hydrophobisierungs-Additiv kann ein Amin, besonders bevorzugt Heptylamin sein. Zweck des Hydrophobisierungs-Additivs ist es, die Gipspartikel zumindest partiell zu hydrophobisieren, damit diese sodann den Schaum stabilisieren, wie oben in Bezug auf Figur 2 beschrieben.

Bei dem Heptylamin ist die Amin-Kopfgruppe um pH 7 positiv geladen, so dass sie sich an der bei gleichem pH negativ geladenen Oberfläche der Gipspartikel anzulagern und Wasser von dort zu verdrängen vermag, wie in Figur 2 dargestellt ist (Bezugszeichen 14 und 15). Die Heptyl-Schwanzgruppe ist hydrophob und führt dazu, dass sich um die Gipspartikel eine partiell hydrophobe Schicht aus Kohlenwasserstoffketten bildet.

Die Schwanzgruppe des Heptylamins ist kurz. Dies hat den Vorteil, dass Knäuelbildung des Additivs, wie sie bei anderen Amphiphilen oft auftritt, nicht begünstigt wird. Derartige Knäuelbildung der amphiphilen Moleküle, etwa aneinandergebundene Paare oder Mizellen in Wasser, tragen nicht zur Hydrophobisierung bei und sind daher unerwünscht.

Statt des Heptylamins kann auch ein anderes Amphiphil als Hydrophobisierungs-Additiv verwendet werden. Umgekehrt bewirkt jedoch nicht jedes Amphiphil eine Hydrophobisierung der Gipspartikel und ist daher nicht immer als ein Hydrophobisierungs-Additiv anzusehen, wie im Folgenden deutlich wird. Im Folgenden werden die Bedingungen für eine solche Hydrophobisierung und weitere mögliche allgemeine Aspekte zu dem Hydrophobisierungs-Additiv erläutert.

Das Hydrophobisierungs-Additiv ist ein Amphiphil. Das Amphiphil weist eine hydrophile (polare) Kopfgruppe und eine hydrophobe (im Wesentlichen unpolare) Schwanzgruppe auf bzw. besteht aus diesen.

Die hydrophile Kopfgruppe kann eine positive oder negative Ladung aufweisen (wobei Ladung auch eine Teilladung umfasst, etwa eine bestimmte Elektronegativität der Kopfgruppe). Bevorzugt ist die Kopfgruppe sogar ionisiert.

Bevorzugt ist die Ladung der Kopfgruppe konträr zur Ladung auf der Partikeloberfläche und in Abhängigkeit des pH-Werts der Dispersion gewählt. Wie bereits oben erläutert, wirkt nicht jedes Amphiphil hydrophobisierend auf die Gipspartikel. Hierzu ist eine ausreichend starke Ladung der Kopfgruppe erforderlich, so dass die Kopfgruppe das Wasser von den im Wasser dispergierten Gipspartikeln erfolgreich verdrängen kann. Nur dann lagert sich das Hydrophobisierungs-Additiv mit der Kopfgruppe an den Gipspartikeln an und kann diese mittels der Schwanzgruppe hydrophobisieren. Die folgenden Überlegungen stellen sicher, dass die Ladung der Kopfgruppe ausreichend stark ist, um diese Bedingung zu erfüllen.

Gemäß einem bevorzugten Aspekt liegt für elektrostatisch adsorbierende Amphiphile bei dem Verarbeitungs-pH der Dispersion mindestens die Hälfte der Kopfgruppen geladen vor. Dies stellt eine effektive Hydrophobisierung sicher. Bei pH 6-8 ist die Hydrophobisierung der Gipspartikel besonders effektiv, wenn die Kopfgruppe positiv geladen (protoniert) ist.

Der negative Logarithmus der Säurekonstante, pKs, des Hydrophobisierungs-Additivs in protonierter Form, ist vorzugsweise größer als 10. Damit ist gewährleistet, dass beim Verarbeitungs-pH (6-8) mehr als die Hälfte der Amine protoniert ist.

Gemäß einem bevorzugten Aspekt ist der negative Zehnerlogarithmus der Säurekonstanten, pKs, von Säuren oder der pKs der konjugierten Säuren von verwendeten Basen gleich oder grösser dem Verarbeitungs-pH. Dies erlaubt es, dass mindestens 50% der Kopfgruppen deprotoniert (Säuren) oder protoniert (Basen) sind.

Gemäß einem bevorzugten Aspekt umfasst die Kopfgruppe mindestens ein Element ausgewählt aus der Menge bestehend aus Carboxygruppe, Gallatgruppe, Amingruppe, Sulfatgruppe, Phosphatgruppe, Alkoholgruppe, und Pyrrolgruppe.

Die Schwanzgruppe des Hydrophobisierungs-Additivs ist hydrophob. Bevorzugt umfasst die Schwanzgruppe eine Kette von C-Atomen, insbesondere kann die Schwanzgruppe eine Kohlenwasserstoffkette sein. Zusätzlich kann die Schwanzgruppe optional eine Esterverbindung aufweisen, über die sie an die Kopfgruppe gekoppelt ist.

Gemäß einem bevorzugten Aspekt ist die Schwanzgruppe kurzkettig mit einer Länge von weniger als 12 Atomen (z.B. C-Atomen). Die Schwanzgruppe hat Länge von 4-8 C-Atomen bzw. $CH_2$-Gruppen, optional zuzüglich einer Esterverbindung. Gemäß einem besonders bevorzugten Aspekt hat die Schwanzgruppe eine Länge von 4-7 C-Atomen bzw. $CH_2$-Gruppen, optional zuzüglich einer Esterverbindung. Eine solche kurzkettige Schwanzgruppe reduziert die Tendenz zur Bildung von aneinandergebundenen Paaren von Amphiphilen oder von Mizellen. Solche Paare oder Mizellen tragen nicht zur Hydrophobisierung der Gipspartikel bei und sind daher unerwünscht. Bei Molekülen mit einer längeren Schwanzgruppe, wie sie etwa bei Tensiden üblich ist, wäre insbesondere die Bildung von Mizellen bevorzugt, und langkettige Tenside haben daher zu geringe oder keine hydrophobisierende Wirkung. Gemäß einem Aspekt ist daher die kritische Mizellenkonzentration der verwendeten Amphiphile typischerweise grösser 10, bevorzugt größer 100 μmol/L. Gemäß einem weiteren Aspekt ist die Löslichkeit der Amphiphile in Wasser grösser 1 μmol/L.

Gemäß einem bevorzugten Aspekt hat das amphiphile Additiv eine molekulare Masse zwischen 45 g/mol und 282 g/mol. Erfindungsgemäße amphiphile Additive weisen eine molekulare Masse von weniger als 300 g/mol, vorzugsweise von weniger als 200 g/mol, besonders bevorzugt von weniger als 150g/mol oder weniger als 120g/mol auf.

Bevorzugt weist die Schwanzkette keine Verzweigungen von mehr als 3 Atomen Länge auf, besonders bevorzugt sogar keine Verzweigung von mehr als 1 Atom Länge, und ganz besonders bevorzugt überhaupt keine Verzweigung. Bei diesen Betrachtungen sind H-Atome nicht zu berücksichtigen, so dass etwa eine Verzweigung mit einer $CH_3$-Gruppe als Verzweigung von 1 Atom Länge anzusehen ist). Insgesamt hat das amphiphile Hydrophobisierungs-Additiv bevorzugt genau eine Kohlenwasserstoffkette, wobei die Kohlenwasserstoffkette bevorzugt unverzweigt ist.

Gemäß einem bevorzugten Aspekt ist die Schwanzgruppe ausgewählt aus der Gruppe bestehend aus Alkylgruppe, nicht-aromatischer Kohlenwasserstoffring wie beispielsweise Alicyclische Gruppe, Aromatische Gruppe. Bevorzugt ist die Schwanzgruppe eine Alkylgruppe, besonders bevorzugt ausgewählt aus der Gruppe bestehend aus Butyl, Pentyl, Hexyl, Heptyl oder Octyl, optional zuzüglich einer Esterverbindung.

Gemäß einem bevorzugten Aspekt sind die amphiphilen Hydrophobisierungs-Moleküle in der Lage, die Oberflächenspannung einer Luft-Wasser-Grenzfläche auf weniger oder gleich 65 mN / m zu reduzieren, bei Konzentrationen von weniger oder gleich 0,5 mol / l.

Gemäß einem bevorzugten Aspekt haben die amphiphilen Hydrophobisierungs-Moleküle eine Löslichkeit SOL in der Wasser-Gips-Dispersion, wobei die Löslichkeit SOL durch die folgende Gleichung gegeben ist:

$$\text{SOL [mol / l]} \geq m * (\varphi / (1 - \varphi)) * \rho_p * SA,$$

wobei m= 4*10-8 [mol/m2]; $\varphi$ = Feststoffkonzentration in der Suspension (d.h. Volumen des Gipspulvers geteilt durch Gesamtvolumen der Suspension); $\rho_p$: Dichte des Gipspulvers [g/l] einschließlich jeglicher weiterer in der Wasser-Gips-Dispersion enthaltener Additive; SA: spezifische Oberfläche des Gipspulvers.

Gemäß einem bevorzugten Aspekt ist die Konzentration der amphiphilen Hydrophobisierungs-Moleküle so gewählt, dass sie nicht mehr als das eineinhalbfache der CMC-Konzentration beträgt, wobei die CMC-Konzentration die für die Mizellenbildung kritische Konzentration ist.

Ein Charakteristikum der Amphiphile ist zudem, dass sie unter Verwendung einer beliebigen Schäumungsmethode nicht zur Bildung eines stabilen Schaumes in Wasser alleine führen, wenn sie in diesem Wasser in derselben Konzentration vorliegen, wie sie in einer erfindungsgemässen Suspensionsformulierung verwendet werden würden.

Gemäß einem Aspekt beträgt die Menge der zugesetzten amphiphilen Hydrophobisierungs-Moleküle, bezogen auf das Gewicht des trockenen Feuerwiderstandskörpers, 0.05 - 0.99% (w/w), insbesondere 0.1 - 0.5% (w/w), besonders bevorzugt 0.14 - 0.35% (w/w).

Die hierin geschilderten Aspekte können sich sowohl auf die in Sektion III geschilderten Verfahren (Weg (i)) verwendeten Additive als auch auf die im fertigen Feuerwiderstandskörper enthaltenen Additive beziehen. In dem Feuerwiderstandskörper ist das amphiphile Additiv, mittels dessen die Gipspartikel teilweise hydrophobisiert worden sind, noch enthalten, auch wenn die hydrophobisierten Gipspartikel hydratisiert worden sind.

Gemäß einem Aspekt umfasst der Feuerwiderstandskörper ein poröses Material auf Gipsbasis mit einem darin enthaltenen amphiphilen Additiv, wobei das amphiphile Additiv aus einer Kopfgruppe als hydrophilem Ende und einer Kohlenwasserstoffkette als hydrophobem Ende besteht, und wobei das hydrophobe Ende eine molekulare Masse von weniger als 300 g/mol hat.

c. Additiv II:

Gemäß dem oben beschriebenen Weg (ii) können partiell hydrophobisierte Partikel zu der Gips-Wasser-Dispersion zugegeben werden. Diese partiell hydrophobisierten Partikel stabilisieren bei der Herstellung den Schaum, wie oben in Bezug auf Figur 3 beschrieben. Diese partiell hydrophobisierten Partikel sind während des Verfahrens oder in einem zuvor erfolgten Schritt hydrophobisiert worden, um eine passende partielle Hydrophobizität zu erreichen. Die Partikel haben somit typischerweise einen relativ hydrophileren Kern, welcher mittels zusätzlicher Schritte, etwa mittels Zugabe eines Additivs, eigens partiell hydrophobisiert wurde. Typischerweise hat somit eine Schale der (partiell) hydrophobisierten Partikel eine höhere Hydrophobizität als der Kern der Partikel. Durch die eigens erfolgte Hydrophobisierung kann die Hydrophobizität der Partikel genau an die jeweiligen Bedürfnisse angepasst werden.

Im Folgenden werden weitere mögliche Details zu den hydrophobisierten Partikeln erläutert.

Gemäß einem Aspekt sind die partiell hydrophobisierten Partikel zuvor hydrophobisierte Partikel. Die (partiell) hydrophobisierten Partikel können von Gips verschiedene Partikel oder hydrophobisiertes Gipspulver sein. Im letzten Fall können die hydrophobisierten Partikel Gipspulver von Schritt S1 und S2 sein, wobei das Gipspulver bereits zuvor partiell hydrophobisiert wurde (siehe etwa Beschreibung von Weg (i)), oder es kann ein zusätzlich zugegebenes Gipspulver sein.

Gemäß einem bevorzugten Aspekt beträgt die Konzentration der partiell hydrophobisierten Partikel 0.1 bis 20 %, bevorzugt 0.5 bis 15 %, besonders bevorzugt 1 - 10 %.

Gemäß einem bevorzugten Aspekt beträgt der Mediandurchmesser der partiell hydrophobisierten Partikel 0.02 - 20 $\mu$m, bevorzugt 0.03 - 10 $\mu$m, besonders bevorzugt 0.05 - 5 $\mu$m. Vorzugsweise haben die partiell hydrophobisierten Partikel im Mittel ein Seitenverhältnis (Verhältnis von längstem zu kürzestem Durchmesser) von weniger als 5, bevorzugt weniger als 3, besonders bevorzugt weniger als 2.

Gemäß einem bevorzugten Aspekt sind die partiell hydrophobisierten Partikel chemisch mit Gips verträglich, d.h. sie reagieren nicht chemisch mit dem Gips. Gemäß einem bevorzugten Aspekt ist die Konzentration der partiell hydrophobisierten Partikel an den Wänden der Makroporen erhöht, bevorzugt mindestens 5%, bevorzugt mindestens um 20%, besonders bevorzugt sogar mindestens um 50% höher als die durchschnittliche Konzentration im Material des Feuerwiderstandskörpers.

Gemäß einem bevorzugten Aspekt haben die partiell hydrophobisierten Partikel eine Hydrophobizität, die durch einen Kontaktwinkel von 55 - 85° mit dem wasserhaltigen Lösungsmittel bzw. mit dem Wasser zum Zeitpunkt der Schaumbildung gekennzeichnet ist.

Gemäß einem bevorzugten Aspekt umfassen die partiell hydrophobisierten Partikel beispielsweise zumindest eins aus der Gruppe ausgewählt aus Aluminiumoxid, Aluminiumhydroxid, Siliziumdioxid, Kalziumaluminat, Kalziumsilikat, Kalziumhydroxid, Kalziumkarbonat, Kalziumsulfat, Magnesiumoxid, Magnesiumkarbonat, Magnesiumhydroxid, Kaolin, Ton, Schamotte, Titandioxid, Zirkondioxid, Zirkonsilikat.

Gemäß einem Aspekt ist das Partikel mittels irgendeinem oder irgendeiner Kombination der in Abschnitt IV.b beschriebenen Additive partiell hydrophobisiert.

Die hierin geschilderten Aspekte können sich sowohl auf die in Sektion III geschilderten Verfahren (Weg (ii), (iii)) verwendeten Additive als auch auf die im fertigen Feuerwiderstandskörper enthaltenen Additive beziehen. In dem Feuerwiderstandskörper ist das amphiphile Additiv, mittels dessen die Gipspartikel teilweise hydrophobisiert worden sind, noch enthalten, auch wenn die hydrophobisierten Gipspartikel hydratisiert worden sind.

Gemäß einem Aspekt umfasst der Feuerwiderstandskörper ein poröses Material auf Gipsbasis mit darin enthalten einem Partikelmaterial partiell hydrphobisierten Partikel wie hierin beschrieben. Das Partikelmaterial kann im fertigen Produkt aufgelöst oder unaufgelöst, d.h. als ganzes partiell hydrophobes Partikel, enthalten sein. Somit wird gemäß einem Aspekt ein Feuerwiderstandskörper zur Verfügung gestellt, welcher ein poröses Material auf Gipsbasis umfasst, wobei das poröse Material geschäumt ist, und wobei Poren des porösen Materials an ihren Innenwänden zumindest partiell hydrophobe Partikel und/oder Partikelmaterial derselben aufweisen.

d. Schäumungsmittel

In einem bevorzugten Aspekt ist der Feuerwiderstandskörper geschäumt. Das bedeutet, dass die Makroporen durch einen Schäumungsprozess gebildet sind. Der Feuerwiderstandskörper kann chemisch durch Zugabe eines Schäumungsmittels und/oder mechanisch etwa durch Aufschlagen oder durch Einarbeiten eines chemisch inerten Gases geschäumt sein. Weiter kann der Feuerwiderstandskörper durch in geeigneter Anlage eingebrachtes Flüssiggas und anschliessendem Expandieren desselben hergestellt worden sein. Vorzugsweise ist der Feuerwiderstandskörper chemisch geschäumt.

Durch das Schäumen ist es möglich, einen leichten Feuerwiderstandskörper aus einem durchgehenden Material (monolithisch) zu fertigen. Mit anderen Worten sind etwaige verschiedene Zonen des Feuerwiderstandskörpers stoffschlüssig miteinander verbunden. Zusätzlich ermöglicht das Schäumen, Feuerwiderstandskörper mit einem geringen bis verschwindenden Anteil organischer Substanzen und hohem Anteil an anorganischem Material, zum Beispiel Gips, zu erzeugen. Ausserdem können durch Schäumungsprozesse eher runde oder rundliche Makroporen erhalten werden.

Dass der Feuerwiderstandskörper geschäumt ist, ist an dem fertigen Feuerwiderstandskörper erkennbar, etwa an der Form der Makroporen und daran, dass der Feuerwiderstandskörper aus einem homogenen Material besteht und keine Porentemplate für die Makroporen zu erkennen sind. Ferner sind die Makroporen im Wesentlichen nicht durch das Einbringen poröser Granulate erzeugt worden.

Im Gegensatz zum geschäumtem Material stehen zum Beispiel Feuerwiderstandskörper, welche durch Füllen einer Form mit porösem Granulat und Binden des Granulats mit einem Klebstoff oder einem Zement sowie dem Verpressen von porösen Granulaten hergestellt werden. Beim Pressen hat man Druck-Gradienten im Feuerwiderstandskörper, was wiederum zu Spannungen und/oder Dichteunterschieden führen kann. Auch die Makroporen sind dann weitgehend in eine Richtung ausgeprägt. Letztlich sind die Mikrostrukturen auch nicht mehr homogen. Ein weiteres Beispiel eines ungeschäumten porösen Feuerwiderstandskörpers ist ein mittels eines Porentemplates, wie zum Beispiel Polystyrol-Hohlkugeln, hergestellter Körper. Diese Polystyrol-Hohlkugeln verbleiben im Endprodukt, was nachgewiesen werden kann. Die Polystyrol-Hohlkugeln können nachteilig für die Brandschutzeigenschaften sein. Vorzugsweise ist der erfindungsgemässe Feuerwiderstandskörper daher Styrol-frei.

Als Schäumungsmittel in dem oben beschriebenen Verfahren kann in einer Ausführungsform Wasserstoffperoxid ($H_2O_2$) verwendet werden. Allgemeinere Aspekte zu dem Schäumungsvorgang und dem Schäumungsmittel sind im Folgenden beschrieben.

Weitere denkbare Schäumungsmittel sind Peroxoverbindungen, die in Präsenz eines Katalysators Sauerstoff freisetzen. In diese Gruppe gehören etwa Peroxoschwefelsäure, Chlorsäure, die Salze dieser Säuren sowie Alkali- oder Erdalkaliperoxide. Weitere geeignete Schaumbildner sind Karbonate und Hydrogenkarbonate, die säurekatalysiert gasförmiges Kohlendioxid freisetzen. Beispiele hierfür sind Kalziumkarbonat und Natriumhydro genkarbonat.

Je nach Schäumungsmittel kann zusätzlich noch ein Katalysator für die Schaumbildung enthalten sein. Im Fall, dass als Schäumungsmittel Wasserstoffperoxid ($H_2O_2$) oder eine ähnliches Schäumungsmittel verwendet wird, kann beispielsweise Braunstein (Manganoxid) als Katalysator zugegeben werden, um das Wasserstoffperoxid oder dergleichen zu zersetzen. In einem solchen Fall enthält der fertige Feuerwiderstandskörper Spuren des beim Aufschäumen verwendeten Katalysators.

Gemäß einem bevorzugten Aspekt ist der Feuerwiderstandskörper weitgehend frei von Polyurethan, da dieses bei der Schaumbildung nicht benötigt wird. Gemäß einem bevorzugten Aspekt enthält der Feuerwiderstandskörper beispielsweise höchstens 0,01 Vol% Polyurethan-Anteil.

e. Weitere Additive, Faserverstärkung

In einer besonderen Ausführungsform enthält der Feuerwiderstandskörper ein oder mehrere weitere Additive. Im Folgenden wird die Einzahl oder die Mehrzahl benutzt, unabhängig davon, ob es sich um ein oder mehrere verschiedene Additive handelt. Das Additiv kann bereits in dem Gipspulver als Masterbatch zugegeben werden, oder zu dem Wasser, oder zu der Wasser-Gips-Dispersion, oder zu einer beliebigen Kombination daraus.

Das Additiv kann aus der Gruppe bestehend aus Additiven zur Kontrolle einer Hydratisierungsreaktion, Additiven zur pH-Kontrolle, Additiven zur mechanischen Verstärkung, Brandschutzmittel, Dispergiermittel und/oder Additiven gegen eine positive oder negative thermische Ausdehnung ausgewählt werden.

Für die pH-Kontrolle können Salzsäure, Salpetersäure, Natronlauge, Ammoniak, Portlandzement oder ähnlich geeignete Substanzen verwendet werden.

Gemäß einem bevorzugten Aspekt enthält das Material ein Additiv zur Kontrolle der Hydratisierungsreaktion, zum Beispiel Reaktionsbeschleuniger oder Reaktionshemmer für die Hydratisierungsreaktion. Beispiele für Reaktionsbeschleuniger der Hydratisierungsreaktion sind Kalziumchlorid, Lithiumcarbonat, Triethanolamin, Sigunit und/oder Kalziumnitrid. Beispiele für Hemmer der Hydratisierungsreaktion sind Zitronensäure, Cellulose, Retardan, Zucker und/oder Weinsäure und ihre Salze.

Gemäß einem bevorzugten Aspekt enthält das Material ein Dispergiermittel. Als Dispergiermittel können unter anderen Polycarboxylether, ViscoCrete, Melaminsulfonate, Naphtalinsulfonate oder Ligninsulfonate im Material des Feuerwiderstandskörper enthalten sein.

Gemäß einem bevorzugten Aspekt enthält das Material ein Brandschutzmittel, zum Beispiel Aluminiumsilikate, Aluminiumhydroxide, Magnesiumhydroxide Kalziumhydroxid oder hydratisierte Kalziumaluminate und/oder Kalziumsilikate wie verschiedene Typen von Portlandzement, Schlacken und/oder Puzzolane. Diese Additive verbessern die Feuerbeständigkeit des Feuerwiderstandskörpers.

Gemäß einem bevorzugten Aspekt enthält das Material ein Additiv zum Vorbeugen von (positiver oder negativer) thermischer Expansion. Zu diesem Zweck können beispielsweise Silikate und / oder Mineralien verwendet werden, wie zum Beispiel Kaolin, Kaolinit, Palygorskit und Bentonit oder andere Tone. Besonders geeignet sind auch nicht expandierte Vermiculite und/oder Perlite.

Gemäß einem bevorzugten Aspekt enthält das Material ein Mittel zur Verstärkung der mechanischen Eigenschaften, z.B. lange oder gehackte Glasfasern, Glaswolle, mineralische Wolle, Wollastonit, Glimmer, Papierfasern, Cellulose-, Polyethylen-, Polyacrylonitril-, Polypropylen-, Polyamid- oder Karbonfasern.

Auf der Oberfläche des Feuerwiderstandskörpers können beispielsweise Gewebe, Geflechte, Netze, Folien, Karton oder Papier verwendet werden, um die Struktur zu verstärken und/oder ein Verkleben zu vereinfachen. Als Gewebe, Geflechte, Netze, Folien kommen metallische, polymere, natürliche oder anorganische Stoffe in Frage. Zum Beispiel können Jute oder Glasfasermatten verwendet werden, um die Oberfläche des Feuerwiderstandskörpers zu verstärken. Auch Fiberglas oder Schichten aus Fiberglas können zur Oberflächenverstärkung verwendet werden.

Auch kann eine strukturverstärkende honigwabenartige Struktur, wie sie zum Beispiel in US 5,155,959 gezeigt ist, im Feuerwiderstandskörper ausgebildet sein. Diese Honigwabenstruktur kann zum Beispiel aus Papier, Cellulose oder Karton bestehen und kann direkt während der Herstellung in den Feuerwiderstandskörper integriert werden.

Zumindest einige, bevorzugt alle der im Material enthaltenen festen Additive sind im Feuerwiderstandskörper mindestens teilweise eingeschlossen. Dies kann zum Beispiel dadurch erreicht werden, dass die Additive bereits vor dem Aushärten zugegeben werden, also z.B. vor oder während dem Mischvorgang (oben beschriebene Schritte S1-S3 von Figur 1), oder während des Aufschäumens (Schritt S4).

Gemäß einem bevorzugten Aspekt ist der Anteil der in dem Feuerwiderstandskörper enthaltenen organischen Additive weniger als 5 %, bevorzugt weniger als 2,5%, beispielsweise zwischen 1% und 2,5%.

### f. Wasser

Die bei der Herstellung zugegebene Wassermenge beträgt gemäß einem Aspekt 30%-140%, bevorzugt 30%-100% des Trockengewichts aller zugegebenen Feststoffe. Gemäß einem weiteren Aspekt beträgt die zugegebene Wassermenge 30%-140%, bevorzugt 30%-100% des Trockengewichts des Gipspulvers.

Gemäß einem Aspekt hat die zu verarbeitende Dispersion einen pH-Wert von 6 - 10, bevorzugt 6 - 8, besonders bevorzugt 6.8 - 7.4.

Hierin ist Wasser allgemein als wasserbasierte Flüssigkeit zu verstehen, die auch weitere Zusätze, etwa pH-Regulierungsmittel, enthalten kann. Beispiele für solche Zusätze sind in den Abschnitten oben beschrieben.

### g. Weitere Eigenschaften der Zusammensetzung, Rezeptparameter

Gemäß einem bevorzugten Aspekt enthält das Material keine oder weniger als 5 %, bevorzugt weniger als 2,5%, und noch mehr bevorzugt weniger als 1% organische Stoffe.

Es wurde festgestellt, dass auf einen hohen Anteil organischer Stoffe in der Zusammensetzung des Materials verzichtet werden kann und dennoch ein ausreichend stabilisierter Schaum möglich ist, der ein geeignetes Material mit der gewünschten porösen Mikrostruktur ergibt. Insbesondere kann auf schaumbildende oder schaumstabilisierende organische Verbindungen weitgehend verzichtet werden oder ihr Anteil zumindest gering gehalten werden. Hierzu trägt auch die Verwendung von kurzkettigen Additiven bei, wie in Unterabschnitt a oben beschrieben.

Gemäß einem bevorzugten Aspekt enthält das Material weniger als 5%, bevorzugt weniger 2%, und noch mehr bevorzugt weniger als 1% Tenside und organische Schaumstabilisatoren. Der Begriff "Tensid" oder "organischer Schaumstabilisator", wie hierin verwendet, umfasst organische Moleküle oder Mischungen organischer Moleküle, die, in wässriger Lösung und unter Verwendung einer beliebigen Schäumungsmethode zur Bildung eines Schaums führen. Das Volumen des gebildeten Schaums verringert sich bei fachmännisch eingestellter Tensidkonzentration binnen einer Minute nicht wesentlich. Die verwendeten Substanzen und Mischungen verringern bei solchen Konzentrationen die Oberflächenspannung des Wassers auf unter 60 mN/m. Einige Beispiele für Tenside sind nichtionische Tenside wie mehrfache Alkohole, mehrfache Ether, Polysorbate, Fettsäureester, Ethoxylate oder Alkylpolyglycoside, anionische Tenside basierend auf Carboxylaten mit mehr als 10 C Atomen, Fettsäuresalzen, Sulfaten oder Sulfonaten mit mehr als 10 C Atomen wie Natriumlaurylsulfat, Natriumdodecylpoly(oxyethylen)sulfat, Phosphorsäureestern, kationische Tenside basierend auf quartären Aminoverbindungen, Chloriden oder Bromiden wie Cetyltrimethylammoniumbromid oder amphotere Tenside auf Basis von Proteinen, Lipiden. Gemäß einem besonders bevorzugten Aspekt ist das Material frei von Tensiden und organischen Schaumstabilisatoren.

Durch den Kontakt mit Hitze in einem Brandfall können polymere Verbindungen und andere Kohlenwasserstoff enthaltende Zugaben, also organische Zugaben, zur Bildung von entzündlichen und giftigen Gasen führen. Diese Gase können bei ihrer Bildung Brandschutzbauteile schädigen und dabei deren Funktionalität einschränken. Die Überlebenswahrscheinlichkeit von Personen, die solchen Gasen auf der dem Brand abgewandten Seite ausgesetzt werden, kann dabei gemindert werden. Durch den niedrigen Anteil von organischen Verbindungen aller Art oder sogar durch eine im Wesentlichen organikfreie Ausgestaltung können die Umweltverträglichkeit und die Produktsicherheit somit erhöht werden.

Gemäß einem bevorzugten Aspekt enthält das Material einen Rest der hierin beschriebenen Additive, insbesondere des oben beschriebenen Hydrophobisierungs-Additivs (siehe Beschreibung von Weg (i)) bzw. der partiell hydrophobisierten Partikel (siehe Beschreibung von Weg (ii)).

Gemäß einem bevorzugten Aspekt enthält das Material weniger als 5%, bevorzugt weniger 2%, und noch mehr bevorzugt weniger als 1% an Halogen (in organischen und/oder anorganischen halogenhaltigen Substanzen). Besonders bevorzugt ist das Material frei von organischen und/oder anorganischen halogenhaltigen Substanzen, insbesondere frei von Substanzen, welche bei erhöhtem Temperaturen (>200°C) flüchtige halogenhaltige Produkte freisetzen. Wie hierin verwendet, bedeutet "frei" von derartigen Substanzen, dass diese in einer Menge kleiner 1000 ppm (w/w, bezogen auf den Feuerwiderstandskörper) vorhanden sind.

Gemäß einem bevorzugten Aspekt enthält das Material weniger als 3%, bevorzugt weniger 1%, und noch mehr bevorzugt weniger als 0.2% Fluor.

**V. Mikrostruktur**

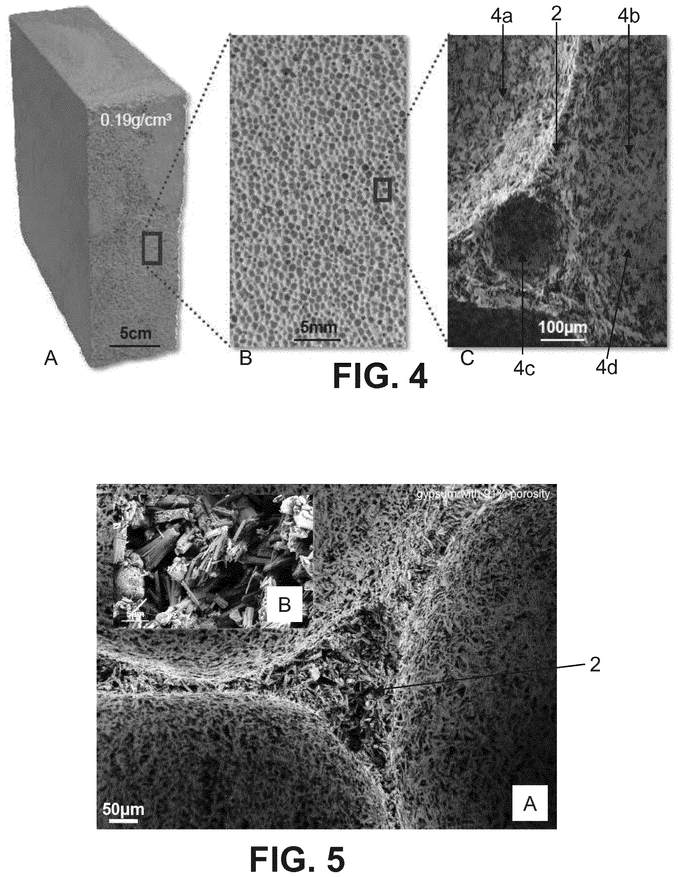

Im Folgenden wird die besondere, durch das erfindungsgemäße Herstellungsverfahren ermöglichte Mikrostruktur des Feuerwiderstandskörpers erläutert. Die Mikrostruktur ist hier besonders durch Makro- und Mikroporen und ihre Eigenschaften (Porengrösse, Porengrössenverteilung usw.) gekennzeichnet, auf die in den folgenden Unterabschnitten a und b eingegangen wird. Zuvor wird die Mikrostruktur eines beispielshaften Feuerwiderstandskörpers gemäß einer Ausführungsform der Erfindung anhand der Figuren 4-5 beschrieben.

Porengrössen, Porengrößenverteilung sowie Mediandurchmesser werden bestimmt, indem representative Mikrostrukturbilder mittels der Methode der linearen Phasenabschnitte ausgewertet werden. Für die Auswertung und die statistische Hochrechnung auf die dreidimensionalen Porengrössen wurde die Software Lince der Technischen Universität Darmstadt verwendet. Zur Ermittlung der Kennwerte der Verteilung kamen Microsoft Excel sowie SAS JMP zum Einsatz.

Geschlossenporigkeit bzw. der Anteil der geschlossenen Makroporen wird bestimmt, indem auf einem repräsentativen, optischen Mikrostrukturbild zufällig Linien aufgezogen werden. Die Makroporen, über welche die Linie führt, werden gezählt, sofern sie nicht in einem Randbereich liegen und sofern die gesamte Poreninnenwand sichtbar ist. Beim Zählen der Poren wird zudem vermerkt, wie viele Poren Wände aufweisen, welche durch eine oder mehrere Porenöffnungen durchdrungen sind. Die Geschlossenporigkeit kann nun als Prozentsatz an geschlossenen im Verhältnis zur total gezählten Porenzahl definiert werden. Dabei sollen mindestens 100 Poren ausgewertet werden.

Figur 4 zeigt teils mikroskopische Abbildungen eines durch das erfindungsgemäße Verfahren hergestellten Feuerwiderstandskörpers (hier gemäß dem oben beschriebenen Weg (i) hergestellt). In der fotographischen Abbildung A ist der vollständige Feuerwiderstandskörper gezeigt. Der Körper wurde als Quader mit Seitenlängen von mehreren cm bis mehreren dm hergestellt. In einer vergrößerten Querschnittsabbildung B des Feuerwiderstandskörpers ist seine poröse Mikrostruktur deutlich erkennbar: Der Feuerwiderstandskörper weist eine hohe Dichte von Makroporen auf, die gleichmäßig im Feuerwiderstandskörper verteilt sind. Die Makroporen sind geschlossen, wobei die sie umgebenden Wände sehr dünn sind, so dass das Innere der Makroporen einen Großteil des Volumens des Feuerwiderstandskörpers ausmacht und demzufolge sehr hohe Werte für die Porosität erreicht werden. Die Makroporen weisen einen Mediandurchmesser von etwas unter 1 mm auf. In der noch mehr vergrößerten Querschnittsabbildung C ist ein Wandbereich 2 zwischen vier Makroporen 4a-4d dargestellt. Hier ist erkennbar, dass der Wandbereich eine feine Struktur auf kleinen Längenskalen von einigen $\mu$m aufweist, die im Folgenden erläutert wird.

Figur 5 zeigt eine etwas stärker vergrößerte elektronenmikroskopische Aufnahme A eines Wandbereiches 2 analog zu der Aufnahme von Figur 4 C, sowie eine noch stärker vergrößerte mikroskopische Aufnahme B. Hierin ist der kristalline Aufbau des Gipsmaterials, aus dem die Wandbereiche gebildet sind, deutlich zu erkennen. Die Zwischenräume zwischen dem kristallinen Material bilden Mikroporen von einer typischen Ausdehnung von ca. 0.02-20 $\mu$m. Die Mikroporen sind offen und bilden ein feines Netzwerk, welches den gesamten Gipskörper durchdringt, bevorzugt perkoliert. Durch diese Mikroporen wird somit ein begrenzter Gasaustausch zwischen den ansonsten geschlossenporigen Makroporen 4 ermöglicht.

Ein Unterschied zu üblichem Gipsmaterial besteht darin, dass die Gipspartikel, wie in Figur 2 dargestellt, partiell hydrophobisiert wurden. Dadurch werden die Makroporen mit ihren oben beschriebenen besonderen Eigenschaften ermöglicht. Entsprechend ist auch das Wandmaterial 2 zumindest an der Oberfläche der Makroporen (siehe Figur 4C und Figur 5A) partiell hydrophob. Dadurch wird Wasser am Eindringen in das Netzwerk aus Mikroporen gehindert. Dies ist in größerem Detail weiter unten in Abschnitt VI.c beschrieben.

a. Makroporen

Die Makroporen des Feuerwiderstandskörpers sind definiert als Poren mit einem Mediandurchmesser von über 100 $\mu$m. Damit ist der Durchmesser der Makroporen deutlich (in der Regel mindestens um eine Größenordnung) über der mittleren Kristallgröße der Gipskristalle, und die Makroporen sind somit allein schon aufgrund ihrer Größe klar von den in Figur 5B dargestellten Mikroporen unterscheidbar. Hierbei ist der Durchmesser einer einzelnen Makropore als der größte Durchmesser der jeweiligen Makropore in irgendeiner Richtung definiert.

Figur 6 zeigt eine schematische Querschnittsabbildung eines Feuerwiderstandskörpers gemäß einer Ausführungsform der Erfindung. Darin sind die im Gipsmaterial 2 des Feuerwiderstandskörpers enthaltenen Makroporen 4 gezeigt.

Die Figur 7 zeigt photographische Aufnahmen dreier Feuerwiderstandskörper, nämlich der oben in Abschnitt III beschriebenen Ausführungsbeispiele 1-3 (Teilfiguren 7a-7c).

Hierbei wurde die Menge des zugegebenen Schäumungsmittels Wasserstoffperoxid variiert, so dass verschiedene Porengrößen (Mediandurchmesser der Makroporen) und verschiedene Porositäten erhalten wurden, wie bereits optisch unmittelbar aus Figur 7 erkennbar ist.

In Figur 8a-c sind die jeweils zu den in Figur 7a-7c gezeigten Beispielen zugehörigen Verteilungen der Porengrößen dargestellt, mit einer daran angepassten Gauß-Verteilung. Zusätzlich sind im rechten Teil der jeweiligen Teilfiguren 8a-8c Kastengraphiken für die Porengrössen abgebildet. Die Kastengraphik zeigt die Lage des Medianwerts als waagerechten Strich im Kasten und den Mittelwert mit 95% Vertrauensintervall als Rhombus. Das obere und untere Ende des Kastens markieren die 25 respektive 75 % Quantile. Die Antennen, die sich ausgehend vom Kasten nach oben sowie unten ausdehnen, markieren entweder den grössten oder kleinsten Datenwert oder die Entfernung zum Kasten, die dem 1.5-fachen des Interquartilsabstandes entspricht, falls Datenpunkte bestehen, die weiter von den Enden des Kastens entfernt liegen. Die Klammer links vom Kasten markiert den dichtesten Bereich der Verteilung, in welchem 50 % der Datenpunkte liegen.

In Tabelle 1 sind einige weitere Parameter der in Figur 7a-c dargestellten Beispiele angegeben.

Tabelle 1

| Ausführungsbeispiel | 1 | 2 | 3 |
|---|---|---|---|
| Dichte (kg/m$^3$) | 317 | 394 | 517 |
| Mittlerer Durchmesser der Makroporen (mm) | 1.46 | 1.32 | 1.16 |
| Varianz des Durchmesser der Makroporen (mm) | 0.505 | 0.486 | 0.396 |
| Geschlossenporigkeit (%) | 87.1 | 91.4 | 96.5 |
| d10 (mm) | 0.79 | 0.74 | 0.71 |
| Mediandurchmesser d50 (mm) | 1.42 | 1.29 | 1.11 |
| d90 (mm) | 2.08 | 1.92 | 1.67 |
| (d90-d10)/d50 | 0.91 | 0.91 | 0.86 |

Die Varianz ist hierin wie folgt definiert: An die statistische Verteilung der Häufigkeit jeweiliger Durchmesser der Makroporen wird eine Gauß-Verteilung angepasst (hier bedeutet angepasst ein best fit, der die L2-Differenz zur tatsächlich ermittelten Verteilung minimiert; es können jedoch auch andere übliche Anpassungsverfahren gewählt werden). Als Varianz des Durchmessers ist die Varianz der angepassten Gaußverteilung definiert. Die Varianz entspricht der Entfernung vom Mittelwert, bei welcher der Wert der gefitteten Gauß-Kurve auf 1/e ihres Maximums (beim Mittelwert) abfällt.

Die Beispiele der Figuren 7-8 zeigen, dass die Eigenschaften der Poren durch Variation der Prozessparameter und der Menge der Hilfsstoffe (Additive, Schäumungsmittel usw.) genau kontrolliert verändert werden können. Hierzu sind im Lichte der hierin gegebenen Informationen nur wenige gezielte Versuche notwendig, um die gewünschten Eigenschaften kontrolliert und reproduzierbar einzustellen. Dies ist auf die hohe Stabilität des Schaums zurückzuführen, die homogene und reproduzierbare Eigenschaften des erhaltenen Feuerwiderstandskörpers erlaubt.

Im Folgenden werden mögliche allgemeine Aspekte in Bezug auf die Makroporen erläutert.

Gemäß einem Aspekt wird ein Feuerwiderstandskörper zur Verfügung gestellt, umfassend ein poröses Material auf Gipsbasis, welches Makroporen mit einem Medianporendurchmesser von zwischen 0,1 mm und 5 mm. Gemäß einem bevorzugten Aspekt beträgt der Mediandurchmesser mindestens 0,25 mm, besonders bevorzugt mindestens 0,5 mm. Gemäß einem weiteren bevorzugten Aspekt beträgt der Mediandurchmesser bis zu 5 mm, besonders bevorzugt bis zu 3 mm, und ganz besonders bevorzugt bis zu 2 mm oder sogar nur bis zu 1 mm.

Gemäß einem Aspekt weist der Feuerwiderstandskörper einen ersten Bereich auf, wobei der Durchmesser der Makroporen innerhalb des ersten Bereichs eine Verteilbreite von weniger als dem 0.45-fachen des Medianporenduchmessers aufweist. Gemäß einem weiteren Aspekt weist der Feuerwiderstandskörper einen ersten Bereich auf, wobei der Durchmesser der Makroporen innerhalb des ersten Bereichs eine Verteilbreite von weniger als dem 1.5-fachen des Medianwertes der Porenverteilung aufweist. Die Verteilbreite ist hierbei wie folgt definiert: (90%-Quantil - 10%-Quantil) / Medianwert.

Alle Angaben zu den Medianporenduchmesser in diesem Dokument können analog auch auf den mittleren (durchschnittlichen) Durchmesser übertragen werden. Ebenso können alle Angaben zu der Verteilbreite analog auch auf die Varianz übertragen werden.

Gemäß einem Aspekt ist der erste Bereich zusammenhängend und nimmt mindestens 30% oder sogar mindestens 50% des Volumens des Feuerwiderstandskörpers ein. Gemäß einem Aspekt haben die Makroporen ein durchschnittliches Seitenverhältnis, definiert als das Verhältnis von größtem zu kleinstem Durchmesser einer Makropore, von weniger als 2, bevorzugt weniger als 1,5, und besonders bevorzugt von weniger als 1,2.

Gemäß einem Aspekt sind mindestens 70%, mindestens 80%, oder sogar mindestens 90% der Makroporen geschlossen bei Dichten des Feuerwiderstandskörpers von 100 - 600 kg/m$^3$. Hierbei werden nur im Inneren (bulk) des Feuerwiderstandskörpers befindliche Makroporen berücksichtigt, nicht jedoch an der Oberfläche befindliche Makroporen. Eine Makropore wird hierbei als geschlossen angesehen, wenn sie vollständig von einer Wand umgeben ist, wobei die Wand kleinste Öffnungen und/oder Durchlässe aufweisen dürfen. Unter kleinsten Öffnungen / Durchlässe sind solche mit einem Durchmesser von bis zu 20 $\mu$m oder bis zu 1/20 des Mediandurchmessers der Makroporen (je nachdem, welches der größere Wert ist) anzusehen. Somit bleiben in der Wand befindliche Mikroporen (siehe unten) unberücksichtigt.

Gemäß einem Aspekt besteht daher zwischen den einzelnen Makroporen 4 - abgesehen von den Mikroporen - keine Fluidverbindung, d.h. die Makroporen 4 sind in ihrem Skalenbereich geschlossen porig. Gemäß einem Aspekt perkolieren die Makroporen den ersten Bereich bzw. den Feuerwiderstandskörper nicht.

Gemäß einem bevorzugten Aspekt haben die Makroporen in Bezug auf das Gesamtvolumen des Feuerwiderstandskörpers einen Volumenanteil von 95-10 %, bevorzugt von 90-25 % und besonders bevorzugt von 80-40 %.

Gemäß einem bevorzugten Aspekt ist das von den Makroporen eingeschlossene Volumen größer als das Volumen der Wandbereiche zwischen den Makroporen (wobei etwa das Innere von Mikroporen in den Wandbereichen zu den Wandbereichen gerechnet wird). Dies gilt, je nach Porosität der Mikroporen, bis zu einer Dicht von ca. 425 kg /m$^3$. Bei höherer Dichte kann alternativ auch das Volumen der Wandbereiche zwischen den Makroporen größer sein als das von den Makroporen eingeschlossene Volumen.

Gemäß einem bevorzugten Aspekt ist das Verhältnis von Dichte (kg/m$^3$) des Feuerwiderstandskörpers zu mittlerem Durchmesser bzw. Mediandurchmesser (mm) der Makroporen zwischen 50:1 und 1000:1. Bevorzugt ist das Verhältnis von Dichte zu Durchmesser zwischen 100: 1 und 600:1.

Der Feuerwiderstandskörper verfügt über eine gute Wärmedämmfähigkeit und eine hohe Tragfähigkeit. Seine Dichte ist innerhalb eines ersten Bereichs des Feuerwiderstandskörpers (welcher ein Teil des Feuerwiderstandskörpers oder der gesamte Feuerwiderstandskörper sein kann) im Wesentlichen homogen. Gemäß einem bevorzugten Aspekt weicht die Dichte an einer beliebigen Stelle um nicht mehr als 10%, bevorzugt um nicht mehr als 5%, und besonders bevorzugt um nicht mehr als 2 % von der Dichte an einer beliebigen anderen Stelle des ersten Bereichs ab. Als Messverfahren eignet sich die Entnahme eines Probekörpers mit wenigstens 50 cm$^3$ Volumen und mit kleinster Ausdehnung von mindestens dem Zehnfachen des Medianwertes der Porengrösse. Ein analoger Probekörper wird an einer beliebigen zweiten Stelle des Feuerwiderstandskörpers bzw. seines ersten Bereichs entnommen. Er soll innerhalb der genannten Toleranz die gleiche Dichte aufweisen wie der erste entnommene Zylinder.

Gemäß einem weiteren bevorzugten Aspekt stimmen auch andere der hierin beschriebenen Parameter, die die Mikrostruktur ausdrücken, in beiden Probenkörpern bis auf eine Toleranz von 10%, bevorzugt 5% und besonders bevorzugt 2% überein. Zur Überprüfung der Mikrostruktur können optische Hilfsmittel, wie zum Beispiel Mikroskope, verwendet werden. Dabei sollen die Porengrössenverteilung und die Porengrösse, sowie die Struktur und Porosität des Materials im Wesentlichen identisch sein, innerhalb der genannten Toleranz.

Durch die gleichmäßige Verteilung der Poren und die hohe Porosität und aufgrund seines geringen Eigengewichtes ist der Feuerwiderstandskörper auch in großen Formaten herstellbar.

b. Mikroporen

Im Folgenden werden einige mögliche Aspekte in Bezug auf die Mikroporen beschrieben.

Gemäß einem Aspekt wird ein Feuerwiderstandskörper zur Verfügung gestellt, umfassend ein poröses Material auf Gipsbasis, wobei der Feuerwiderstandskörper einen ersten Bereich aufweist, und wobei innerhalb des ersten Bereichs das poröse Material Makroporen mit einem Medianporendurchmesser von zwischen 0,1 mm und 10 mm und weiter Mikroporen mit einer in einer beliebigen Querschnittebene definierten typischen Ausdehnung von 0.02-20 $\mu$m, bevorzugt 0.02-10 $\mu$m, besonders bevorzugt 0.02-5 $\mu$m umfasst.

Dieser Wert für die typische Ausdehnung der Mikroporen (0.02-20 $\mu$m) gibt dabei einen groben Richtwert vor, der jedoch nicht zwingend ist. Diese typische Ausdehnung der Mikroporen ist in einer beliebigen Querschnittebene definierbar. Insbesondere ist er in einem Rasterelektronenmikroskopiebild von beispielsweise einer polierten Probe definierbar. Die typische Ausdehnung kann als mittlere Ausdehnung in irgendeiner vorgegebenen Richtung in der Querschnittsebene definiert werden. Alternativ kann die typische Ausdehnung als in der Querschnittsebene über alle Richtungen gemittelte Ausdehnung definiert werden.

Gemäß einem bevorzugten Aspekt werden die Mikroporen bei der Bildung der Gipskristalle beim Aushärten der gemischten und geschäumten Zusammensetzung gebildet. Die Mikroporen sind somit aus der kristallinen Struktur des verwendeten, abbindenden anorganischen Materials gebildet. Die Mikroporen werden beispielsweise im Fall von Gips als Bindemittel durch die Zwischenräume zwischen den Kalziumsulfat-Dihydrat Kristallen definiert.

Die Mikroporen sind klar von den Makroporen unterscheidbar. Wenn man dennoch beide gemeinsam betrachtet, hat die Durchmesserverteilung der gesamten (Makro- und Mikro-) Poren zwei klar voneinander unterscheidbare Häufungen (wobei bei den Mikroporen statt des Durchmessers die Ausdehnung wie oben definiert verwendet werden kann). Insbesondere ist sowohl die Verteilbreite des Durchmessers der Makroporen als auch die Verteilbreite des Durchmessers der Mikroporen kleiner als die Differenz der durchschnittlichen Durchmesser bzw. Mediandurchmesser von Makro- und Mikroporen. Bevorzugt ist zumindest eine der Verteilbreiten und besonders bevorzugt sind beide Verteilbreiten kleiner als 1/2 der Differenz.

Gemäß einem bevorzugten Aspekt sind die Mikroporen aus der kristallinen Struktur des Gipses gebildet.

Gemäß einem bevorzugten Aspekt sind die Mikroporen nicht abgeschlossen, sondern vernetzt. Besonders bevorzugt perkolieren die Mikroporen den ersten Bereich, d.h. sie definieren über die Mikroporen (und die Makroporen) verbundene Pfade, die sich dicht durch den gesamten ersten Bereich des Feuerwiderstandskörpers ziehen. In dem Feuerwiderstandskörper kann somit durch die Mikroporen vermittelt ein gewisser Gasaustausch stattfinden, auch wenn die Makroporen geschlossen sind.

Gemäß einem bevorzugten Aspekt sind die Mikroporen langgestreckt, und haben ein durchschnittliches Seitenverhältnis von mindestens 2, bevorzugt von mindestens 5.

Gemäß einem bevorzugten Aspekt beträgt der Medianporendurchmesser bzw. die mittlere Ausdehnung der Mikroporen 0.02-20 $\mu$m, bevorzugt 0.02-10 $\mu$m, besonders bevorzugt 0.02-5 $\mu$m.

## VI. Materialeigenschaften

Im Folgenden werden verschiedene mögliche Charakterisierungen beschrieben, mittels derer der mit dem obigen Verfahren herstellbare Feuerwiderstandskörper charakterisiert werden kann, und die ihn von nach herkömmlichen Verfahren hergestellten Feuerwiderstandskörpern unterscheiden können.

### a. Dichte

Gemäß einem Aspekt wird ein Feuerwiderstandskörper zur Verfügung gestellt, wobei der Feuerwiderstandskörper einen ersten Bereich aufweist, und wobei innerhalb des ersten Bereichs das Material eine Dichte von 80 bis 1.000 kg/m$^3$ aufweist.

Die Dichte kann im Sinne der DIN 4226-2 definiert werden. Die Dichte wird entscheidend durch die Größe und die Anzahl der Makroporen und Mikroporen bestimmt, denn je mehr und je größere Poren (Luft) der Feuerwiderstandskörper enthält, desto geringer ist seine Dichte.

Bevorzugt weist der Feuerwiderstandskörper eine Dichte von unterhalb 800 kg/m3, besonders bevorzugt von zwischen 100 und 550 kg/m$^3$ auf, ganz besonders bevorzugt von zwischen 150 und 400 kg/m$^3$ oder sogar zwischen 120 - 200 kg/m$^3$.

### b. Homogenität

Gemäß einem Aspekt wird ein Feuerwiderstandskörper zur Verfügung gestellt, wobei der Feuerwiderstandskörper einen ersten Bereich aufweist, und wobei innerhalb des ersten Bereichs die Dichte des Feuerwiderstandskörpers in dem ersten Bereich eine Verteilbreite von weniger als 5%, bevorzugt weniger als 3%, besonders bevorzugt weniger als 2% oder sogar weniger als 1% aufweist, wobei die Dichte als mittlere Dichte in regulären Volumina von 50 ml definiert ist.

Der erste Bereich nimmt bevorzugt eine Fläche von mindestens 0.3 m$^2$ und/oder ein Volumen von mindestens 0,001m$^3$ ein. Noch mehr bevorzugt ist es, dass der erste Bereich eine Fläche von mindestens 0.5 m$^2$ und/oder ein Volumen von mindestens 0,005m$^3$ oder sogar von 0,01 m$^3$ einnimmt.

Der erste Bereich kann in einem Aspekt mindestens 20%, mindestens 30%, oder sogar mindestens 50% des gesamten Volumens des Feuerwiderstandskörpers ausmachen, und/oder mindestens 20%, mindestens 30%, oder sogar mindestens 50% der gesamten Oberfläche des Feuerwiderstandskörpers abdecken.

Gemäß einem bevorzugten Aspekt ist das poröse Material des Feuerwiderstandskörpers monolithisch ausgestaltet. Dies bedeutet, dass der Körper ein mechanisch zusammenhängendes Teil bildet, und zusätzlich, dass der Körper als Ganzes getrocknet wurde. Das macht sich beispielsweise dadurch bemerkbar, dass etwaige Mikroporen den gesamten Feuerwiderstandskörper perkolieren, d.h. über die Mikroporen (und die Makroporen) verbundene Pfade definieren, die sich dicht durch das gesamte Material des Feuerwiderstandskörpers ziehen. In diesem Aspekt können alle im Feuerwiderstandskörper vorkommenden Zonen und Materialien miteinander stoffschlüssig verbunden sein.

Dabei ist die Mikrostruktur im Wesentlichen homogen, wenn an zwei beliebigen Stellen des Materials jeweils ein Probekörper (etwa Zylinder von 2 cm Tiefe und 2 cm Durchmesser oder ein Körper mit wenigstens 50 cm$^3$ Volumen und mit kleinster Ausdehnung von mindestens dem Zehnfachen des Medianwertes der Porengrösse) entnommen werden und eine Eigenschaft dieser erhaltenen Probenkörper innerhalb eines vorgegebenen Toleranzbereichs miteinander übereinstimmen. Die Eigenschaft kann ein oder mehrere Elemente ausgewählt aus der Gruppe bestehend aus den folgenden sein: Dichte, Porosität, mittlere Porengröße der Makroporen, oder eine Kombination daraus sein. Die vorgegebene Toleranz kann bei 10%, bevorzugt bei 5%, noch mehr bevorzugt bei 3%, besonders bevorzugt bei 2% liegen.

Weist der Feuerwiderstandskörper mehrere Bereiche oder Zonen auf, so können alternativ oder zusätzlich zum ersten Bereich weitere Bereiche, z.B. der zweite Bereich, die hierin für den ersten Bereich beschriebenen Eigenschaften aufweisen. Gemäß einem Aspekt nimmt dann beispielsweise der zweite Bereich bevorzugt eine Fläche von mindestens 0.3 m$^2$ und/oder ein Volumen von mindestens 0,001m$^3$ ein. Analog kann der zweite Bereich in einem Aspekt mindestens 20%, mindestens 30%, oder sogar mindestens 50% des gesamten Volumens des Feuerwiderstandskörpers ausmachen, und/oder mindestens 20%, mindestens 30%, oder sogar mindestens 50% der gesamten Oberfläche des Feuerwiderstandskörpers abdecken, usw.

c. Wasserabsorption

In einer besonderen Ausführungsform ist der erfindungsgemässe Feuerwiderstandskörper in hohem Maße wasserabweisend. Dies bedeutet, dass in die Poren innerhalb des Feuerwiderstandskörpers selbst bei längerem Eintauchen des Feuerwiderstandskörpers in Wasser, oder Aussetzen des Feuerwiderstandskörpers an Nässe und Feuchtigkeit, nur eine äußerst geringe Menge Wasser in die geschlossenen Feuerwiderstandskörper dringt.

Dieser wasserabweisende Effekt wird vorzugsweise durch die geschlossenen Makroporen erreicht, welche den Feuerwiderstandskörper nicht perkolieren und somit keinen Wassertransport erlauben.

Dieser Effekt wird entscheidend dadurch verstärkt, dass die Wände der Makroporen durch partiell hydrophobisierte Partikel gebildet worden sind und daher selbst partiell hydrophob sind. Dadurch wird auch ein Wassertransport durch die Mikroporen stark gehemmt.

In einem Beispiel wurden verschiedene erfindungsgemäß hergestellte Feuerwiderstandskörper als zylindrische Probekörper von 80 mm Durchmesser und 30 mm Höhe zur Verfügung gestellt. Die Trockendichte der Probekörper umfasste 221 kg/m$^3$ Diese Probekörper wurden während 14 Tagen komplett unter Wasser fixiert. Danach waren die Probenkörper immer noch nicht völlig von Wasser durchdrungen. Dies wurde festgestellt, indem die Fixierung gelöst und ermittelt wurde, ob die Probenkörper dank der Auftriebskräfte an die Oberfläche des Wassers treiben. Bei allen untersuchten Probenkörpern war dies der Fall. Dies steht in starkem Gegensatz zu üblichen Gipsmaterialien, die hochgradig wasseraufnehmend sind. Vergleichsproben aus üblichem Gipsmaterial blieben nach der angegebenen Zeit entweder auftriebslos unter Wasser oder hatten sich sogar bereits in dem Wasser aufgelöst.

Gemäß einem bevorzugten Aspekt ist der Feuerwiderstandskörper daher gering wasserabsorbierend, so dass ein zylindrischer Probekörper aus dem Material des Feuerwiderstandskörpers von 80 mm Durchmesser und 30 mm Höhe, nachdem er während 24 Stunden, vorzugsweise 5 Tagen, besonders bevorzugt während 14 Tagen komplett unter Wasser fixiert wurde, dennoch dank der Auftriebskräfte an die Oberfläche des Wassers treibt, sobald die Fixierung entfernt wird. Die Zeit, die der oben definierte zylindrische Probenkörper komplett unter Wasser fixiert sein kann, ohne seinen Auftrieb zu verlieren, wird auch als durch Auftriebsmessung ermittelte Wasserabsorptionszeit des Feuerwiderstandskörpers bezeichnet. Demgemäß hat der Feuerwiderstandskörper somit eine durch Auftriebsmessung ermittelte Wasserabsorptionszeit von mehr als 24 Stunden, vorzugsweise mehr als 5 Tagen, besonders bevorzugt mehr als 14 Tagen.

Für die Ausführungsbeispiele 1-3 hat sich experimentell gezeigt, dass nach 20 Stunden die Wasseradsorption konstant geblieben ist und die Probekörper kein weiteres Wasser mehr aufgenommen haben. Der Probekörper nach Ausführungsbeispiel 1 zeigt nach 50 Stunden eine relative Gewichtszunahme von 140%, Ausführungsbeispiel 2 von 197% und Ausführungsbeispiel 3 von 167% nach gleicher Zeit.

Gemäß einem Aspekt hat der Feuerwiderstandskörper die Eigenschaft, dass sich ein zylindrischer Probekörper aus dem Material des Feuerwiderstandskörpers von 80 mm Durchmesser und 30 mm Höhe nicht auflöst und als fester Körper erhalten bleibt, nachdem er während 24 Stunden, vorzugsweise 5 Tagen, besonders bevorzugt während 14 Tagen komplett unter Wasser fixiert wurde.

d. Wasserfreigabe

Durch die oben beschriebene Mikrostruktur, insbesondere durch überwiegend geschlossene Makroporen, wird bei einer Erhitzung des Feuerwiderstandskörpers das durch die Dehydratisierung des Gipses freiwerdende Wasser zunächst in den Makroporen zurückbehalten. Dadurch wird einem zu raschen Austrocknen des Feuerwiderstandskörpers entgegengewirkt, und die feuerhemmende Wirkung wird länger aufrechterhalten.

Auch ermöglicht diese Mikrostruktur es, dass sich ein erhöhter Dampfdruck im Inneren der Makroporen aufbaut. Bei einer weiteren Verdampfung des Wassers muss Arbeit gegen diesen Dampfdruck geleistet werden, so dass sich die bei der Wasserverdunstung auftretende Kühlwirkung bezogen auf die im Gips enthaltene Feuchtigkeitsmenge erhöht.

Die Mikroporen hingegen ermöglichen es, dass ein geringer Stoff- und Gasaustausch zwischen verschiedenen Makroporen dennoch stattfinden kann. Dadurch können zum Beispiel im Brandfall Druckgradienten im Feuerwiderstandskörper ausgeglichen und infolgedessen Abplatzungen vermieden werden. Die Mikroporen wirken in diesem Sinne analog zu einem Sicherheitsventil, welches übermäßige Druckunterschiede ausgleicht.

e. Feuerfestigkeit

Die hergestellten Feuerwiderstandskörper können je nach Anforderung mit beliebigen Feuerwiderstandseigenschaften ausgestattet werden. Diese Feuerwiderstandseigenschaften werden durch die Feuerwiderstandsklasse ausgedrückt, die in bekannter Weise gemäß DIN 4102 ermittelt werden kann.

Eine Erhöhung der Feuerwiderstandsklasse ist in erster Linie durch eine Erhöhung der Dichte und/oder der Dicke des Feuerwiderstandskörpers möglich. Hierdurch wird die Menge des zur Verdunstung zur Verfügung stehenden, im Gips gebundenen Wassers erhöht, was sich unmittelbar auf die Feuerwiderstandsklasse auswirkt. In gewissem Umfang können auch feuerhemmende Additive dem Feuerwiderstandskörper zugegeben werden, um die Feuerwiderstandsklasse weiter zu erhöhen.

Daher weist der Feuerwiderstandskörper gemäß einem bevorzugten Aspekt der Erfindung eine Feuerwiderstandsklasse von mindestens T30, mindestens T60, mindestens T90 oder sogar mindestens T120 auf. Im Allgemeinen wächst der Feuerwiderstand mit der Dichte des Feuerwiderstandskörpers.

In einigen Anwendungen sind gleichzeitig eine vorgegebene Feuerwiderstandsklasse und ein möglichst geringes Gewicht erstrebenswert. Dies gilt besonders bei beweglichen Feuerschutzelementen wie etwa Feuerschutztüren oder in Fahrzeugen aller Arten. Wie oben beschrieben, stehen diese beiden Anforderungen jedoch oft in Konflikt zueinander, nämlich dann, wenn eine gegebene Feuerwiderstandsklasse nur mit einer Erhöhung der Dichte oder der Dicke erreicht werden kann. Durch den hierin beschriebenen Feuerwiderstandskörper und insbesondere seine Mikrostruktur ist es jedoch möglich, flächige Feuerwiderstandskörper einer vorgegebenen Feuerwiderstandsklasse bereits bei ungewöhnlich geringem Gewicht pro Fläche bereitzustellen.

Gemäß einem Aspekt der Erfindung wird beispielsweise ein Feuerwiderstandskörper mit einer Feuerwiderstandsklasse von mindestens T30 zur Verfügung gestellt. Der Feuerwiderstandskörper hat eine Dichte von 80-400 $kg/m^3$, bevorzugt von 100-300 $kg/m^3$, besonders bevorzugt 120-220 $kg/m^3$.

Gemäß einem Aspekt der Erfindung wird beispielsweise ein Feuerwiderstandskörper mit einer Feuerwiderstandsklasse von mindestens T60 zur Verfügung gestellt. Der Feuerwiderstandskörper hat eine Dichte von 100-400 $kg/m^3$, bevorzugt von 150-350 $kg/m^3$, besonders bevorzugt 200-300 $kg/m^3$.

Gemäß einem Aspekt der Erfindung wird beispielsweise ein Feuerwiderstandskörper mit einer Feuerwiderstandsklasse von mindestens T90 zur Verfügung gestellt. Der Feuerwiderstandskörper hat eine Dichte von 40-500 $kg/m^3$, bevorzugt von 250-450 $kg/m^3$; besonders bevorzugt 280-380 $kg/m^3$.

Gemäß einem Aspekt der Erfindung wird beispielsweise ein Feuerwiderstandskörper mit einer Feuerwiderstandsklasse von mindestens T120 zur Verfügung gestellt. Der Feuerwiderstandskörper hat eine Dichte von 250-600 $kg/m^3$, bevorzugt von 280-500 $kg/m^3$, besonders bevorzugt 300-400 $kg/m^3$.

Hierin sind die Feuerwiderstandsklassen T für Feuerschutzabschlüsse beispielhaft genannt, sie können ohne Verlust der Allgemeinheit jeweils durch die in DIN 4102 definierten Klassen F, G, L, E, I, K, R, S oder W ersetzt werden.

f. Plattenform, Dimensionen

Der Feuerwiderstandskörper kann beliebige Formen annehmen. Aufgrund der außergewöhnlichen Stabilität des Gipsschaums sind der Formgebung kaum Grenzen gesetzt.

Gemäß einem bevorzugten Aspekt ist der Feuerwiderstandskörper flächig. In diesem Fall kann der Feuerwiderstandskörper eine Fläche von mindestens 0.25 $m^2$, bevorzugt von mindestens 1 $m^2$, besonders bevorzugt von mindestens 2 $m^2$ aufweisen. Der weiter oben genannte erste bzw. zweite Bereich kann dabei eine Fläche von mindestens 0.3 $m^2$ überdecken. Mit diesen Maßen ist der Feuerwiderstandskörper besonders gut für ein Brandschutzbauteil geeignet. Mögliche Ausführungsformen umfassen polygone Platten, insbesondere rechteckige Platten, z.B. mit einem Seitenverhältnis von höchstens 3:1, bevorzugt von höchstens 2:1. Alternativ können mögliche Ausführungsformen auch kreisrunde Platten umfassen. Die Platten können in Ausführungsformen Öffnungen aufweisen, insbesondere sogar die Platte durchstoßende Öffnungen.

Gemäß einem bevorzugten Aspekt hat der Feuerwiderstandskörper ein Volumen von mindestens 0,001 $m^3$, bevorzugt von mindestens 0,01 $m^3$, und besonders bevorzugt von mindestens 0,05 $m^3$. Insbesondere kann der erste Bereich ein Volumen von mindestens 0,001 $m^3$ aufweisen.

Gemäß einem bevorzugten Aspekt hat der Feuerwiderstandskörper eine Längsausdehnung von mindestens 1 m, bevorzugt von mindestens 2 m. Insbesondere kann der erste Bereich eine Längsausdehnung von mindestens 60 cm aufweisen.

g. Thermische Leitfähigkeit

Der Feuerwiderstandskörper kann eine geringe thermische Leitfähigkeit aufweisen. Dies ist etwa durch eine hohe Porosität ermöglicht. Diese geringe thermische Leitfähigkeit kann einen Beitrag zur Feuerfestigkeit leisten, da dadurch das Verdunsten von Wasser aus dem Körperinneren weiter verzögert wird und der Übertragung von Wärme von einer Seite des Feuerwiderstandskörpers (etwa der Brandseite) zu einer anderen Seite (etwa der abgeschirmten Seite) entgegengewirkt wird.

In Ausführungsformen ist die thermische Leitfähigkeit bei Raumtemperatur geringer als 275 mW/mK für Dichten unter 600 kg/m$^3$ und unter 100 mW/mK für Dichten unter 200 kg/m$^3$.

h. Biegefestigkeit

Der Feuerwiderstandskörper kann eine hohe Biegefestigkeit aufweisen. Insbesondere kann der Feuerwiderstandskörper eine hohe Biegefestigkeit bei gleichzeitig hoher Porosität bzw. geringer Dichte aufweisen.

Die Biegebruchfestigkeit wurde im 3-Punkte Verfahren ermittelt. Als Lager dienten Stahlrollen von 28 mm Durchmesser, die dank Kugellagerung leicht um ihre Achse drehen. Die Kräfte wirken also linienförmig entlang der Probenbreite. Der Abstand zwischen den Auflagern betrug 100 mm. Mittels einer identischen dritten Rolle wurde mittig zwischen den Auflagern über einen Lineartisch und ein Kraftmessgerät eine Kraft auf die Probe aufgebracht. Der Forttrieb des Lineartisches betrug 0.02 mm/s.

Zur Ermittlung der Biegebruchfestigkeit von erfindungsgemässen Feuerwiderstandskörpern auf Basis von α-Gips wurden aus Bauteilen quaderförmige Prüfkörper mit einer Länge von 120, einer Breite von 40 und einer Höhe von 25 mm herausgeschnitten. Alle angegebenen Werte sind über fünf Messungen gemittelt. Die Biegebruchfestigkeit von erfindungsgemässem Gipsschaum mit einer Dichte von 264 kg/m3 beträgt 335 ± 16 kPa, diejenige von erfindungsgemässem Gipsschaum mit einer Dichte von 117 kg/m3 beträgt 78 ± 2 kPa. Innerhalb des Dichtebereichs von 117 - 264 kg/m3 nimmt die Biegebruchfestigkeit linear mit der Dichte zu.

Die Biegebruchfestigkeit des erfindungsgemässen Gipsschaums beträgt bei einer Dichte von 264 kg/m3 280 kPa, bevorzugt 320 kPa, besonders bevorzugt 365 kPa. Bei einer Dichte von 117 kg/m3 beträgt die Biegebruchfestigkeit 65 kPa, bevorzugt 75 kPa, besonders bevorzugt 85 kPa. Die Werte gelten für erfindungsgemässen Gipsschaum, der aus handelsüblichem α-Gips hergestellt worden ist, keine Fasern enthält und mit keinen anderweitigen Verstärkungen wie zum Beispiel einer Kartonschicht an der Probenoberfläche versehen ist.

## VII. Weitere Aspekte und Beispiele

Im Folgenden werden einige spezielle Anwendungen und dafür vorteilhafte Aspekte erläutert. Dabei werden auch Bauteile mit dem erfindungsgemäßen Feuerwiderstandskörper beschrieben, bei denen der Feuerwiderstandskörper besondere Vorteile bietet. Die Aufzählung ist lediglich beispielhaft, und der Feuerwiderstandskörper kann auch bei anderen Bauteilen eingesetzt werden.

Hierbei werden diese Anwendungen bevorzugt mit dem oben beschriebenen Verfahren hergestellt. Entsprechend haben die im folgenden beschriebenen Feuerwiderstandskörper vorzugsweise die oben beschriebenen Eigenschaften, z.B. hinsichtlich der Dichte, der Makroporen, der Homogenität, der Feuerwiderstandsklasse, der enthaltenen Additive (z.B. enthaltene Fasern zur mechanischen Verstärkung). Zur Vermeidung von Wiederholungen werden diese und die übrigen hierin beschriebenen Eigenschaften des

Feuerwiderstandskörpers nicht bei jedem der Beispiele erneut erwähnt.

Ebenso können Eigenschaften der verschiedenen Beispiele untereinander kombiniert werden. Beispielsweise kann jedes der in den Abschnitten b-i beschriebenen Beispiele die Zonierung von Beispiel a aufweisen, usw. Auch mehr als zwei Beispiele können miteinander kombiniert werden.

## a. Zonierung des Feuerwiderstandskörpers

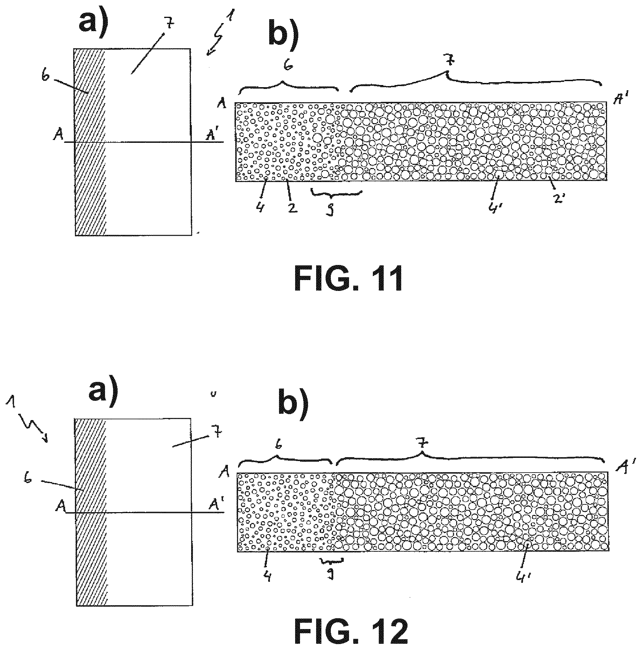

Figur 11a zeigt einen Feuerwiderstandskörper 1, der in zwei Zonen 6, 7 unterteilt ist. Die Figur 11b zeigt einen Querschnitt durch die Ebene A-A' der Figur 11a. In einer ersten Zone 6 ist die Dichte des Feuerwiderstandskörpers höher als in einer zweiten Zone 7. Dadurch kann die Brandschutzbeständigkeit individuell eingestellt werden. In Figur 11a, 11b ist etwa Zone 6 einer höheren Brandbelastung ausgesetzt und kann entsprechend feuerresistenter ausgestaltet sein, wogegen Zone 7 einer weniger hohen Brandbelastung ausgesetzt ist und entsprechend leichter ausgestaltet sein kann.

Der Feuerwiderstandskörper 1 hat somit eine erste Zone 6 mit einer relativ höheren Dichte und eine zweite Zone 7 mit einer relativ geringeren Dichte. Auch die Mikrostruktur der beiden Zonen unterscheidet sich. Beispielsweise ist der Mediandurchmesser der Makroporen 4 der ersten Zone 6 kleiner als der Mediandurchmesser der Makroporen 4' der zweiten Zone 7. Die Mikroporen der Zonen 6, 7 können dagegen im Wesentlichen unverändert sein. Es ist anzumerken, dass die Grössenverhältnisse in Figur 11a, 11b lediglich schematisch dargestellt und nicht den entsprechend realen Verhältnissen nachgebildet sein müssen.

Der Übergang zwischen den Zonen 6,7 ist graduell. Das bedeutet, dass die Grenze von der dichteren Zone 6 zur weniger dichten Zone 7 durch einen Übergangsbereich (Überlappungszone) 9 gebildet wird, bei dem die Merkmale der beiden Zonen ineinander übergehen. Dies kann sich dadurch äussern, dass die Dichte in diesem Übergangsbereich 9 graduell hin zur weniger dichten Zone 7 abnimmt, respektive die mittlere Porengrösse der Makroporen 4 graduell zunimmt.

Der Feuerwiderstandskörper 1 der Figur 11 ist ein monolithischer Feuerwiderstandskörper 1, das heisst er ist vollständig einstückig ausgebildet, und die Materialien der einzelnen Zonen 6, 7 sind stoffschlüssig miteinander verbunden bis hin zu einer gewissen Überlappung.

Die Herstellung des zonierten Feuerwiderstandskörper 1, wie er in Figur 11 dargestellt ist, kann wie folgt durchgeführt werden: Eine erste schäumbare Wasser-Gips-Dispersion (z.B. nach irgendeinem hierin beschriebenen Ausführungsbeispiel) wird hergestellt und mit Beginn der Schaumbildung in eine erste Zone einer Hohlform abgegossen, die der in Figur 11a, 11b dargestellten Zone 6 entspricht. Gleichzeitig wird eine zweite schäumbare Dispersion (z.B. nach irgendeinem weiteren hierin beschriebenen Ausführungsbeispiel) hergestellt und mit Beginn der Schaumbildung in eine zweite Zone der Hohlform abgegossen, die den restlichen Bereich der Hohlform darstellt und die der in Figur 11a, 11b dargestellten Zone 7 entspricht. Da der Schaum relativ steif ist, bleibt die Vermischung der beiden Schäume auf einen Übergangsbereich zwischen den beiden Zonen beschränkt, der in Figur 11a, 11b dem Übergangsbereich 9 entspricht. Die übrigen Schritte des Herstellungsverfahrens (Abbinden, Trocknen) unterscheiden sich nicht von dem oben beschriebenen allgemeinen Verfahren.

Die beiden Zonen 6 und 7 mit klar definierten Eigenschaften können aufgrund der hervorragenden Stabilität des erhaltenen Nassschaums erhalten werden, der ein Abgiessen bzw. Aufschäumen in einer gemeinsamen Gussform erlaubt. Dank der Stabilität des Schaums kann die Wasser-Gips-Dispersion bereits vor, während oder nach der Schaumbildung abgegossen werden.

Wenn die beiden Zonen 6, 7 aus verschiedenen Zusammensetzungen erhalten wurden (z.B. Zone 6 gemäß dem obigen Ausführungsbeispiel 3, Zone 7 gemäß dem obigen Ausführungsbeispiel 1) oder auf verschiedene Weise aufgeschäumt wurden, unterscheidet sich die chemische Zusammensetzung des fertigen Feuerwiderstandskörpers 1 zwischen seiner ersten Zone 6 und seiner zweiten Zone 7, z.B. in der Menge des enthaltenen Braunsteins und/oder anderer Stoffe.

In den Figuren 12a, 12b wird ein weiterer erfindungsgemässer Feuerwiderstandskörper 1 gezeigt, bei dem die Überlappungszone 9 vergleichsweise schärfer ausfällt. Ansonsten gilt die Beschreibung von Figur 11a, 11b entsprechend. In Figur 12 ist die Überlappungszone 9 so klein, dass eine Grenzfläche definiert werden kann, die die Zonen 6 und 7 voneinander abgrenzt. Die Zonen 6 und 7 sind über die Grenzfläche hinweg stoffschlüssig miteinander verbunden und bilden somit einen Monolithen. Vorzugsweise ist die Breite der Überlappungszone 9 kleiner als 1 cm.

Der in Figur 12a, 12b dargestellte Feuerwiderstandskörper wurde durch eine Variation des oben beschriebenen Herstellungsverfahrens hergestellt: Gemäß dieser Variation werden die beiden Wasser-Gips-Dispersionen getrennt voneinander abgegossen - entweder gleichzeitig oder nacheinander - und optional bereits teilweise, vorzugsweise jedoch noch nicht vollständig, abgebunden. Sodann werden die Teilstücke zusammengefügt und, wenn nötig, fertig abgebunden und getrocknet.

Beispielsweise können beide Wasser-Gips-Dispersionen in zwei Bereiche einer Hohlform gegossen werden, die durch eine Gussbarriere voneinander getrennt sind. Nach einer vorgegebenen Zeit von z.B. 15 min nach Abguss wird sodann die Gussbarriere entfernt, wodurch die Teilstücke zusammengefügt werden. Aus den Teilstücken ergeben sich die Zonen 6,7 des fertigen Feuerwiderstandskörpers. Während des übrigen Abbinde- und Trocknungsvorgangs können die Teilstücke zu einem monolithischen Feuerwiderstandskörper verbunden werden. Je nachdem, wie lange das Zeitintervall zwischen dem zweiten Giessen und der Entfernung der Gussbarriere ist, findet eine mehr oder weniger grosse Durchmischung statt, wodurch sich mit die Breite der Übergangszone 9 präzise kontrollieren lässt.

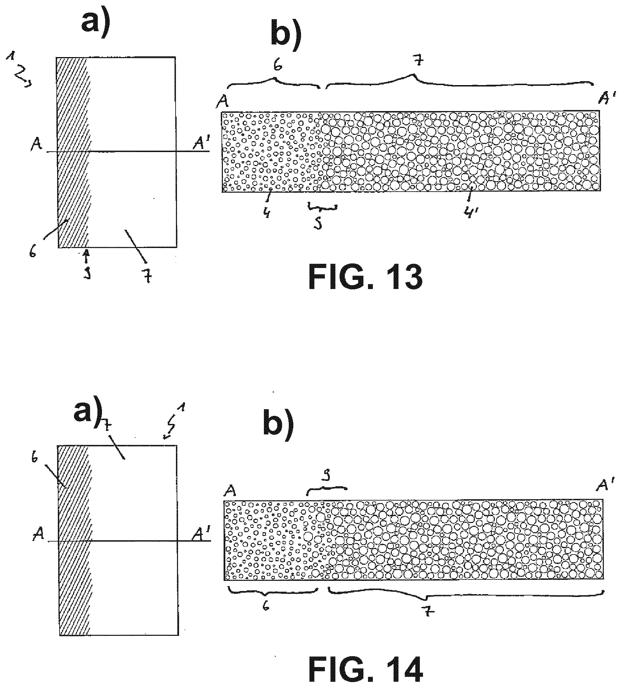

In Figur 13a, 13b wird ein weiterer Feuerwiderstandskörper gezeigt, der dem in Figur 12a, 12b dargestellten Feuerwiderstandskörper entspricht, bei dem jedoch die Zonengrenze zwischen den Zonen 6, 7 in ihrer Längenausdehnung nicht gerade, sondern gewellt ausgebildet ist. Durch diese unregelmässige gewellte Übergangslinie kann der Zusammenhalt zwischen den Zonen noch weiter verbessert werden und die Stabilität des Feuerwiderstandskörpers erhöht werden.

Die Feuerwiderstandskörper mit nicht-gerader oder unregelmäßiger Zonengrenze von Figur 13a, 13b können analog zum in Bezug auf Figur 12a, 12b beschriebenen Verfahren hergestellt werden, indem eine nicht-gerade Gussbarriere verwendet wird.

Der in Figur 14a, 14b gezeigte Feuerwiderstandskörper entspricht in analoger Weise dem in Figur 11a, 11b dargestellten Feuerwiderstandskörper, abgesehen von der gewellten Zonengrenze. Die Feuerwiderstandskörper mit nicht-gerader oder unregelmäßiger Zonengrenze von Figur 13a, 13b können analog zum in Bezug auf Figur 11a, 11b beschriebenen Verfahren hergestellt werden, indem etwa die Menge der den jeweiligen Zonen zugegebenen Wasser-Gips-Dispersion ortsabhängig variiert wird, indem die Position der jeweiligen Schaumzuführvorrichtungen wellenartig verändert wird, indem die abgegossenen Wasser-Gips-Dispersionen vor dem Abbinden lokal vermischt werden, etwa mittels einer Rührvorrichtung, oder irgendeine Kombination daraus.

Alle gezeigten Feuerwiderstandskörper können mit einer erfindungsgemässen Zonierung 6,7 ausgestattet werden. Die Anzahl der Zonen ist dabei nicht auf zwei beschränkt, sondern der Feuerwiderstandskörper kann 3, 4, 5, 6 oder mehr Zonen aufweisen.

Durch die Zonierung des Feuerwiderstandskörpers in Zonen unterschiedlicher Mikrostruktur kann der Feuerwiderstandskörper so gestaltet werden, dass er in verschiedenen Bereichen des Feuerwiderstandskörpers unterschiedlichen Anforderungen genügen kann. In einem konkreten Beispiel kann ein Feuerwiderstandskörper, der als Platte ausgestaltet ist, um als Brandschutzeinlage einer Tür zu dienen, mit einer dichteren Zone und einer weniger dichten Zone ausgestaltet sein. Somit lässt sich Material sparen und die Tür insgesamt leichter bauen, ohne an Feuerbeständigkeit einzubüßen.

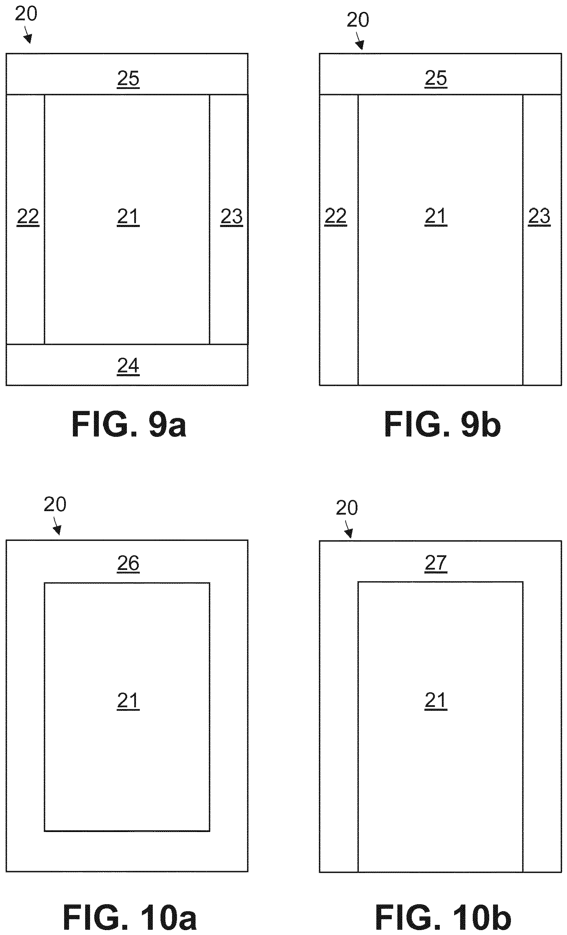

Verschiedene Ausführungsformen dieses Beispiels sind in Figur 9a,b und 10a,b illustriert. In Figur 9a ist eine Feuerwiderstandskörper als Brandschutzeinlage eines Brandschutztürblatts gemäß einem ersten Beispiel gezeigt. Der Feuerwiderstandskörper hat einen jeweiligen Randabschnitt 22-25 an jeder seiner vier Seiten (d.h. der Randabschnitt erstreckt sich bis zu der jeweiligen Seite hin), und einen Restabschnitt 21, der in dem mittleren Bereich des Feuerwiderstandskörpers angeordnet ist und durch die Randabschnitte von dem Rand beabstandet ist. Die Randabschnitte haben eine höhere Dichte entsprechend der ersten Zone 6 (siehe etwa Figur 11-14), wogegen der Restabschnitt eine geringere Dichte entsprechend der zweiten Zone 7 hat.

Zusätzlich können sich optional auch die Randabschnitte 22-25 bezüglich ihrer Dichte voneinander unterscheiden, wobei jeder der Randabschnitte eine höhere Dichte als der Restabschnitt 21 hat. Beispielsweise kann die Dichte der Randabschnitte 22-25 mit der vertikalen Höhe in eingebautem Zustand zunehmen, so dass der Randabschnitt 25 die höchste Dichte und der Randabschnitt 24 die niedrigste Dichte unter den Randabschnitten hat, und die Randabschnitte 22, 23 eine jeweilige Dichte dazwischen haben. Die Dichte der Randabschnitte 22, 23 kann gleich oder voneinander verschieden sein. So ist jedem Rand- bzw. Restabschnitt jeweils genau eine Zone konstanter Dichte zugeordnet.

Figur 9b, 10a und 10b zeigen weitere Varianten für eine Brandschutzeinlage. In Figur 9b ist der Randabschnitt 24 im Vergleich zu Figur 9a weggelassen, und sein Raum ist durch den Restabschnitt 21 (und optional durch Teile der übrigen Randbereiche 22, 23) eingenommen.

In Figur 10a hat der Feuerwiderstandskörper nur zwei Abschnitte unterschiedlicher Dichte, nämlich einen umlaufenden Randabschnitt 26 und den Restabschnitt 21. Auch hier ist die Dichte des Randabschnitts 26 höher als die des Restabschnitts 21. In Figur 10b erstreckt sich der Randabschnitt 26 im Vergleich zur Figur 10a nur über drei der Ränder des Feuerwiderstandskörpers, und der Restabschnitt erstreckt sich bis zu der vertikal niedrigsten Kante des Feuerwiderstandskörpers.

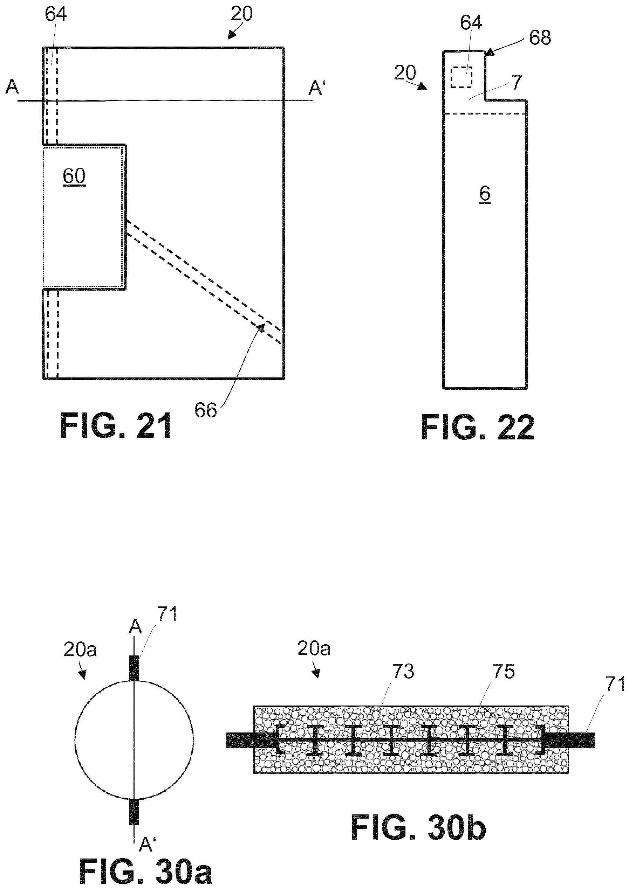

Die Beispiele der Figur 9-10 sind in Bezug auf eine Brandschutztür beispielhaft dargestellt worden, können aber genauso auch für andere Brandschutzelemente verwendet werden, etwa für Wandverkleidungen, Brandschutzklappen (siehe unten) usw. Eine rechteckige, flächenmäßige Form des Feuerwiderstandskörpers ist zwar häufig die vorzuziehende Form, alternativ kann die beschriebene Zonierung jedoch auch für Feuerwiderstandskörper mit anderem Profil anwendbar, etwa für einen kreisartigen Feuerwiderstandskörper, wie er etwa in Figur 30a, 30b dargestellt ist. Beispielsweise können in diesem Fall analog zur Figur 10a ein umlaufender Randabschnitt hoher Dichte und ein mittiger Restabschnitt niedriger Dichte vorgesehen sein.

Die Zonierung des in Figur 9a-10b gezeigten Feuerwiderstandskörpers wurde hierin in Bezug auf einen monolithischen Feuerwiderstandskörper beschrieben. Allgemeiner kann die Zonierung aber auch durch einen Bausatz erreicht werden, der verschiedene Feuerwiderstandskörper jeweils unterschiedlicher (Durchschnitts-)Dichte enthält. Die verschiedenen Feuerwiderstandskörper können in diesem Fall mit einer Nut- und Feder-Verbindung zusammengefügt sein. In dieser Variante gilt das oben für den Feuerwiderstandskörper Gesagte entsprechend für den gesamten, mehrere Feuerwiderstandskörper umfassenden Bausatz.

Im Folgenden werden allgemeine Aspekte die Zonierung betreffend erläutert.

Gemäß einem Aspekt hat ein Feuerwiderstandskörper eine Feuerwiderstandsklasse von zumindest F30, und weist (mindestens) eine erste Zone (Bereich) und eine zweite Zone (Bereich) auf. Die erste Zone und die zweite Zone unterscheiden sich voneinander im Hinblick auf zumindest einen Parameter. Der Parameter kann ausgewählt sein aus der folgenden Liste: Dichte, Mediandurchmesser (oder Durchschnittsdurchmesser) der Makroporen, Verteilbreite (oder Varianz) der Porengrössenverteilung der Makroporen, chemische Zusammensetzung. Wie auch sonst hierin kann statt des Mediandurchmessers der Durchschnittsdurchmesser herangezogen werden, und / oder kann statt der Verteilbreite die Varianz herangezogen werden.

Darüber hinaus kann der Feuerwiderstandskörper auch noch weitere Zonen aufweisen, z.B. eine dritte Zone, eine vierte Zone, usw. Die Zonen werden hierin teilweise auch als Bereiche bezeichnet und können Abschnitte definieren, denen dann die Eigenschaften der jeweiligen Zone zugeschrieben werden. Die Begriffe "Bereich" und "Zone" können, sofern nicht anders beschrieben, gegeneinander ausgetauscht werden.

Gemäß einem bevorzugten Aspekt können die hierin beschriebenen Aspekte und Ausführungsformen des Feuerwiderstandskörpers (oder seines ersten Bereiches bzw. seiner ersten Zone) auf jede beliebige der Zonen des Feuerwiderstandskörpers angewendet werden. Dabei können Paare von Zonen in Bezug auf jede dieser Aspekte gleiche oder unterschiedliche Eigenschaften aufweisen.

Gemäß einem Aspekt unterscheidet sich zumindest ein Paar der Zonen, z.B. eine erste Zone von einer zweiten Zone, voneinander im Hinblick auf mindestens einen Parameter, z.B. auf zumindest ein Element ausgewählt aus der Gruppe bestehend aus Dichte, durchschnittliche Porengröße (Durchmesser bzw. Mediandurchmesser) der Makroporen, Porosität, Porengrössenverteilung, chemische Zusammensetzung, usw. Besonders bevorzugt sind die Zonen in ihrer Dichte und/oder dem Durchmesser ihrer Makroporen voneinander verschieden. Der Unterschied zwischen dem entsprechenden Parameter der ersten Zone und der zweiten Zone kann mehr als 10%, mehr als 20% oder sogar mehr als 30% betragen, jeweils bezogen auf den grösseren der beiden Werte. Andere Parameter können über Zonengrenzen hinweg für den gesamten Feuerwiderstandskörper konstant gelten.

Gemäß einem weiteren Aspekt weist zumindest ein Paar der Zonen, z.B. eine erste Zone und eine zweite Zone, ähnliche chemische Zusammensetzung auf, unterscheidet sich jedoch voneinander im Hinblick auf zumindest ein Element ausgewählt aus der Gruppe bestehend aus Dichte, durchschnittliche Porengröße (Durchmesser bzw. Mediandurchmesser) der Makroporen, Porosität und Porengrössenverteilung um mehr als 5%, insbesondere mehr als 10%, mehr als 20% oder sogar mehr als 30%, jeweils bezogen auf den Größeren der beiden Werte.

Ähnliche chemische Zusammensetzungen einer ersten und einer zweiten Zone (und gegebenenfalls einer oder mehrerer weiterer Zonen) sind definiert als Zusammensetzungen, bei denen mindestens eines, bevorzugt mehrere, und insbesondere alle der nachstehenden Merkmale erfüllt sind:

(i) die Gesamtmenge der anorganischen Bestandteile in den Zusammensetzungen beträgt jeweils mindestens 90%,

(ii) die Gesamtmenge der anorganischen Bestandteile in den Zusammensetzungen variiert um weniger als 5%, bevorzugt weniger als 3%, bezogen auf den Größten der Werte;

(iii) die relativen Mengen der individuellen anorganischen Bestandteile in den Zusammensetzungen variieren jeweils um weniger als 5%, bevorzugt weniger als 3%, bezogen auf den Größten der Werte,

(iv) keine der Zusammensetzungen enthält anorganische Bestandteile in einer Gesamtmenge von mehr als 7%, bevorzugt von mehr als 5%, die in der/den anderen Zusammensetzung(en) nicht vorhanden sind.

Gemäß einer Ausführungsform unterscheiden sich derartige ähnliche chemische Zusammensetzungen von verschiedenen Zonen durch die Menge an Hydrophobisierungs-Additiv. Beispielsweise beträgt die Menge an Hydrophobisierungs-Additiv in einer zweiten Zone mehr als 110%, insbesondere mehr als 120% oder sogar mehr als 130%, bezogen auf die Menge in einer ersten Zone. Die Menge an Hydrophobisierungs-Additiv in einer dritten Zone kann beispielsweise mehr als 110%, insbesondere mehr als 120% oder sogar mehr als 130%, bezogen auf die Menge in der zweiten Zone, betragen.

Gemäß einem besonderen Aspekt unterscheiden sich die chemischen Zusammensetzungen zumindest einer ersten Zone und einer zweiten Zone nur in Bezug auf die Menge an Hydrophobisierungs-Additiv, wobei sich die Zonen des Feuerwiderstandskörpers im Hinblick auf Dichte und/oder Mediandurchmesser der Makroporen um mehr als 10%, mehr als 20% oder sogar mehr als 30%, jeweils bezogen auf den Größeren der beiden Werte, unterscheiden.

Gemäß einem Aspekt unterscheiden sich mindestens zwei oder sogar drei Zonenpaare voneinander.

Gemäß einem Aspekt hat der zumindest eine Parameter innerhalb der ersten Zone (6) und innerhalb der zweiten Zone (7) jeweils einen konstanten Wert, innerhalb eines Toleranzbereichs von +/- 5% um diesen konstanten Wert. Dies kann gegebenenfalls auch für noch weitere Zonen (dritte, vierte, fünfte Zone) gelten.

Gemäß einem weiteren Aspekt überdeckt die erste Zone und/oder die zweite Zone jeweils eine Fläche von mindestens 40 cm$^2$, vorzugsweise von mindestens 80 cm$^2$. Gemäß einem weiteren Aspekt überdeckt die erste Zone und/oder die zweite Zone jeweils eine Fläche von mindestens 20% der Fläche des Feuerwiderstandskörpers, vorzugsweise von mindestens 30% oder sogar von mindestens 40%.

Gemäß einem weiteren Aspekt hat die Dichte des Feuerwiderstandskörper in der ersten Zone eine Verteilbreite von weniger als 5%, bevorzugt weniger als 3%, besonders bevorzugt weniger als 2%, wobei die Dichte als mittlere Dichte in regulären Volumina von 50 ml definiert ist. Gemäß einem weiteren Aspekt beträgt die Dichte in zumindest einer Zone und bevorzugt in allen Zonen weniger als 400 kg/m$^3$, bevorzugt weniger als 350 kg/m$^3$, und besonders bevorzugt weniger als 300 kg/m . Gemäß einem weiteren Aspekt kann die Dichte mindestens 80 kg/m$^3$ oder mindestens 100 kg/m$^3$ betragen.

Gemäß einem Aspekt ist der Feuerwiderstandskörper (über Zonengrenzen hinweg) monolithisch ausgebildet. Anders gesagt, sind alle Zonen oder Bereiche des Feuerwiderstandskörpers stoffschlüssig miteinander verbunden. Dies kann dadurch erreicht werden, dass der Feuerwiderstandskörper als Ganzes abgebunden wurde. Beispielsweise können die den jeweiligen Zonen zugeordneten Nassschäume gleichzeitig gegossen werden. Dies kann zu einer relativ grossen Übergangszone 9 führen, und bei entsprechendem Einbringen oder Verrühren der Nassschäume auch zu einer nicht geraden Ausprägung der Zonengrenze. In diesem Beispiel härten die Zonen ungefähr gleichzeitig aus.

In einem weiteren Beispiel kann zunächst der einer ersten Zonen zugeordnete erste Nassschaum gegossen und zu einem ersten Körper abgebunden, aber noch nicht vollständig getrocknet werden. Sodann wird der einer zweiten Zone zugeordnete zweite Nassschaum gegossen. Der zweite Nassschaum wird entweder gesondert oder bereits in Kontakt mit dem ersten Körper abgebunden, um einen zweiten Körper zu erhalten. In beiden Fällen werden die beiden Körper gemeinsam getrocknet. Dies stellt einen Stoffschluss zwischen den beiden Körpern sicher, die dann gemeinsam den Feuerwiderstandskörper bilden.

Der Stoffschluss äußert sich in einer durchgehenden Struktur von Gipskristallen und von diesen gebildeten Mikroporen. Gemäß einem bevorzugten Aspekt durchdringt das Netzwerk von Mikroporen den Feuerwiderstandskörper somit vollständig, auch über etwaige Zonengrenzen hinweg.

Gemäß einem Aspekt umfassen alle Zonen das gleiche Gipsmaterial, bevorzugt in einer Konzentration von mehr als 90 % Trockengewicht. Gemäß einem Aspekt weisen alle Zonen Mikroporen mit im Wesentlichen gleichem mittlerem Durchmesser bzw. Mediandurchmesser (d.h. in einem Toleranzbereich von 5%) auf. Gemäß einem Aspekt sind alle im Feuerwiderstandskörper vorkommenden Zonen miteinander stoffschlüssig verbunden.

Gemäß einem weiteren Aspekt sind die erste Zone (6) und die zweite Zone (7) miteinander stoffschlüssig verbunden. Ist der erfindungsgemässe Feuerwiderstandskörper einstückig, das heisst monolithisch aufgebaut, verfügt er über geringere Schwachstellen, die später zu Brüchen oder Sprüngen des Feuerwiderstandskörpers führen können. Selbst bei einer komplexen Zonierung sind die einzelnen Zonen mit ihren Materialien integral miteinander verbunden. Durch die mehr oder weniger scharfen, aber monolithischen Übergänge ist gewährleistet, dass auch unterschiedliche Belastungen an den Übergangszonen aufgefangen werden.

Gemäß einem Aspekt umfasst der Feuerwiderstandskörper einen kontinuierlichen Übergangsbereich zwischen den jeweiligen Zonen. Gemäß einem Aspekt hat der Übergangsbereich eine Breite von 6 cm, bevorzugt von 5 cm, besonders bevorzugt von 2 cm. Der Übergangsbereich kann Eigenschaften der Mikrostrukturen aller angrenzenden Zonen aufweisen oder als Gradient zwischen den angrenzenden Zonen verlaufende Parameter haben.

Gemäß einem anderen Aspekt umfasst der Feuerwiderstandskörper eine scharfe Trennfläche zwischen den jeweiligen Zonen, mit einer Breite eines etwaigen Übergangsbereichs um die Trennfläche von weniger als 10 mm, bevorzugt weniger als 5 mm, besonders bevorzugt weniger als 2 mm. Die Trennfläche kann eben oder uneben, z.B. gewellt, sein.

Gemäß einem weiteren Aspekt, hat die erste Zone (6) eine höhere Dichte und die zweite Zone (7) eine niedrigere Dichte relativ zueinander, und die erste Zone ist in einem Randabschnitt (22, 23, 24, 25, 26, 27) des Feuerwiderstandskörpers angeordnet. Die zweite Zone kann dann in einem vom Rand beabstandeten (Rest-)abschnitt des Feuerwiderstandskörpers angeordnet sein. Alternativ kann auch umgekehrt die die zweite Zone eine höhere Dichte und die erste Zone eine niedrigere Dichte relativ zueinander haben, und die zweite Zone ist in einem Randabschnitt (22, 23, 24, 25, 26, 27) des Feuerwiderstandskörpers angeordnet. Die erste Zone kann dann in einem vom Rand beabstandeten (Rest-)abschnitt des Feuerwiderstandskörpers angeordnet sein.

Gemäß einem weiteren Aspekt wird ein Verfahren zur Herstellung eines Feuerwiderstandskörpers vorgeschlagen. Das Verfahren umfasst: Herstellen einer ersten Zusammensetzung, welche eine erste Wasser-Gips-Dispersion umfasst; Herstellen einer zweiten Zusammensetzung, welche eine zweite Wasser-Gips-Dispersion umfasst; Bilden eines ersten Nassschaums durch Aufschäumen der ersten Zusammensetzung; Bilden eines zweiten Nassschaums durch Aufschäumen der zweiten Zusammensetzung; Abbinden des ersten und zweiten Nassschaums, wobei der erste Nassschaum eine erste Zone (6) des Feuerwiderstandskörpers bildet und der zweite Nassschaum eine zweite Zone (7) des Feuerwiderstandskörpers bildet; und Trocknen des Feuerwiderstandskörpers, wobei die erste Zone und die zweite Zone einander kontaktieren und/oder stoffschlüssig miteinander verbunden sind bzw. werden.

Vorzugsweise umfasst das Verfahren weiter das Stabilisieren von Luftbläschen des Nassschaums durch die zumindest teilweise hydrophobisierten Partikel, und/oder weitere der etwa in Abschnitt III genannten Verfahrensschritte.

Der erste und der zweite Nassschaum unterscheiden gemäß einem Aspekt sich voneinander im Hinblick auf zumindest eine der folgenden Eigenschaften: Zusammensetzung, Bedingungen beim Aufschäumen, insbesondere Intensität des Aufschäumens. Entsprechend unterscheiden sich auch die erste Zone und die zweite Zone voneinander im Hinblick auf zumindest einen der folgenden Parameter: Dichte, Mediandurchmesser der Makroporen, Verteilbreite einer Porengrössenverteilung, chemische Zusammensetzung.

Gemäß einem weiteren Aspekt kontaktieren der erste und der zweite Nassschaum einander bereits bei dem Abbinden. Demnach wird ein kontinuierlicher Übergangsbereich zwischen der ersten und der zweiten Zone dort gebildet, wo der erste und der zweite Nassschaum einander kontaktieren.

Bei dem Herstellverfahren gemäß einem Aspekt ist der erste Bereich vor dem Berühren mit dem zweiten Bereich zumindest noch nicht vollständig abgebunden oder ausgehärtet und/oder wurde zumindest noch nicht getrocknet. Auf diese Weise lässt sich eine dauerhafte Verbindung an der Grenzfläche herstellen. Bei weiteren typischen Herstellverfahren erfolgen das erste Giessen des ersten Bereichs und das zweite Giessen des zweiten Bereichs gleichzeitig oder unmittelbar aufeinanderfolgend. Dies führt typischerweise zu monolithischen Feuerwiderstandskörpern.

Gemäß einem weiteren Aspekt wird vor dem ersten Giessen und vor dem zweiten Giessen abgewartet, bis die jeweilige Zusammensetzung ein relatives Mindestvolumen Poren gebildet hat und/oder die Dichte der jeweiligen Zusammensetzung unter einen Schwellenwert gesunken ist. Bei typischen Herstellverfahren erfolgt das Giessen in eine Gussform, insbesondere eine Plattenform, oder in einen Rahmen eines Bauteils für das Bauwesen. Bei typischen Herstellverfahren wird während des Giessens in den ersten Bereich ein Einsatzkörper oder ein Profil eingegossen. Typischerweise ist bei Ausführungsformen der erste Bereich in einem Randbereich des Feuerwiderstandskörpers angeordnet.

Gemäß einem weiteren Aspekt wird vor dem Giessen der ersten Zone und vor dem Giessen der zweiten Zone abgewartet, bis das Aufschäumen der jeweiligen Zusammensetzung zumindest begonnen hat (z.B. bis das Aufschäumen der jeweiligen Zusammensetzung ein vorgegebenes Mindestvolumen an Poren gebildet hat und/oder die Dichte der jeweiligen Zusammensetzung unter einen vorgegebenen Schwellenwert gesunken ist).

Gemäß einem weiteren Aspekt erfolgt das Giessen in eine Gussform, insbesondere eine Plattenform, oder in einen Rahmen eines Bauteils für das Bauwesen.

Gemäß einem weiteren Aspekt umfassen die erste und die zweite Zusammensetzung jeweils zumindest partiell hydrophobisierte Partikel. Jeweilige Luftbläschen des ersten und des zweiten Nassschaums werden dann durch die jeweils zumindest partiell hydrophoben Partikel stabilisiert, indem die Partikel sich an den Wasser-Luft-Grenzflächen anlagern, welche die Wände der Luftbläschen bilden. Die stabilisierten Luftbläschen bilden dann Makroporen des Feuerwiderstandskörpers. Mögliche Eigenschaften der resultierenden Makroporen sind an entsprechender Stelle beschrieben.

b. **Nut und Feder**

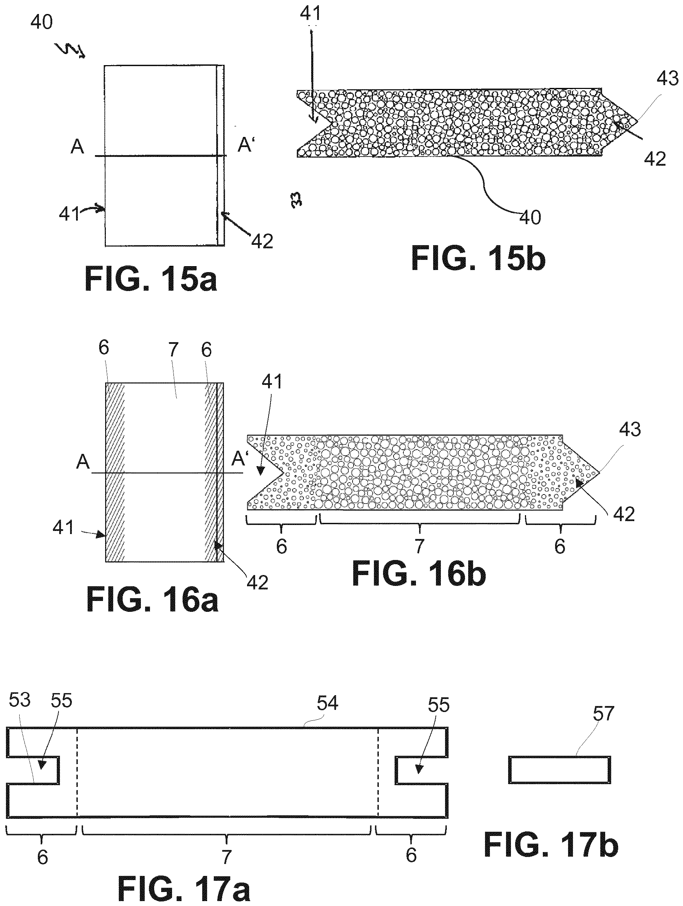

Ein weiterer Aspekt der Erfindung betrifft einen Feuerwiderstandskörper, welcher zumindest eine Nut aufweist. Figur 15a und Figur 15b zeigen eine schematische Seitenansicht und einen Querschnitt entlang einer Achse A-A' eines solchen Feuerwiderstandskörpers 40 gemäß einem Ausführungsbeispiel. Der Feuerwiderstandskörper 40 der Figur 15a und Figur 15b ist plattenmäßig und weist an gegenüberliegenden Kanten eine Nut 41 und eine Feder 42 auf. Die Feder 42 ist im Querschnitt dreieckig, so dass eine Spitze 43 an der Feder 42 entsteht. Dies erleichtert das Einführen. Der Feuerwiderstandskörper 40 weist über seinen Querschnitt eine im Wesentlichen gleichmäßige Dichte auf. Dies kann die Herstellung erleichtern.

Eine weitere bevorzugte Ausführungsform, die in Figur 16a und 16b dargestellt ist, weist im Bereich der Nut und der Feder jeweils eine Zone (Randabschnitt) 6 mit einer größeren Dichte auf als in einer Zone (Restabschnitt) 7, die zwischen den beiden Kanten mit der Nut und der Feder liegt. Auf diese Weise kann ein leichteres Gewicht des Feuerwiderstandskörpers erreicht werden, im Vergleich zu einem Feuerwiderstandskörper gleicher Feuerfestigkeit, welcher im gesamten Querschnitt die höhere Dichte aufweist. Außerdem wird erreicht, dass im Bereich der Spund- oder Nut-Feder-Verbindung kein schwächerer Brandschutz als in anderen Bereichen vorhanden ist und auch dass die mechanische Stabilität der Verbindung gewährleistet ist.

Weitere Ausführungsformen weisen eine Feder mit einem rechteckigen Querschnitt oder eine Feder mit einem runden, bspw. halbkreisförmigen Querschnitt auf. Rechteckige Querschnitte sind leicht zu fertigen. Bei Ausführungsformen mit einem runden Querschnitt der Feder können Spannungsspitzen oder Singularitäten vermieden werden. Dies kann helfen, Schwindrisse beim Abbinden zu vermeiden.

Figur 17a und Figur 17b zeigen beispielhaft weitere Feuerwiderstandskörper 54 und 57 gemäß einem weiteren Ausführungsbeispiel. Der erste Feuerwiderstandskörper 54 ist plattenmäßig und in der Figur 17a schematisch im Querschnitt dargestellt. Der erste Feuerwiderstandskörper 54 weist an zwei gegenüberliegenden Kanten jeweils rechteckförmige Nuten 55 auf, mit parallel zur Plattenebene verlaufenden Seitenflächen 53. Der zweite Feuerwiderstandskörper 57 weist einen Querschnitt auf, welcher es ermöglicht, dass der Feuerwiderstandskörper 57 zur Hälfte in einer Nut 55 des ersten Feuerwiderstandskörpers 54 aufgenommen wird. Dies ermöglicht, dass zwei erste Feuerwiderstandskörper 54 durch einen der zweiten Feuerwiderstandskörper 57 passgenau verbunden werden können. Der zweite Feuerwiderstandskörper 57 bildet damit eine Feder zur Verbindung zweier erster Feuerwiderstandskörper 54 unter Verwendung der Nuten 55 der ersten Feuerwiderstandskörper 54. Der zweite Feuerwiderstandskörper 57 kann aus einem beliebigen Material gefertigt werden. In einer alternativen Ausführungsform kann ein beliebiger Federkörper statt des zweiten Feuerwiderstandskörpers 57 verwendet werden.

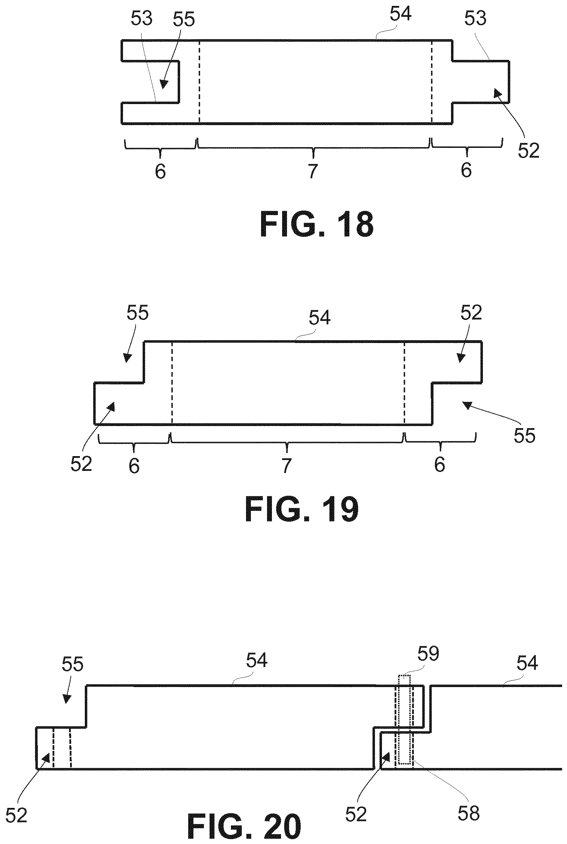

Figur 18 zeigt einen Feuerwiderstandskörper 54 gemäß einem weiteren Ausführungsbeispiel. An dem Feuerwiderstandskörper ist an einer Kante (links) eine Nut 55, und an der gegenüber liegenden Kante (rechts) eine zur Nut passende Feder 52 ausgebildet. Wie in Fig. 17a ist die Feder 52 als rechteckförmige Einbuchtung mit parallel zur Plattenebene verlaufenden Seitenflächen 53 gestaltet; und entsprechend ist die Feder 52 als rechteckförmige Ausbuchtung mit parallel zur Plattenebene verlaufenden Seitenflächen 53 gestaltet.

Figur 19 zeigt einen Feuerwiderstandskörper 54 gemäß einem weiteren Ausführungsbeispiel. An dem Feuerwiderstandskörper ist an beiden in der Querschnittsansicht sichtbaren Kanten eine Kombination aus Nut 55 und Feder 52 angeordnet. In diesem Beispiel wird die Kombination aus Nut 55 und Feder 52 durch einen gestuften Querschnitt mit einer rechtwinkligen Stufe realisiert. Dieses Stufenprofil ist derart gestaltet, dass die Profile der beiden Kanten ineinander zusammensetzbar sind, wie in Fig. 20 illustriert ist.

Fig. 20 zeigt zwei Feuerwiderstandskörper 54 von Fig. 19, die durch Zusammensetzen ihrer Nut-Feder-Profile (Nut 55 und Feder 52) aneinandergefügt sind. Zusätzlich haben die Kanten in dem zusammensteckbaren Bereich (Nut-Feder-Bereich) des Stufenprofils Bohrlöcher 58. Die Bohrlöcher 58 sind angeordnet, um in zusammengestecktem Zustand eine durchgehende Öffnung für ein Fixierelement 59 (z.B. eine Schraube oder ein Fixierbolzen) zu bilden. Das Fixierelement 59 ist durch diese durchgehende Öffnung hindurchgeführt und hält die beiden Feuerwiderstandskörper 54 zusammen.

Um eine größere Stabilität im Bereich der Nut-Feder-Verbindung der Feuerwiderstandskörper 54 und 57 zu erreichen, weisen die in Fig. 17-19 dargestellten Feuerwiderstandskörper 54 die bereits in Bezug auf Figur 16a, 16b beschriebene Zonierung auf. Die Zonierung kann die hierin beschriebenen Merkmale bevorzugter Ausführungsbeispiele mit Zonierung aufweisen. Die Zonierung des Feuerwiderstandskörpers 54 umfasst zwei im Bereich der Nuten 55 angeordnete Zonen 6 und eine dazwischen angeordnete Zone 7. Die Zonen 6 im Bereich der Nuten 55 weisen eine größere Dichte oder einen kleineren Median-Porendurchmesser der Makroporen auf.

Der erste Feuerwiderstandskörper 54 und der zweite Feuerwiderstandskörper 57 bilden einen Bausatz. Wie bereits zu Figur 9-10 beschrieben, können gemäß einem Aspekt auch größere Einheiten mit gewünschter Zonierung als ein solcher Bausatz zur Verfügung gestellt werden, auch wenn eine monolithische Herstellungsweise generell bevorzugt ist. Dennoch gilt hierin das für einen Feuerwiderstandskörper Gesagte analog auch für einen solchen Bausatz. Die Beschreibung eines Feuerwiderstandskörpers mit verschiedenen Zonen kann dabei für einzelne Zonen oder Gruppen von Zonen einen eigenen Feuerwiderstandskörper vorsehen, der mit den übrigen Feuerwiderstandskörpern des Bausatzes über Nut-und-Feder-Verbindungen verbunden ist, wie in Figur 15-17 illustriert.

Im Folgenden werden einige allgemeine mögliche Aspekte des Feuerwiderstandskörpers beschrieben:
Ein Aspekt betrifft einen Feuerwiderstandskörper, welcher zumindest eine Nut aufweist. Der Feuerwiderstandskörper weist hierbei bevorzugt eine plattenmäßige Form auf, wobei zumindest eine Kante der Platte eine Nut aufweist. Die Platte kann rechteckig sein.

Der Feuerwiderstandskörper weist bevorzugt eine Feuerwiderstandsklasse von zumindest F30 auf, noch mehr bevorzugt eine der weiteren hierin genannten Klassen. Der Feuerwiderstandkörper umfasst ein poröses Material auf Gipsbasis, welches vorzugsweise Makroporen mit einem Mediandurchmesser der Makroporen zwischen 0,1 mm und 5 mm oder einen weiteren der hierin als bevorzugt genannten Porendurchmesser bzw. weitere Parameter auf.

Gemäß einem weiteren Aspekt weisen Feuerwiderstandskörper auf einer Kante der Platte eine Nut und auf einer gegenüberliegenden Kante eine Feder auf, so dass der Feuerwiderstandskörper mit weiteren Feuerwiderstandskörpern als Spund-System verbindbar ist. Typischerweise ist der Hohlquerschnitt der Nut zumindest Abschnittsweise identisch zu dem Außenquerschnitt der Feder. So wird eine passgenaue Einfassung der Feder in die Nut ermöglicht.

Ein weiterer Aspekt umfasst zwei geometrisch verschiedene Feuerwiderstandskörper, wobei ein erster der Feuerwiderstandskörper auf zwei gegenüberliegenden Kanten jeweils Nuten aufweist, und wobei ein zweiter der Feuerwiderstandskörper eine Form aufweist, welche ein zumindest teilweises Einfügen des Feuerwiderstandskörpers in eine der Nuten ermöglicht. Bei bevorzugten Ausführungsbeispielen weisen die Nuten eine identische Querschnittsform auf. Typische Querschnittsformen der Nuten sind rechteckförmig, rund oder dreieckig. Typischerweise ist die Querschnittsform des zweiten Feuerwiderstandskörpers der Querschnittsform der Nuten angepasst. Typische zweite Feuerwiderstandskörper weisen eine zu einer Mittelachse symmetrische Form auf. Beidseitig der Symmetrieachse weist der zweite Feuerwiderstandskörper jeweils einen Querschnitt auf, welcher dem Querschnitt der Nuten des ersten Feuerwiderstandskörpers entspricht. So lassen sich die ersten Feuerwiderstandskörper zuverlässig ohne nennenswerte Hohlräume verbinden.

Gemäß einem weiteren Aspekt weist der Feuerwiderstandskörper eine erste Zone (58) und eine zweite Zone (59) auf. Die erste Zone (58) und die zweite Zone (59) unterscheiden sich im Hinblick auf zumindest einen der bereits weiter oben genannten Parameter. Die Mikrostruktur der beiden Zonen kann sich beispielsweise unterscheiden. Beispielsweise ist der Mediandurchmesser der Makroporen der ersten Zone kleiner als der Mediandurchmesser der Makroporen der zweiten Zone. Die Mikroporen der Zonen müssen sich dagegen nicht zwingend voneinander unterscheiden.

Gemäß einem bevorzugten Aspekt unterscheiden sich die erste Zone (58) und die zweite Zone (59) in Bezug auf den zumindest einen Parameter um mindestens 10%. Gemäß einem bevorzugten Aspekt hat der zumindest eine Parameter innerhalb der ersten Zone und innerhalb der zweiten Zone jeweils einen konstanten Wert, innerhalb eines Toleranzbereichs von +/- 5% um diesen konstanten Wert.

Gemäß einem weiteren Aspekt weist der Feuerwiderstandskörper im Bereich der Nut die erste Zone mit einer relativ höheren Dichte und in einem weiteren Bereich die zweite Zone mit einer relativ geringeren Dichte auf. Der Übergang zwischen den Zonen kann graduell ausgestaltet sein. Das bedeutet, dass die Grenze von der dichteren Zone zur weniger dichten Zone durch einen Übergangsbereich (Überlappungszone) gebildet wird, bei dem die Merkmale der beiden Zonen ineinander übergehen. Dies kann sich dadurch äussern, dass die Dichte in diesem Übergangsbereich graduell hin zur weniger dichten Zone abnimmt, respektive die mittlere Porengrösse der Makroporen graduell zunimmt.

Gemäß einem weiteren Aspekt handelt es sich beim Feuerwiderstandskörper mit einer Nut um einen monolithischen Feuerwiderstandskörper, das heisst er ist vollständig einstückig ausgebildet. Bei einem Feuerwiderstandskörper mit einer Mehrzahl von Zonen sind die Materialien der einzelnen Zonen typischerweise stoffschlüssig miteinander verbunden bis hin zu einer gewissen Überlappung.

Gemäß einem weiteren Aspekt hat die Nut (41, 55) einen dreieckförmigen, einen rechteckförmigen oder einen runden Querschnitt. Gemäß einem weiteren Aspekt ist an einer der Nut (41) gegenüber liegenden Kante des Feuerwiderstandskörpers eine zur Nut (41, 55) passende Feder (42) ausgebildet.

Gemäß einem weiteren Aspekt hat die Nut und/oder die Feder in einem zusammensteckbaren Bereich ein Bohrloch, welches angeordnet ist, um in zusammengestecktem Zustand eine durchgehende Öffnung für ein Fixierelement zu bilden. Gemäß einem bevorzugten Aspekt hat die Nut bzw. die Feder ein Stufenprofil, und das Bohrloch verläuft im Wesentlichen senkrecht zu einer Stufenfläche des Stufenprofils.

Optional kann eine Nut und/oder Feder mit einer mechanischen Verstärkung versehen sein. Beispielsweise kann die Nut und/oder Feder mit einer Beschichtung oder einer Metallarmierung verkleidet sein, oder mit einem der in Abschnitt IV.e beschriebenen Elemente verstärkt sein.

Ein weiterer Aspekt betrifft ein Herstellfahren zur Herstellung eines Feuerwiderstandskörpers mit einer Nut und gegebenenfalls einer Feder.

Das Verfahren umfasst ein Herstellen einer Zusammensetzung, welche eine Wasser-Gips-Dispersion mit zumindest partiell hydrophoben Partikeln umfasst, wobei die Zusammensetzung einen Nassschaum bildet, der durch die zumindest partiell hydrophoben Partikel stabilisiert wird. Weiterhin umfassen bevorzugte Herstellverfahren ein Bereitstellen einer Gussform, welche einen plattenmäßigen Hohlraum umschliesst, und ein Anordnen eines Profils in der Gussform zum späteren Ausbilden einer Nut in dem Feuerwiderstandskörper. Typischerweise wird der Feuerwiderstandskörper in der Gussform gegossen, wobei das Profil die Ausbildung der Nut bedingt. Bei Ausführungsformen mit einer Mehrzahl von Nuten oder mit einer Feder können weitere Profile in der Gussform angeordnet werden.

Gemäß einem weiteren Aspekt kann das Herstellfahren als folgende Schritte umfassend beschrieben werden:

- Bereitstellen einer Zusammensetzung, welche eine Wasser-Gips-Dispersion umfasst;

- Bereitstellen einer Gussform, welche einen plattenmäßigen Hohlraum umschliesst, wobei die Gussform ein darin angeordnetes Profil zum späteren Ausbilden einer Nut in dem Feuerwiderstandskörper aufweist;

- Giessen des Feuerwiderstandskörpers aus der Zusammensetzung in der Gussform; und

- Abbinden der gemischten Zusammensetzung in der Gussform, wobei die Zusammensetzung zu dem Feuerwiderstandskörper aushärtet, und anschließendes Trocknen des ausgehärteten Feuerwiderstandskörpers.

Optional umfasst das Verfahren weiter Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden, und weitere in Abschnitt III beschriebene Verfahrensschritte.

Durch das Herstellverfahren wird gemäß einem bevorzugten Aspekt der Feuerwiderstandskörper gemäß einem der hierin beschriebenen Aspekte, oder mehrerer davon, erhalten.

Sollen beispielsweise Feuerwiderstandskörper mit zwei Zonen hergestellt werden, beispielsweise mit einer zweiten Zone mit dichterem Material um eine Nut herum, wird vorzugsweise eine zweite Zusammensetzung bereitgestellt, welche eine Wasser-Gips-Dispersion mit zumindest partiell hydrophoben Partikeln umfasst, und wobei die Zusammensetzung einen Nassschaum bildet, der durch die zumindest partiell hydrophoben Partikel stabilisiert wird, und wobei das Herstellverfahren umfasst: Giessen einer ersten Zone des Feuerwiderstandskörpers mit der ersten Zusammensetzung in der Gussform, Giessen einer zweiten Zone des Feuerwiderstandskörpers mit der zweiten Zusammensetzung in der Gussform, Trocknen des Feuerwiderstandskörpers, wobei die erste Zone und die zweite Zone einander kontaktieren. Typischerweise umschließt die zweite Zone die Nut oder ist in einem Bereich der Nut oder einem Bereich der Feder angeordnet. Bei typischen Feuerwiderstandskörpern ist eine erste Zone in einem Bereich zwischen Nuten oder zwischen einer Feder und einer Nut angeordnet. Die erste Zone weist vorzugsweise eine geringe Dichte als die zweite Zone auf. Dadurch wird eine besonders stabile Ausführung im Bereich der Nut oder der Feder bei gleichzeitiger Gewichts- und Materialoptimierung erreicht.

Gemäß einem weiteren Aspekt wird ein Bausatz mit einem hierin beschriebenen Feuerwiderstandskörper und mit einem zweiten, vorzugsweise ebenfalls hierin beschriebenen Feuerwiderstandskörper (57) zur Verfügung gestellt. Der zweite Feuerwiderstandskörper weist eine Querschnittsform auf, die es ermöglicht, dass der zweite Feuerwiderstandskörper (57) zumindest teilweise in die Nut (55) des ersten Feuerwiderstandskörpers (54) einsetzbar ist.

Gemäß einem weiteren Aspekt unterscheiden sich der erste Feuerwiderstandskörper (54) und der zweite Feuerwiderstandskörper (57) im Hinblick auf zumindest einen der folgenden Parameter: Dichte, Mediandurchmesser der Makroporen, Verteilbreite der Porengrössenverteilung der Makroporen, chemische Zusammensetzung. Für den Bausatz gilt ansonsten das hierin über einen zonierten Feuerwiderstandskörper gesagte entsprechend, soweit nicht klar ausgeschlossen (Beispielsweise ist der Bausatz nicht monolithisch).

### c. Vorfabriziertes / in Form gegossenes Bauteil

Ein weiterer Aspekt der Erfindung betrifft einen Feuerwiderstandskörper umfassend ein Material mit Gips und durch Schaumbildung in dem Gips geschaffene Makroporen, wobei der Feuerwiderstandskörper in einer Gussform, beispielsweise als Platte, gegossen ist. Besonders bevorzugt ist es, wenn ein Bauteil mit dem Feuerwiderstandskörper und eines Rahmens (z.B. einer Armierung, etwa einer Metallarmierung) für den Feuerwiderstandskörper zur Verfügung gestellt wird, wobei der Feuerwiderstandskörper genau in den Rahmen eingepasst ist. Dies kann insbesondere dadurch erreicht werden, dass der Feuerwiderstandskörper in den Rahmen eingegossen ist.

Das Gießverfahren zur Herstellung eines solchen Feuerwiderstandskörpers umfasst: Bereitstellen eines Rahmens, der eine Hohlform definiert; Bereitstellen einer Zusammensetzung, welche eine Wasser-Gips-Dispersion umfasst; Eingießen der Zusammensetzung in den Rahmen als Hohlform; und Abbinden der Wasser-Gips-Dispersion zu einem Feuerwiderstandskörper in der Hohlform und Trocknen des Feuerwiderstandskörpers in der Hohlform.

Vorzugsweise umfasst das Verfahren weiter das Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden; und/oder weitere der etwa in Abschnitt III genannten Verfahrensschritte.

Das fertiggestellte Bauteil umfasst dann den Rahmen und den im Rahmen eingepassten Feuerwiderstandskörper. Besonders bevorzugt wird dadurch ein solches Bauteil zur Verfügung gestellt, das eine Feuerwiderstandsklasse von zumindest F30 aufweist. Ganz besonders bevorzugt hat der resultierende Feuerwiderstandskörper eine Dichte von weniger als 500 kg/m$^3$ oder in einem anderen hierin genannten Dichtebereich. Dies kann insbesondere durch die Aufschäumung und die hierin bereits beschriebene Partikelstabilisierung des Schaums erreicht werden.

Typische Ausführungsformen umfassen als rechteckige, polygone oder kreisrunde Platten ausgebildete Feuerwiderstandskörper, welche bei Ausführungsformen Öffnungen aufweisen.

Gemäß diesem Aspekt lässt der Feuerwiderstandskörper sich passgenau an eine erforderliche Hohlform vorfabrizieren und kann nachträglich in eine solche verbaut werden. Der Porenaufbau kann mittels der bereits beschriebenen Zonierung an besondere Bedürfnisse präzise eingestellt und angepasst werden.

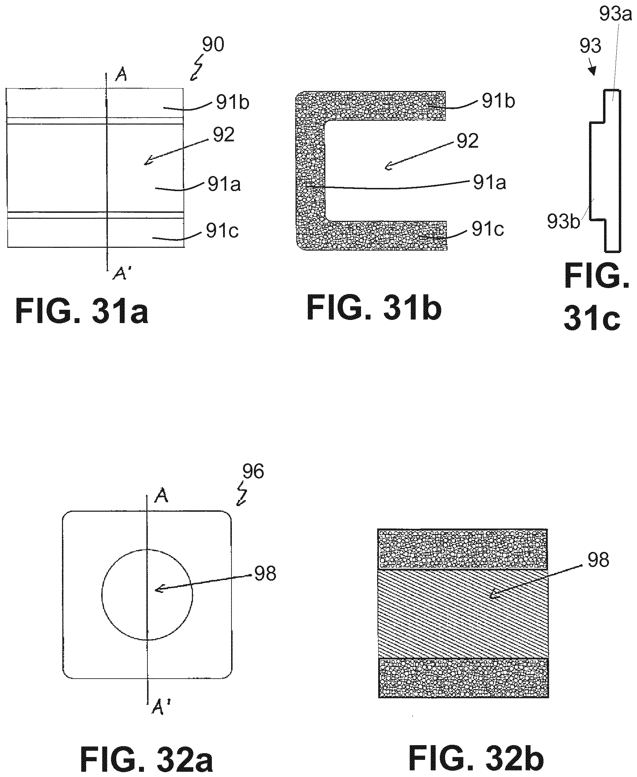

Es ist in einer weiteren Ausführungsform auch vorgesehen, den Feuerwiderstandskörper in einer nicht plattenmäßigen Form zu gießen, etwa als die in Figur 31-32 dargestellten Kabelkanäle. Durch das Gussverfahren können auch komplexe Formen auf einfache und flexible Weise hergestellt werden.

Gemäß einer weiteren Ausführungsform kann der Feuerwiderstandskörper auch von der Hohlform gelöst und ohne weitere Ummantelung bzw. ohne Rahmen zur Verfügung gestellt werden. Dies gilt insbesondere dann, wenn der Zusammensetzung Additive zur Verbesserung der mechanischen Eigenschaften beigemischt wurden, wie sie in Abschnitt IV.e beschrieben sind.

### d. Feuerwiderstandstüren

Eine Klasse von Bauteilen sind bewegliche Bauteile für den Brandschutz, wie etwa Brandklappen und Feuerwiderstandstüren. Für derartige bewegliche Bauteile ist der erfindungsgemäße Feuerwiderstandskörper besonders geeignet, da er niedriges Gewicht, einfache Herstellbarkeit und gute Eigenschaften im Hinblick auf Feuerwiderstand in äußerst vorteilhafter Weise kombiniert. Zudem sind Gewicht und Feuerwiderstand durch Wahl der Herstellungsparameter genau kontrollierbar und aufeinander abstimmbar.

Das bewegliche Bauteil hat daher vorzugsweise eine Feuerwiderstandsklasse von zumindest T30.

Ein Beispiel für ein solches bewegliches Bauteil ist ein Türblatt für eine Feuerwiderstandstür. Der erfindungsgemäße Feuerwiderstandskörper ist in diesem Fall etwa als Einlage des Türblatts vorgesehen. (Weitere Anwendungen für ein Türblatt wie Kabelkanäle und Schlosstaschen werden weiter unten beschrieben). Zusätzlich kann das Türblatt eine Armierung vorsehen, etwa eine Hülle oder eine Beschichtung bzw. Laminierung des Feuerwiderstandskörpers. Allgemein wird eine solche zusätzliche den Feuerwiderstandskörper (teilweise oder vollständig) umgebende Struktur des Türblatts hierin als Rahmen bezeichnet und schließt die obengenannten Beispiele mit ein.

Weiter können an dem Türblatt noch weitere funktionelle Elemente vorgesehen sein, wie etwa eine Aufhängung, ein Scharnier oder ein Türschloss, wie weiter unten in größerem Detail beschrieben. Diese weiteren funktionellen Elemente können am Rahmen befestigt sein und/oder in dem Feuerwiderstandskörper integriert sein.

Im einfachsten Fall ist eine Feuerwiderstands-Einlage eines solchen Türblatts ein Feuerwiderstandskörper, der einen Teil der Fläche des Türblatts einnimmt und brandschutztechnisch verbessert. Beispielsweise kann der Feuerwiderstandskörper das Innere eines Rahmens des Türblatts ganz oder teilweise ausfüllen.

Über diese Grundfunktionalität hinaus kann der Feuerwiderstandskörper noch weitere Funktionalitäten aufweisen. Dies ist in Fig. 20 illustriert. Hier ist ein plattenförmiger Feuerwiderstandskörper 20 dargestellt, dessen Umfang an die Innenmaße eines Türblatt-Rahmens angepasst ist, um in diesen eingesetzt zu werden. Zusätzlich hat der Feuerwiderstandskörper 20 einige weitere strukturelle Merkmale:

- Eine Schlosskasten-Aussparung für einen Schlosskasten 60, die in einem mittleren Bereich eines langen Rands des Feuerwiderstandskörpers eingelassen ist;

- Einen Verriegelungskanal 64 für ein Verriegelungselement, der sich von dem Schlosskasten bzw. der Schlosskasten-Aussparung weg parallel zu dem langen Rand bis zu einem kurzen Rand des Feuerwiderstandskörpers erstreckt;

- Einen Kabelkanal 66 für ein Kabel, welcher sich von dem Schlosskasten bzw. der Schlosskasten-Aussparung weg zu einem Rand des Feuerwiderstandskörpers 20 erstreckt.

Fig. 22 zeigt eine Querschnittsansicht durch die Ebene A-A' des Feuerwiderstandskörpers von Fig. 21. Darin ist gezeigt, dass der lange Rand des Feuerwiderstandskörpers ein Stufenprofil 68 aufweist, die ein entsprechendes Stufenprofil des Türblatts ermöglicht. Der Verriegelungskanal 64 verläuft in diesem Beispiel in der Stufe des Stufenprofils 68. Weiter ist gezeigt, dass der Feuerwiderstandskörper 20 die bereits oben beschriebene Zonierung aufweist, mit einer ersten Zone 6 niedriger Dichte und einer zweiten Zone 7 höherer Dichte im Bereich des Stufenprofils 68.

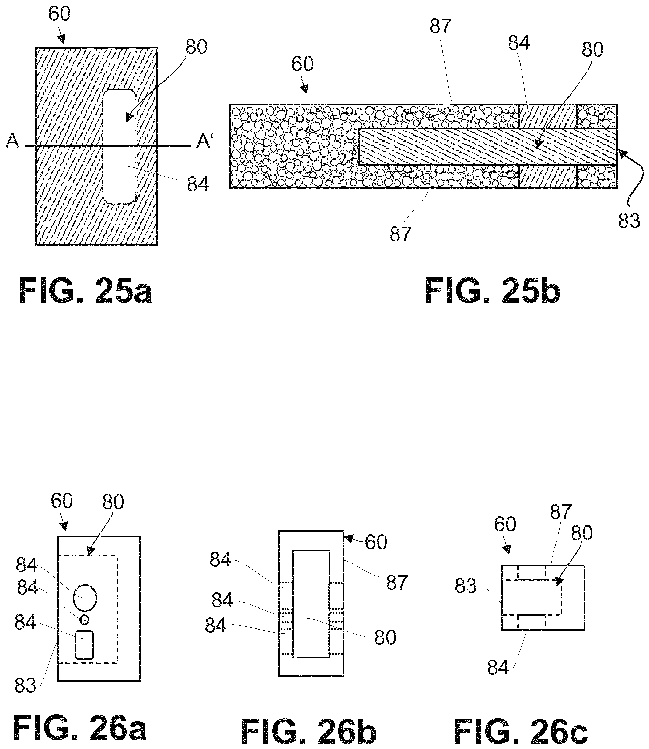

Die in Fig. 21, 22 beschriebenen Aspekte können unabhängig voneinander vorgesehen werden und auch mit Aspekten aus weiteren Figuren kombiniert werden, etwa mit der in Fig. 9-10 beschriebenen Zonierung, oder mit dem weiter unten in Bezug auf Fig. 25-29 beschriebenen Schlosskasten.

Im Folgenden werden einige weitere Aspekte des als Einlage eines Türblatts einer Feuerwiderstandstür verwendeten Feuerwiderstandskörpers beschrieben. Gemäß einem Aspekt ist der Feuerwiderstandskörper plattenartig und deckt bevorzugt die Fläche des Türblatts zu mindestens 90% ab. Bevorzugte Feuerwiderstandskörper sind ausgebildet, so dass sie sich über die gesamte Türfläche erstrecken.

Gemäß einem Aspekt ist der Feuerwiderstandskörper plattenmäßig geformt. Der Feuerwiderstandskörper kann etwa Abmessungen von zumindest 4 cm* 6 cm, vorzugsweise von zumindest 6 cm * 9 cm, besonders vorzugsweise von zumindest 30cm*30cm aufweisen. Weitere Ausführungsformen weisen bevorzugt Abmessungen von mindestens 80cm*180cm auf. Typischerweise weisen die Feuerwiderstandskörper eine Dicke von maximal 15cm oder maximal 10cm, und/oder von mindestens 2 cm oder mindestens 5 cm auf. Solche Feuerwiderstandskörper sind besonders geeignet, als Brandschutzelement einer Brandschutztür verwendet zu werden.

Gemäß einem weiteren Aspekt hat der Feuerwiderstandskörper zumindest eine Aussparung aufweisen, etwa eine Aussparung zur Aufnahme eines Schlosskasten-Hohlraums; oder (wie unten detaillierter beschrieben) einen Schlosskasten-Hohlraum zur Aufnahme eines Türschlossmechanismus; oder einen Verriegelungskanal zur Aufnahme eines Verriegelungselements; einen Kabelkanal zur Aufnahme eines Kabels; ein Durchgangsloch zur Aufnahme eines Türspions, eine Aufnahme für eine elektronische Komponente, und/oder eine Aufnahme für ein Türscharnier.

Die Aussparung kann beim Gießen ausgegossen sein, oder nachträglich entfernt, etwa gefräst sein. Eine ausgegossene Aussparung ist besonders vorteilhaft, da zuverlässig und preiswert herstellbar. Optional kann eine Armierung oder eine sonstige mechanische Verstärkung in der Aussparung vorgesehen sein. Beispielsweise kann die Aussparung mit einer Beschichtung oder einer Metallarmierung verkleidet sein, oder mit einem der in Abschnitt IV.e beschriebenen Elemente verstärkt sein. Die Metallarmierung kann im Fall einer gegossenen Aussparung auch als Teil der Gussform verwendet werden, um die Aussparung beim Gießen des Feuerwiderstandskörpers zu erzeugen.

Der Kabelkanal, der Verriegelungskanal und weitere Aussparungen können als Vertiefung, etwa als gefräste oder eingegossene Rille, an der Oberfläche des Feuerwiderstandskörpers vorgesehen sein, oder alternativ durch das Innere des Feuerwiderstandskörpers verlaufen, wie in Fig. 22 am Beispiel des Verriegelungskanals dargestellt.

Gemäß einem Aspekt ist die Mikrostruktur des Feuerwiderstandkörpers äußerst homogen. Dies kann sich beispielsweise darin äußern, dass der Feuerwiderstandskörper eine Dichte hat, die in einer ersten Zone des Feuerwiderstandskörpers eine Verteilbreite von weniger als 5% aufweist. Hierbei ist die Dichte als mittlere Dichte in regulären Volumina von 50 ml definiert.

Die erste Zone kann den gesamten Feuerwiderstandskörper abdecken. Im Fall eines zonierten Feuerwiderstandskörpers kann der Feuerwiderstandskörper alternativ auch noch weitere Zonen jeweils unterschiedlicher Dichte umfassen. Vorzugsweise deckt die erste Zone jedoch eine Fläche von mindestens 30% der Fläche des Feuerwiderstandskörpers ab.

Eine zonierter Feuerwiderstandskörper, der als Einlage für ein Türblatt mit mehreren Zonen verwendet werden kann, ist beispielsweise in den bereits oben beschriebenen Figur 9a, 9b, 10a und 10b gezeigt. Für weitere Details zu der Zonierung wird auf die Beschreibung in Abschnitt VII.a oben verwiesen. Im Folgenden werden einige weitere allgemeine Aspekte zur Zonierung der Türblatteinlage beschrieben.

Gemäß einem weiteren Aspekt weist der Feuerwiderstandskörper neben der ersten Zone eine zweite Zone auf, wobei die erste Zone und die zweite Zone sich im Hinblick auf zumindest einen Parameter ausgewählt aus der folgenden Liste unterscheiden: Dichte, Mediandurchmesser der Makroporen, Verteilbreite der Porengrössenverteilung der Makroporen, chemische Zusammensetzung. Insbesondere kann die erste Zone eine höhere Dichte als die zweite Zone haben. Vorzugsweise ist die erste Zone in einem Randabschnitt des Feuerwiderstandskörpers angeordnet, und die zweite Zone erstreckt sich in einem mittleren Bereich des Feuerwiderstandskörpers.

Optional kann der Feuerwiderstandskörper auch noch weitere Zone(n) aufweisen, wie bereits oben in Abschnitt VII.a beschrieben. Beispielsweise kann der Feuerwiderstandskörper eine dritte und optional eine vierte Zone aufweisen, wobei die erste Zone die höchste Dichte, die dritte und ggf. vierte Zone eine mittlere Dichte bzw. mittlere Dichten und die zweite Zone die niedrigste Dichte der drei Zonen haben. Mit Bezug auf Fig. 9b kann beispielsweise die erste Zone in einem oberen Randbereich 25 des Türblatts und die dritte Zone (bzw. bei verschiedenen Dichten die dritte und vierte Zone) in einem seitlichen Randbereich 22, 23 des Türblatts angeordnet sein. Mit Bezug auf Fig. 9a kann der Feuerwiderstandskörper weiter eine fünfte Zone aufweisen, die eine Dichte zwischen der zweiten und der dritten bzw. vierten Zone hat, und die in einem unteren Randbereich 24 des Türblatts angeordnet ist.

Im Fall eines zonierten Feuerwiderstandskörpers gilt das hierin bezüglich der ersten Zone Gesagte, insbesondere hinsichtlich der Homogenität, analog auch für die jeweiligen weiteren Zonen.

Alternativ zu einem zonierten Feuerwiderstandskörper kann das Türblatt auch einen Bausatz aus mehreren Feuerwiderstandskörpern aufweisen. Jeder der Feuerwiderstandskörper kann beispielsweise eine der hierin erwähnten Zonen bilden (etwa jeweils eine der in Figur 9a, 9b, 10a und 10b dargestellten Zonen). Diese Feuerwiderstandskörper können, wie in Abschnitt VII.b beschrieben, mittels Nuten und Federn miteinander verbunden sein. In diesem Fall gilt das hierin über den Feuerwiderstandskörper Gesagte analog für den Bausatz.

Im Folgenden werden weitere mögliche Details zum Rahmen des Türblatts beschrieben. Der Rahmen kann ein Metallrahmen, z.B. ein Stahlrahmen sein. Gemäß einem Aspekt weist der Rahmen einen plattenmäßigen Hohlraum für den Feuerwiderstandskörper auf. Der Rahmen kann den Feuerwiderstandskörper als Schale ganz oder teilweise umschließen. Der Rahmen kann einstückig oder mehrstückig sein. Die Elemente des Rahmens können zum Beispiel verschweisst, verschraubt, vernietet oder verklebt sein.

Gemäß einem weiteren Aspekt ist der Feuerwiderstandskörper in den Rahmen als Gussform eingegossen, wobei der Feuerwiderstandskörper in einen Hohlraum, der durch den Rahmen (oder einen Teil desselben) gebildet wurde, eingegossen ist. Dies kann beispielsweise durch ein Herstellungsverfahren erreicht werden, welches die folgenden Schritte umfasst:

- Bereitstellen eines Rahmens (der auch nur einen Teil des finalen Rahmens des Türblatts sein kann), der (möglicherweise gemeinsam mit weiteren Elementen wie einer Deckplatte) eine Hohlform definiert;

- Bereitstellen einer Zusammensetzung, welche eine Wasser-Gips-Dispersion umfasst;

- Eingießen der Zusammensetzung in den Rahmen als Hohlform (Gussform);

- vorzugsweise Aufschäumen der Zusammensetzung; dies kann vor, während oder nach dem Eingießen erfolgen;

- Abbinden der Wasser-Gips-Dispersion zu einem Feuerwiderstandskörper in der Hohlform und Trocknen des Feuerwiderstandskörpers. Das Trocknen kann in der Hohlform oder unter vorübergehender Entnahme des Feuerwiderstandskörpers aus der Hohlform erfolgen.

Vorzugsweise umfasst das Verfahren weiter das Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden; und/oder weitere der etwa in Abschnitt III genannten Verfahrensschritte.

Alternativ kann der Feuerwiderstandskörper aus dem Rahmen vor, während oder nach dem Trocknen vorübergehend entfernt werden. Auch kann statt des Rahmens eine andere Hohlform verwendet werden, aus der der Feuerwiderstandskörpers etwa beim Trocknen entfernt wird, um danach in den Rahmen des Bauteils eingepasst zu werden. Dies erlaubt es, etwaige Schrumpfungsprozesse beim Gießen zu berücksichtigen.

Das fertiggestellte Türblatt umfasst dann den Rahmen (und gegebenenfalls noch weitere Rahmenelemente) und den im Rahmen eingepassten Feuerwiderstandskörper.

Dank des Feuerwiderstandskörpers weist das Türblatt eine Feuerwiderstandsklasse von mindestens T30 auf. Je nach Anforderungen kann die Feuerwiderstandsklasse auch mindestens T60, mindestens T90 oder mindestens T120 betragen. Die Feuerwiderstandsklasse ist durch Wahl der Porengröße und der Dichte beeinflussbar, wie oben bereits beschrieben.

Entsprechenden gestalterischen Erfordernissen kann das Türblatt zusätzlich oder anstelle des Rahmens mit weiteren Applikationen, wie zum Beispiel Furnieren, Laminaten und/oder Glasuren, versehen sein. Um die Brandschutzwirkung zu verstärken, können zusätzlich zu dem hierin beschriebenen Feuerwiderstandskörper noch weitere brandhemmende Substanzen im Türblatt eingesetzt sein.

Gemäß einem weiteren Aspekt kann das Türblatt weitere funktionelle Elemente wie etwa ein Scharnier, ein Türschloss, eine Aufhängung für den Feuerwiderstandskörper, ein Sichtloch und/oder eine in den Feuerwiderstandskörper integrierte Kabeldurchführung aufweisen. Auch kann ein eingegossener oder eingefräster Schlosskasten-Hohlraum zur Aufnahme eines Türschlossmechanismus vorgesehen sein. Diese und/oder weitere funktionelle Elemente können ganz oder teilweise in den Feuerwiderstandskörper integriert, etwa eingegossen sein.

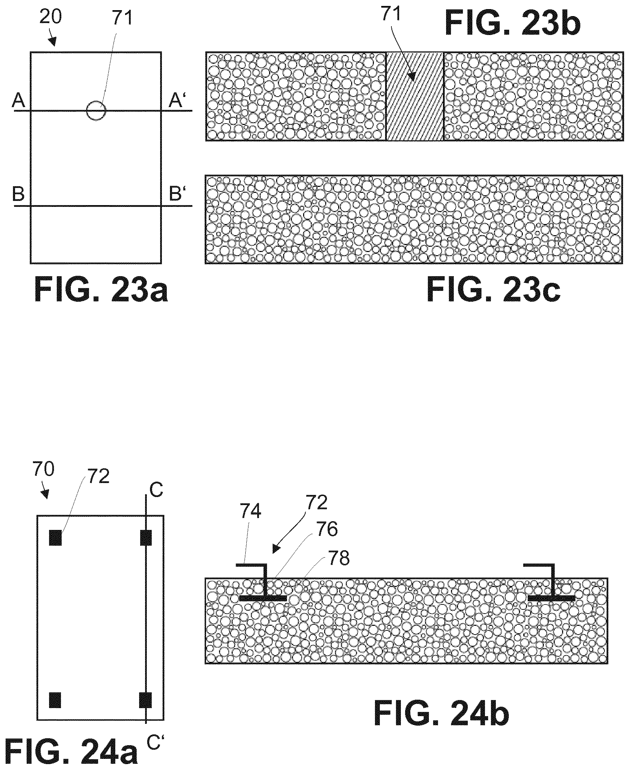

Beispielsweise zeigt Figur 23a einen Feuerwiderstandskörper 20 für ein Türblatt mit einem durchgehenden Sichtloch 79 für einen Türspion. Figur 23b, 23c zeigen Querschnittsansichten des Feuerwiderstandskörpers 20 durch die Ebenen A-A' bzw. B-B'. Das Sichtloch 79 ist in einer Ausführungsform in den Feuerwiderstandskörper eingegossen, indem beim Gießen ein entsprechender Körper in der Gussform angebracht ist bzw. die Gussform zum Aussparen des Sichtlochs ausgestaltet ist. Gemäß einem alternativen Aspekt ist das Sichtloch 79 nach dem Gießen aus dem Feuerwiderstandskörper herausgefräst. Gemäß einem bevorzugten Aspekt (nicht in Figur 23a-c dargestellt) hat der Feuerwiderstandskörper in einem Bereich um das Sichtloch 79 herum eine Zone mit erhöhter Dichte.

Das Sichtloch 79 ist ein Beispiel für allgemeinere Aussparungen, welche in einem Feuerwiderstandskörper für eine Brandschutztür vorgesehen sein können, und sie illustriert den folgenden allgemeinen Aspekt: Gemäß einem Aspekt weist der Feuerwiderstandskörper somit eine Aussparung auf. Dies bietet den Vorteil, dass dort Einbauteile eingebaut werden können, wie beispielsweise Türschlösser oder Armierungen. Auch können Kanäle zum Verlegen von Kabeln oder Strängen im Feuerwiderstandskörper vorgesehen sein. Die Aussparung ermöglicht es somit, bestimmte funktionale Elemente später im Feuerwiderstandskörper unterzubringen, oder den Feuerwiderstandskörper an bestimmte funktionale Elemente anzupassen.

Figur 24a, 24b zeigen einen weiteren Feuerwiderstandskörper 70 für ein Türblatt mit in den Feuerwiderstandskörper eingegossenen Aufhängungen 72. Diese Figuren sind in Abschnitt VII.f unten genauer beschrieben.

Weitere mögliche Aspekte zu funktionellen Elemente sind in weiterem Detail in Abschnitt VII.e - VII.g unten beschrieben, auf die besonders verwiesen wird.

### e. Brandklappen

Im Folgen wird ein weiteres bewegliches Bauteil für den Brandschutz, nämlich eine Brandklappe, in weiterem Detail beschrieben. Eine solche Brandklappe ist in Figur 30a, 30b dargestellt, wobei Figur 30a eine schematische Seitenansicht und Figur 30b eine Querschnittsansicht durch die Ebene A-A' ist.

Die Brandklappe ist plattenmäßig mit einer annähernd runden Fläche ausgebildet. Zusätzlich erstrecken sich zwei Schaftenden 71 von gegenüberliegenden Seiten des Feuerwiderstandskörpers. Die Schaftenden liegen in der Ebene der plattenmäßigen Brandklappe und erstrecken sich entlang einer Achse. Die Schaftenden erlauben eine um die Achse drehbare Aufhängung der Brandklappe.

In Figur 30b ist gezeigt, dass die beiden Schaftenden 71 über ein Mittelstück 73 des Schaftes miteinander verbunden sind. Die Schaftenden 71 und das Mittelstück 73 erstrecken sich entlang der Achse mittig durch den Feuerwiderstandskörper. Ein Teil der Schaftenden 71 und das Mittelstück 73 sind in den Feuerwiderstandskörper 20a eingegossen. Durch das Mittelstück 73 werden die Schaftenden in dem Feuerwiderstandskörper stabilisiert.

Zusätzlich sind in Figur 30 Ankerelemente 75 dargestellt, die sich quer zur Achse von dem Mittelstück 73 des Schaftes weg erstrecken. Die Ankerelemente stabilisieren den Schaft dadurch insbesondere gegen Längsbewegungen entlang der Achse. Die Ankerelemente sind weiter rotations-unsymmetrisch in Bezug auf die Achse gestaltet, etwa als stabartige, sich in der Zeichenebene der Figur 30b erstreckende Elemente. Dadurch stabilisieren sie den Schaft auch gegenüber Rotation innerhalb des Feuerwiderstandskörpers.

Ansonsten gilt für die Brandschutzklappe das zu dem Türblatt Beschriebene analog, wobei "Türblatt" durch "Brandschutzklappe" zu ersetzen ist. Beispielsweise sind die Angaben zur Feuerwiderstandsklasse, Zonierung, Homogenität, zu weiteren funktionellen Elementen und zu weiteren Aspekten auch auf die Brandschutzklappe übertragbar.

Weitere Aspekte der Brandschutzklappe sind im Folgenden beschrieben.

Gemäß einem Aspekt ist der Feuerwiderstandskörper der Brandklappe plattenmäßig, optional mit einer annähernd runden Fläche ausgebildet. Gemäß einem Aspekt erstrecken sich zwei Schaftenden von gegenüberliegenden Seiten des Feuerwiderstandskörpers. Die Schaftenden liegen in der Ebene des Feuerwiderstandskörpers, bevorzugt mittig in Bezug auf den Feuerwiderstandskörper, und/oder erstrecken sich entlang einer gemeinsamen Achse. Gemäß einem Aspekt weist der Feuerwiderstandskörper einen Schaft auf, der die beiden Schaftenden und ein diese verbindendes Mittelstück umfasst, und der entlang der Achse angeordnet ist.

Gemäß einem Aspekt ist ein Teil des Schafts bzw. sind ein Teil der Schaftenden und das optionale Mittelstück in den Feuerwiderstandskörper eingegossen. Gemäß einem Aspekt sind in den Feuerwiderstandskörper eingegossene Ankerelemente mit den Schaftenden verbunden. Die Ankerelemente sind vorzugsweise rotations-unsymmetrisch in Bezug auf die Achse.

Gemäß einem Aspekt ist der Feuerwiderstandskörper plattenmäßig geformt. Der Feuerwiderstandskörper kann einen Durchmesser in der Plattenebene von mindestens 10cm, bevorzugt von mindestens 20 cm, noch mehr bevorzugt von mindestens 30cm aufweisen. Die Brandklappe kann einen Rahmen und den im Rahmen eingepassten, optional sogar eingegossenen Feuerwiderstandskörper umfassen.

Es gilt für die Brandschutzklappe das oben bereits zu dem Türblatt Beschriebene analog (siehe Abschnitt VII.d), wobei "Türblatt" durch "Brandschutzklappe" zu ersetzen ist. Beispielsweise sind die Angaben zur Feuerwiderstandsklasse, Zonierung, Homogenität, zu weiteren funktionellen Elementen, zum Herstellungsverfahren und zu weiteren Aspekten auch auf die Brandschutzklappe übertragbar.

### f. Integrierte funktionelle Elemente, z.B. zur Aufhängung

In der soeben beschriebenen Figur 30a, 30b wurde bereits ein Beispiel eines Feuerwiderstandskörpers gezeigt, bei dem ein Schaftabschnitt zumindest mit einem ersten Teil in das poröse Material des Feuerwiderstandskörpers eingegossen sein kann. Allgemeiner kann ein Funktionselement zumindest mit einem ersten Teil in das poröse Material des Feuerwiderstandskörpers eingegossen sein. Unter einem Funktionselement wird hierin ein vom porösen Material auf Gipsbasis verschiedenes Element verstanden, welches an dem Feuerwiderstandskörper befestigt, bevorzugt eingegossen ist, und eine beliebige Funktionalität zur Verfügung stellt, wie etwa das oben zu Fig. 30a, 30b beschriebene Schaftelement.

Ein weiteres Beispiel für ein solches eingegossenes Funktionselement ist in Figur 24a, 24b dargestellt. Hier ist ein Feuerwiderstandskörper 70 als Einlage für ein Türblatt einer Brandschutztür gezeigt. Der Feuerwiderstandskörper 70 weist als Funktionselement ein starres Aufhängungselement 72 zum Aufhängen des Feuerwiderstandskörpers 70 auf. Mit diesem Aufhängungselement 72 kann der Feuerwiderstandskörper 70 beispielsweise in einem Rahmen des Türblatts aufgehängt werden.

Das Aufhängungselement 72 ist mit einem ersten Teil 76 in den Feuerwiderstandskörper 70 eingegossen und ragt mit einem zweiten Teil 74 aus dem Feuerwiderstandskörper 70 heraus. Der zweite Teil 74 bildet hier einen Haken, mittels dessen das Aufhängen ermöglicht wird. Der erste Teil 76 hat einen daran angebrachten Anker 78, mittels dessen das Aufhängungselement 72 in dem Feuerwiderstandskörper 70 stabilisiert wird. Der Anker ist plattenartig geformt und rotations-unsymmetrisch, und schützt das Aufhängungselement 72 somit sowohl gegen Zug als auch gegen Verdrehen.

Zum Herstellen solcher Feuerwiderstandskörper wird eine Gussform mit einem Hohlraum bereitgestellt, in den eine Zusammensetzung mit der Wasser-Gips-Dispersion gegossen wird, um den Feuerwiderstandskörper zu erhalten. Das Funktionselement ist zumindest teilweise in die Gussform eingesetzt, so dass es seinem ersten Teil in den Hohlraum hineinragt. Beim Gießen umgibt daher die Zusammensetzung den ersten Teil, so dass der erste Teil in das Material des Feuerwiderstandskörpers eingegossen wird.

Vorzugsweise umfasst das Verfahren weiter das Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden; und/oder weitere der etwa in Abschnitt III genannten Verfahrensschritte.

Das Funktionselement wurde als Aufhängungselement beschrieben, es können aber zusätzlich oder stattdessen noch weitere Funktionselemente in analoger Weise am bzw. im Feuerwiderstandskörper angebracht werden, zum Beispiel ein Schaftelement zum drehbaren Lagern des Feuerwiderstandskörpers (siehe Figur 30a, 30b), ein Abstandshalter, ein Verbindungselement zum Verbinden des Feuerwiderstandskörpers mit einem weiteren Körper, Kabeldurchführungen, Türspione, Scharniere, Schliess- und Verriegelungsmechanismen, elektronische Komponenten, Sensoren, Verstärkungselemente, usw.

Im Folgenden werden einige weitere allgemeine Aspekte in Bezug auf das Funktionselement beschrieben. Gemäß einem allgemeinen Aspekt kann ein Funktionselement zumindest mit einem ersten Teil in das poröse Material des Feuerwiderstandskörpers eingegossen sein. Ein zweiter Teil des Funktionselements kann aus dem Feuerwiderstandskörper herausragen. Gemäß einem weiteren Aspekt ist das Funktionselement starr.

Gemäß einem weiteren Aspekt ist an dem ersten Teil des Funktionselements ein Anker angebracht. Gemäß einem weiteren Aspekt ist der erste Teil des Funktionselements, beispielsweise der Anker, rotations-unsymmetrisch.

Der eingegossene erste Teil des Funktionselements schafft eine besonders gute Verbindung bei schneller und leichter Herstellbarkeit.

Optional kann das Funktionselement mechanisch verstärkt sein. Beispielsweise kann der Feuerwiderstandskörper um das Funktionselement herum mit einer Beschichtung oder einer Metallarmierung verkleidet sein, oder mit einem der in Abschnitt IV.e beschriebenen Elemente verstärkt sein.

In einer besonderen Ausführung können funktionale Komponenten wie Kabelkanäle, elektronische Komponenten, Verstärkungselemente oder Befestigungsvorrichtungen direkt in den Brandschutzkörper integriert sein. Die letztendliche Ausgestaltung des Feuerwiderstandskörpers kann ein Fachmann den spezifischen Bedürfnissen des jeweiligen Brandschutzelementes anpassen.

Mit den Feuerwiderstandskörpern der vorliegenden Erfindung ist es möglich, auch besonders komplexe Formen von Brandschutzelementen, wie zum Beispiel U-Profile, Zylinder und Schlosstaschen, herzustellen. Durch die vergleichsweise geringe Dichte der erfindungsgemässen Feuerwiderstandskörper können Brandschutzelemente mit einer integrierten Nut und Feder versehen und dadurch einfacher verbaut werden. Eine Verbindung mittels Nut und Feder führt beispielsweise zu besseren Brandschutzeigenschaften und weniger Montageaufwand im Vergleich zu verspachtelten Gipsplatten. Des Weiteren ist es zum Beispiel möglich, als zusammengefügte Bauklötze hergestellte Feuerwiderstandskörper durch monolithische zu ersetzen. Dadurch wird die Materialintegrität massgeblich verbessert und aufwändiges und kostspieliges Zusammenfügen einzelner Komponenten fällt weg.

### g. Schlosskasten-Hohlraum

Ein besonders bei Brandschutztüren wichtiger Aspekt betrifft einen Schlosskasten. Daher wird im Folgenden ein monolithischer Feuerwiderstandskörper in besonderem Detail beschrieben, welcher einen Schlosskasten-Hohlraum zur Aufnahme eines Türschlossmechanismus umfasst. Der erfindungsgemäße Feuerwiderstandskörper ist insbesondere für eine Brandschutztüre geeignet, wie sie etwa in Abschnitt VII.d oben beschrieben ist.

In der Figur 25a ist ein Feuerwiderstandskörper 60 (Schlosskasten für eine Feuerwiderstandstür) mit einem Schlosskasten-Hohlraum 80 zur Aufnahme eines Türschlossmechanismus in einer schematischen Seitenansicht dargestellt. Figur 25b zeigt eine Querschnittsansicht des Schlosskastens 60 von oben durch die Ebene A-A'.

Der Schlosskasten-Hohlraum 80 ist in eine Seitenkante des Schlosskastens eingelassen und bildet darin eine Öffnung 83. Durch diese Öffnung 83 ist seitlich ein Türschlossmechanismus (nicht dargestellt) in den Schlosskasten-Hohlraum 80 einschiebbar, und vorzugsweise bereits eingeschoben. In einer alternativen Ausführungsform kann der Türschlossmechanismus in den Schlosskasten-Hohlraum 80 bereits eingegossen sein.

Der Schlosskasten 60 ummantelt den Schlosskasten-Hohlraum zumindest teilweise von fünf Seiten (alle Seiten bis auf die Öffnung 83). Insbesondere ist der Schlosskasten-Hohlraum in beide seitliche Richtungen (Ober- und Unterseite in Figur 25b) des Schlosskastens teilweise durch Seitenwände 87 des Feuerwiderstandkörpers abgedeckt, welche das eingesetzte Türschloss oder den eingesetzten Schlosskasten somit umgeben und für einen ausreichenden Feuerwiderstand sorgen.

Durch diese Seitenwände 87 hindurch erstreckt sich jeweils eine Öffnung 84 zum Schlosskasten-Hohlraum 80, welche somit einen Zugang von der jeweiligen Seite zu dem Türschlossmechanismus ermöglicht. Diese Öffnungen können beispielsweise eine Welle für Türlinken und/oder einen Schließzylinder aufnehmen.

In Figur 26a-26c sind eine Seiten-, Vorder- und obere Ansicht eines weiteren Schlosskastens 60 gezeigt. Dieser Schlosskastens entspricht dem in Fig. 25a, 25b gezeigten, und deren Beschreibung gilt hier entsprechend, mit der Ausnahme, dass sich statt einer Öffnung nun drei Öffnungen 84 durch jede der Seitenwände 87 hindurch zum Schlosskasten-Hohlraum 80 erstrecken, beispielsweise eine für eine Türlinke und eine für einen Schließzylinder.

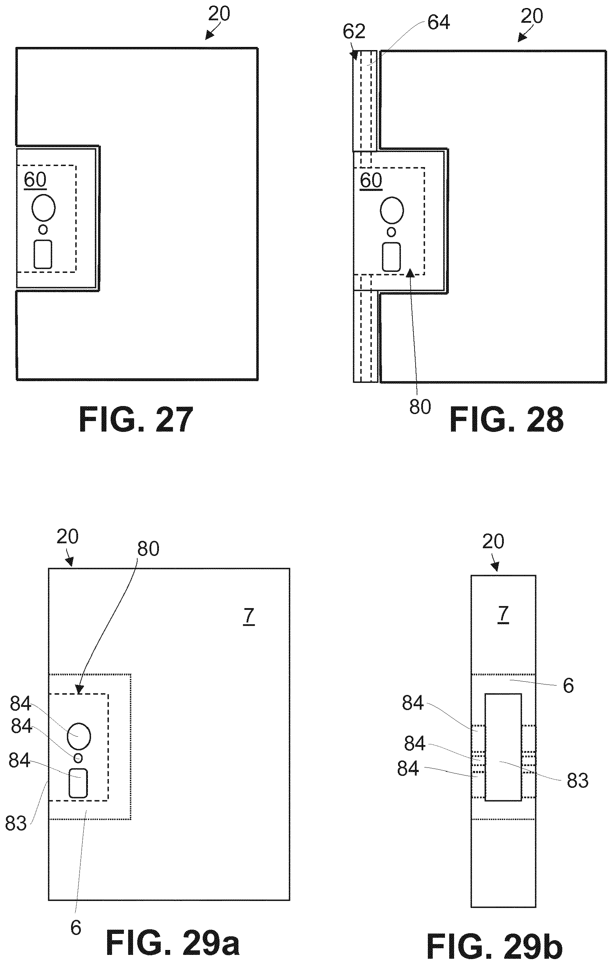

Fig. 27 zeigt, wie der Schlosskasten 60 von Fig. 25-26 in eine entsprechende Aussparung einer Einlage für eine Feuerschutztür 20 (siehe auch Fig. 21) eingesetzt sein kann. Das Türblatt umfasst somit den Feuerwiderstandskörper (Einlage für eine Feuerschutztür) 20, und darin angeordnet den weiteren Feuerwiderstandskörper 60 (Schlosskasten), welche in einen Rahmen (nicht dargestellt) eingesetzt sind.

Fig. 28 zeigt eine Anordnung mit Schlosskasten, welche der in Fig. 27 gezeigten Anordnung entspricht, wobei zusätzlich weitere Feuerwiderstandskörper 62 mit Verriegelungskanälen 64 für ein Verriegelungselement vorgesehen sind. Die Funktion der Verriegelungskanäle 64 entspricht der Beschreibung von Fig. 21, auf die hier verwiesen wird.

In Figur 29a, 29b sind eine Seiten- und eine Vorderansicht eines weiteren erfindungsgemäßen Feuerwiderstandskörpers 20 für ein Türblatt gezeigt. Verdeckte Kanten sind dabei teilweise strichliert gezeigt. In Fig. 29a, b ist der Schlosskasten in eine Einlage für das Türblatt integriert und mit diesem einstückig ausgebildet bzw. stoffschlüssig verbunden. Dies stellt einen besonders guten Feuerwiderstand bei gleichzeitig einfacher Herstellbarkeit sicher. Ansonsten gilt für Figur 29a,b die Beschreibung von Figur 25a,b und 26a,b entsprechend, mit den im Folgenden beschriebenen zusätzlichen Aspekten.

Der Feuerwiderstandskörper 20 (Türblatteinlage) von Figur 29a,b deckt eine Fläche ab, die einen überwiegenden Teil der Fläche des Türblatts (mindestens 50%, vorzugsweise mindestens 90%; mindestens 30 cm * 30 cm, vorzugsweise mindestens 1 m * 50 cm) entspricht.

Der Feuerwiderstandskörper 20 von Figur 29a,b weist darüber hinaus zwei Zonen 6, 7 unterschiedlicher Dichte auf: Eine erste Zone 6 erhöhter Dichte, welche im Bereich des Schlosskasten-Hohlraums 80 angeordnet ist, und eine zweite Zone 7 niedrigerer Dichte, welche den Rest des Feuerwiderstandskörpers bildet. Durch diese Zonierung wird ein ausreichender Brandschutz auch in dem Bereich des Türschlosses sichergestellt, in dem das zur Verfügung stehende Volumen für den Feuerwiderstandskörper verringert ist.

Der Feuerwiderstandskörper 20 von Figur 29a,b kann zusätzlich mit beliebigen der in Fig. 21 und 28 gezeigten weiteren Elemente ausgestattet sein.

Gegenüber Brandschutztüren aus dem Stand der Technik, in die teilweise eine komplizierte separate Ummantelung für ein Türschloss eingesetzt werden muss, ergibt sich der Vorteil, dass hier im Bereich des Schlosskastens nicht verschiedene Brandschutzelemente zusammengebaut verwendet werden müssen.

Im Folgenden werden weitere allgemeine mögliche Aspekte des Feuerwiderstandskörpers mit einer Aussparung für ein funktionelles Element, wie beispielsweise einem Schlosskasten-Hohlraum, beschrieben. Gemäß einem ersten Aspekt umfasst der Feuerwiderstandskörper ein poröses Material auf Gipsbasis, wie es in übrigen Abschnitten hierin beschrieben ist, wobei das poröse Material Makroporen mit einem Mediandurchmesser der Makroporen zwischen 0.1 mm und 5 mm hat. Gemäß einem Aspekt ist der Feuerwiderstandskörper monolithisch ausgebildet.

Die Aussparung ist gemäß einem Aspekt zur Aufnahme eines funktionellen Elements geeignet. Insbesondere kann die Aussparung ein Schlosskasten-Hohlraum zur Aufnahme eines Türschlossmechanismus sein, wobei verschiedene Ausführungsformen für unterschiedlich große Schlosskästen geeignet sind. Typische Aussparungen (Schlosskasten-Hohlräume) können Abmessungen von mindestens 25mm oder 30mm Dicke aufweisen. Typischerweise sind Kantenlängen der Aussparung (des Schlosskasten-Hohlraums) größer als 6cm, bevorzugt mindestens 8cm. Auf diese Weise können handelsübliche Schlosskästen eingesetzt werden. Vorzugsweise ist bereits ein Türschlossmechanismus im Schlosskasten-Hohlraum angeordnet.

Gemäß einem weiteren ist der Feuerwiderstandskörper plattenmäßig und/oder weist eine Abmessung von zumindest 4 cm* 6 cm, vorzugsweise von zumindest 6 cm * 9 cm, besonders vorzugsweise von zumindest 30cm*30cm auf. Weitere Aspekte sind oben in Bezug auf das Türblatt beschrieben.

Gemäß einem weiteren Aspekt ist die Aussparung als Schlosskasten-Hohlraum in eine Seitenkante des Feuerwiderstandskörpers eingelassen, so dass der Schlosskasten-Hohlraum in Richtung einer oder beider flacher Seiten des Feuerwiderstandkörpers zumindest teilweise durch Material des Feuerwiderstandkörpers abgedeckt ist. Gemäß einem weiteren Aspekt bildet der Feuerwiderstandskörper in der Seitenkante eine Öffnung.

Gemäß einem weiteren Aspekt weist der Feuerwiderstandskörper eine erste Zone und eine zweite Zone auf, wobei die erste Zone und die zweite Zone sich im Hinblick auf zumindest einen Parameter, z.B. der Dichte, unterscheiden. Eine Liste weiterer möglicher Parameter sowie weitere Aspekte zur Zonierung sind in Abschnitt VII.a beschrieben.

Gemäß einem bevorzugten Aspekt hat die erste Zone eine höhere Dichte und ist in einem Bereich der Aussparung angeordnet, und/oder die zweite Zone hat eine geringere Dichte und ist in einem Bereich entfernt von der Aussparung angeordnet. Der Feuerwiderstandskörper kann auch noch weitere Zonen aufweisen, wie beispielsweise in Figur 9, 10 illustriert ist. Bevorzugt hat die erste Zone eine höhere Dichte als die sie umgebende(n) Zone(n) des Feuerwiderstandskörpers.

Gemäß einem weiteren Aspekt wird eine Brandschutztüre mit dem hierin beschriebenen Feuerwiderstandskörper zur Verfügung gestellt. Gemäß einem weiteren Aspekt ist ein Türschloss in dem Schlosskasten-Hohlraum angebracht, z.B. eingesetzt oder eingegossen.

Im Folgenden wird ein Herstellfahren zur Herstellung eines Feuerwiderstandskörpers mit Schlosskasten-Hohlraum beschrieben. Das Herstellfahren umfasst:

- Herstellen einer Zusammensetzung, welche eine Wasser-Gips-Dispersion umfasst,

- Bereitstellen einer Gussform, welche einen Hohlraum umschliesst,

- Anordnen eines Schlosskasten-Profils als Einsatzkörper in der Gussform zum späteren Ausbilden eines Schlosskasten-Hohlraums in dem Feuerwiderstandskörper,

- Eingießen der Zusammensetzung in die Hohlform;

- Abbinden der Wasser-Gips-Dispersion zu einem Feuerwiderstandskörper in der Hohlform und Trocknen des Feuerwiderstandskörpers;

- Entfernen des Schlosskasten-Profils aus dem Feuerwiderstandskörper vor, während oder nach dem Trocknen; oder Bereitstellen des Schlosskasten-Profils oder eines Teils desselben als eingegossenen Schlosskasten-Hohlraum.

Alternativ oder zusätzlich kann auch ein Teil des Schlosskasten-Hohlraums oder sonstiger Öffnungen durch Aushöhlen (z.B. Fräsen und/oder Bohren) hergestellt werden. Gemäß diesem Aspekt umfasst das Herstellverfahren:

- Herstellen einer Zusammensetzung, welche eine Wasser-Gips-Dispersion umfasst,

- Bereitstellen einer Gussform, welche einen Hohlraum umschliesst,

- Eingießen der Zusammensetzung in die Hohlform;

- Abbinden der Wasser-Gips-Dispersion zu einem Feuerwiderstandskörper in der Hohlform und Trocknen des Feuerwiderstandskörpers;

- Aushöhlen eines Schlosskasten-Hohlraums in dem Feuerwiderstandskörper zur Aufnahme eines Türschlossmechanismus, wobei der Schlosskasten-Hohlraum eine Öffnung in einer Seitenkante des Feuerwiderstandskörpers bildet.

Optional kann sodann eine Metalleinlage in den Schlosskasten-Hohlraum eingesetzt werden.

Vorzugsweise umfasst das Verfahren weiter das Bilden eines Nassschaums durch Aufschäumen der Zusammensetzung, wobei Luftbläschen des Nassschaums durch die zumindest teilweise hydrophobisierten Partikel stabilisiert werden, indem die Partikel sich an den Wasser-Luft-Grenzflächen anlagern, welche die Wände der Luftbläschen bilden; und/oder weitere der etwa in Abschnitt III genannten Verfahrensschritte. Weiter können die weiter oben vorgesehenen weiteren Verstärkungsmaßnahmen (siehe Abschnitt IV.e) im Bereich des Schlosskasten-Hohlraums vorgesehen werden.

Die Aussparung wird beim Gießen vorzugsweise von mindestens drei Seiten, vorzugsweise von mindestens vier oder sogar von mindestens fünf Seiten von der Zusammensetzung zumindest teilweise umschlossen.

Als Ergebnis wird ein Feuerwiderstandskörper mit einer durch das Aussparungs-Profil definierten Aussparung wie oben beschrieben erhalten. Das Aussparungs-Profil kann sodann aus dem Feuerwiderstandskörper entfernt werden. Alternativ kann das Aussparungs-Profil als die Aussparung ummantelnder Einsatzkörper in dem Feuerwiderstandskörper belassen werden. In diesem Fall kann das Aussparungs-Profil Ankerelemente aufweisen, die für eine zusätzliche Stabilisierung in dem Feuerwiderstandskörper eingegossen sind. In dem Beispiel von Figur 25, 29 ist das Aussparungs-Profil ein Schlosskasten-Profil, und ein Türschloss wird dann in die erhaltene Aussparung (Schlosskasten-Hohlraum) eingesetzt.

Alternativ kann der Türschlossmechanismus selbst als das Schlosskasten-Profil oder als Teil desselben verwendet werden, und man erhält einen Feuerwiderstandskörper mit bereits eingegossenem Türschlossmechanismus.

Obwohl es bevorzugt ist, dass die Aussparung wie oben beschrieben durch Gießen erstellt wird, kann sie in einem alternativen Aspekt auch aus dem fertigen Feuerwiderstandskörper ausgenommen, etwa eingefräst oder gebohrt, werden. Auch eine Kombination von Gießen und Fräsen, etwa zur Feinanpassung, ist möglich.

Obzwar die Ausnehmungen in erster Linie in Bezug auf einen Schlosskasten-Hohlraum zur Montage eines Einstecktürschlosses beschrieben wurden, kann die Ausnehmung (oder eine weitere Ausnehmung) auch für andere funktionelle Elemente vorgesehen sein. Beispielsweise kann die Ausnehmung geeignet sein, ein Befestigungselement, ein Türschloss, einen Griff, ein Scharnier, einen Kabelstrang und/oder elektronische Komponenten aufzunehmen.

### h. Kabelkanal

Figur 31a, 31b zeigen Ansichten einer Umkleidung für einen Kabelkanal 92, die durch einen Feuerwiderstandskörper 90 gemäß einer Ausführung der Erfindung gebildet wird, in schematischer Seitenansicht (Figur 31a) und in eine Querschnittsansicht durch die Ebene A-A' (Figur 31b).

Ein Kabelkanal ist ein System für die Verlegung elektrischer Kabel. Er dient dem Schutz und der mechanischen Entlastung des Kabels. Eine Kabelpritsche ist eine offene Bauform als Sonderform eines Kabelkanals.

Der in Figur 31a, 31b dargestellte Feuerwiderstandskörper 90 erlaubt es, einen brandschutztechnisch ausreichend sicheren Kabelkanal 92 zu bilden bzw. einen bestehenden Kabelkanal brandschutztechnisch zu bekleiden, um die Funktionstüchtigkeit der Leitungen im Brandfall zu gewährleisten. Der Kabelkanal 92 erstreckt sich entlang einer Achse, entlang der die Kabel zu verlegen sind, und die senkrecht zur Querschnittsebene der Figur 31b verläuft. Der Feuerwiderstandskörper 90 ist im Querschnitt U-förmig geformt, was in der Figur 31b besonders gut ersichtlich ist, mit drei das Innere des Kabelkanals 92 abgrenzenden Seitenabschnitte 91a, 91b, 91c.

Der U-förmige Kabelkanal kann durch einen weiteren flächig als Deckel ausgebildeten Feuerwiderstandskörper geschlossen werden. Ein solcher Deckel 93 ist im Querschnitt in Fig. 31c dargestellt (gleiche Querschnittsebene wie bei Fig. 31b). Der Deckel weist einen sich längs der Achse erstreckenden Mittelabschnitt 93b und sich längs der Achse erstreckende Randabschnitte 93a auf. Die Randabschnitte 93a haben eine Profilierung, so dass der Deckel auf die Enden der Seitenabschnitte 91a, 91c des in Figur 31b dargestellten Feuerwiderstandskörper 90 passt. Der Deckel 93 ist vorzugsweise ebenfalls ein erfindungsgemäßer Feuerwiderstandskörper.

Alternativ kann der in Figur 31a, 31b dargestellte Feuerwiderstandskörper 90 geschlossen werden, indem er mit der offenen Seite (rechts in Figur 31b) an eine Wand- oder Deckenfläche eines Bauwerks oder an eine andere Fläche montiert wird.

Die Figur 32a zeigt einen weiteren Feuerwiderstandskörper 96 in Aufsicht. Hier verläuft die Achse des Kabelkanals 98 senkrecht zur Zeichenebene der Figur 32a. Der Feuerwiderstandskörper 96 weist ein im Wesentlichen zylindrisches Längsloch auf, welches sich entlang der Achse erstreckt und den Kabelkanal 98 bildet. Figur 32b ist eine seitliche Querschnittsansicht des Feuerwiderstandskörpers von Figur 32a.

Die Feuerwiderstandskörper 90, 96 definieren somit eine hohlprofilartige bzw. röhrenartige Ausdehnung, die sich durch eine ganze Längenausdehnung des jeweiligen Formkörpers durchzieht, und die geeignet ist, um Kabel, Rohre oder Schläuche aufzunehmen. Auch Schlauch- oder Rohrführungen oder dergleichen werden hierin allgemein als Kabelkanäle bezeichnet.

Die Feuerwiderstandskörper 90, 96 können auch verwendet werden, um Kabelführungen brandschutzmässig zu verbessern. (Dies schließt Schlauch- oder Rohrführungen ein). Derartige Kabelführungen können beispielsweise in den Kabelkanal 92, 98 eingeschoben werden, oder analog zu den in Abschnitt VII.f und VII.g diskutierten Elementen in den Feuerwiderstandskörper eingegossen werden.

Die Feuerwiderstandskörper 90, 96 können insbesondere für Kabelkanäle und/oder für Verriegelungskanäle in einer Feuerwiderstandstür verwendet werden, wie sie etwa in Fig. 21 und 28 illustriert sind.

Auch weitere geometrische Ausgestaltungen des Feuerwiderstandskörpers sind vorgesehen. Beispielsweise genügt es, wenn der Feuerwiderstandskörper in der Querschnittsebene mindestens zwei das Innere des Kabelkanals abgrenzende Seitenabschnitte aufweist (beispielsweise die beiden L-artig aneinandergrenzenden Seitenabschnitte 91a, 91c in Figur 31b, ohne die Seite 91b). Von zwei Seitenabschnitten ist die Rede, wenn die beiden Seitenabschnitte gegeneinander um mindestens 60°, vorzugsweise um mindestens 90° geneigt sind. Auch ein Viertel des in Figur 32a gezeigten Körpers (etwa der Bereich zwischen 6 Uhr und 9 Uhr um die Mitte des Körpers in Figur 32a) ist also als ein Körper mit zwei Seitenabschnitte zu verstehen. Allen Ausführungsformen für Kabelkanäle ist gemein, dass sie nicht auf eine einzige Fläche beschränkt sind und sich entlang einer Achse des Kabelkanals erstrecken.

Der Kabelkanal und ähnliche komplexe Formen können auf einfache Weise mittels des in Abschnitt III genannten Verfahrens hergestellt werden.

Im Folgenden werden weitere allgemeine Aspekte des Kabelkanals beschrieben. Gemäß einem Aspekt weist der Feuerwiderstandskörper mindestens zwei Seitenflächen auf. Zwei der mindestens zwei Seitenflächen sind in der Querschnittsebene L-artig zueinander angeordnet, vorzugsweise in einem Winkel zueinander, der 60° übersteigt und bevorzugt in einem Winkel zwischen 80° und 100° zueinander.

Gemäß einem weiteren weist der Feuerwiderstandskörper in der Querschnittsebene mindestens drei das Innere des Kabelkanals abgrenzende Seitenabschnitte auf. Die Seitenabschnitte sind vorzugsweise in der Querschnittsebene U-artig zueinander angeordnet, besonders bevorzugt mit paarweisen Winkeln zwischen benachbarten Seitenflächen, die jeweils 60° übersteigen und die bevorzugt in einem Winkel zwischen 80° und 100° zueinander stehen. Gemäß einem besonders bevorzugten Aspekt sind zumindest zwei der Seitenabschnitte in der Querschnittsebene im rechten Winkel zueinander angeordnet. Innenflächen der Seitenabschnitte können in der Querschnittsebene in einem Winkel aneinanderstoßen oder zusammen einem kontinuierlich gekrümmten Abschnitt, etwa einen Kreisabschnitt, bilden.

Gemäß einem weiteren Aspekt Feuerwiderstandskörper haben zumindest zwei der Seitenabschnitte in der Querschnittsebene eine Materialstärke von mindestens 0,5 cm und eine Schenkelhöhe von mindestens 2 cm. Gemäß einem weiteren Aspekt hat der Feuerwiderstandskörper eine Länge entlang der Achse von mindestens 0,5 m.

Gemäß einem Aspekt ist der Feuerwiderstandskörper monolithisch gebildet. Gemäß einem weiteren Aspekt kann der Feuerwiderstandskörper Zonen mit verschiedenen Eigenschaften aufweisen, wie bereits weiter oben beschrieben. Der Feuerwiderstandskörper kann beispielsweise eine erste Zone und eine zweite Zone aufweisen, wobei die erste Zone und die zweite Zone sich im Hinblick auf zumindest einen der oben genannten Parameter unterscheiden.

Ein weiterer Aspekt betrifft die Verwendung des Feuerwiderstandskörpers als Bauteil für einen Kabelkanal.

## i. Zusammenfassung und weitere spezielle Bauteile

In einer besonderen Ausführungsform kann der Feuerwiderstandskörper komplexe Strukturen aufweisen. Im Sinne der vorliegenden Anmeldung bedeutet dies, dass der Feuerwiderstandskörper ausgestaltet sein kann, um eine komplexe Hohlform auszufüllen, oder alternativ selbständig als komplexe Form verbaut werden kann. Beispiele hierzu sind in den vorangehenden Abschnitten bereits gegeben worden. Diese Formvielfalt ist dadurch ermöglicht, dass der Feuerwiderstandskörper gegossen und als stabiler Schaum in einer Gussform erstarren kann. Dies ist dank der Partikelstabilisierung des Schaums problemlos möglich.

Grundsätzlich sind die erfindungsgemässen Feuerwiderstandskörper daher in einer nahezu unerschöpflichen Formenvielfalt herstellbar. Entsprechend lassen sich weitere, hier nicht erwähnte Anwendungsgebiete erschliessen. Der erfindungsgemässe Feuerwiderstandskörper kann als Einlage an jegliches Element angepasst werden, welches zu Brandschutzzwecken eingesetzt wird.

Es ist beispielsweise möglich, den erfindungsgemässen Feuerwiderstandskörper für Brandschutztüren, Kabeldurchführungen, Brandschutzeinlagen für Tresore und/oder Tresorwänden, Sicherheitswänden und/oder Sicherheitselementen für, zum Beispiel, Feuerfesträume, Tresorräume, IT-Räume für Rechnen- oder Datenspeicherzentren, Brandschutzklappen, Rohrdurchführungen, Kabeldurchführungen, Brandschutzelementen in Tunnels, Brandschutzelementen in Fahrzeugen (z. B. Flugzeugen, Eisenbahnwaggons), Brandschutzelementen in Maschinen (z. B. Transformatoren), Brandschutzwandungen für Kabelkanäle, Brandschutzelementen in Elektroschaltkästen und/oder Schornsteinverkleidungen zu verwenden.

Typischerweise ist der Feuerwiderstandskörper in das jeweilige Bauteil eingesetzt oder in einen Rahmen des Bauteils als Gussform eingegossen.

Alles, was hierin als "bevorzugt", bevorzugter Aspekt, vorzugsweise und dergleichen geschildert wurde, ist optional aber nicht zwingend. Wenn hierin von "einem" Element die Rede ist, so bedeutet dies mindestens ein Element und schließt somit den Fall mehrerer Elemente nicht aus.

## Patentansprüche

1. Feuerwiderstandskörper, umfassend

   ein poröses Material auf Gipsbasis mit einem darin enthaltenen amphiphilen Additiv,
   wobei das amphiphile Additiv aus einer Kopfgruppe als hydrophilem Ende und einer Kohlenwasserstoffkette als hydrophobem Ende besteht, das amphiphile Additiv eine molekulare Masse von weniger als 300 g/mol hat, und das hydrophobe Ende eine Länge von 4-8 C-Atomen, optional zuzüglich einer Esterverbindung hat.

2. Feuerwiderstandskörper nach Anspruch 1, wobei das poröse Material geschäumt ist, und wobei Poren des porösen Materials an ihren Innenwänden zumindest partiell hydrophobe Teilchen aufweisen.

3. Feuerwiderstandskörper nach Anspruch 1, wobei das poröse Material auf Gipsbasis Makroporen mit einem Mediandurchmesser der Makroporen von zwischen 0,1 mm und 5 mm aufweist, wobei der Feuerwiderstandskörper einen ersten Bereich aufweist, und wobei der Durchmesser der Makroporen innerhalb des ersten Bereichs eine Verteilbreite von weniger als dem 0.45-fachen des Mediandurchmesser der Makroporen aufweist.

4. Feuerwiderstandskörper nach Anspruch 1, wobei

   das poröse Material auf Gipsbasis Makroporen mit einem Mediandurchmesser der Makroporen von zwischen 0,1 mm und 5 mm aufweist, wobei der Feuerwiderstandskörper einen ersten Bereich aufweist, und wobei
   die Dichte des Feuerwiderstandskörpers in dem ersten Bereich eine Verteilbreite von weniger als 5%, bevorzugt weniger als 3%, besonders bevorzugt weniger als 2% aufweist, wobei die Dichte als mittlere Dichte in regulären Volumina von 50 ml definiert ist.

5. Feuerwiderstandskörper nach dem vorangehenden Anspruch, wobei der erste Bereich eine Fläche von mindestens 0.3 m$^2$ und/oder ein Volumen von mindestens 0,001 m$^3$ einnimmt.

6. Feuerwiderstandskörper nach Anspruch 1, wobei das Material gering wasserabsorbierend ist, so dass seine durch Auftriebsmessung ermittelte Wasserabsorptionszeit 24 Stunden übersteigt.

7. Feuerwiderstandskörper nach einem der vorangehenden Ansprüche, wobei der Feuerwiderstandskörper eine Dichte zwischen 80 und 400 kg/m$^3$ aufweist.

8. Feuerwiderstandskörper nach einem der vorangehenden Ansprüche, wobei der Anteil der geschlossenen Makroporen mindestens 70% beträgt.

9. Feuerwiderstandskörper nach einem der vorangehenden Ansprüche, enthaltend mindestens 50 Gewichts-% $CaSO_4$ Dihydrat und einen Anteil an anorganischem Material von mindestens 90 Gewichts-%.

**10.** Herstellfahren zur Herstellung eines Feuerwiderstandskörpers, wobei das Herstellverfahren umfasst:

- Bereitstellen eines Rahmens als Hohlform;
- Bereitstellen einer Zusammensetzung, welche eine Wasser-Gips-Dispersion und ein amphiphiles Additiv umfasst, wobei das amphiphile Additiv aus einer Kopfgruppe als hydrophilem Ende und einer Kohlenwasserstoffkette als hydrophobem Ende besteht, das amphiphile Additiv eine molekulare Masse von weniger als 300 g/mol hat, und das hydrophobe Ende eine Länge von 4-8 C-Atomen, optional zuzüglich einer Esterverbindung hat;
- Eingießen der Zusammensetzung in die Hohlform;
- Abbinden der Wasser-Gips-Dispersion zu einem Feuerwiderstandskörper in der Hohlform und Trocknen des Feuerwiderstandskörpers, und eines von (a) und (b):

(a) Belassen oder Wieder-Einsetzen des Feuerwiderstandskörpers in der Hohlform, so dass die Hohlform einen Rahmen des Bauteils bildet und der Feuerwiderstandskörper im Rahmen eingepasst ist;
(b) Entfernen des Feuerwiderstandskörpers aus der Hohlform vor, während oder nach dem Trocknen, und Einsetzen des Feuerwiderstandskörpers in einen Rahmen des Bauteils, so dass der Feuerwiderstandskörper im Rahmen eingepasst ist.

**11.** Bauteil, umfassend einen Feuerwiderstandskörper nach einem der Ansprüche 1 bis 9 und einen Rahmen, wobei das Bauteil eine Feuerschutzklasse von zumindest F30 aufweist und der Feuerwiderstandskörper in den Rahmen eingegossen oder eingepasst ist, insbesondere mittels des Verfahrens gemäß dem vorangehenden Anspruch.

**12.** Verfahren zur Herstellung eines Feuerwiderstandskörpers nach einem der Ansprüche 1 bis 9, das Verfahren umfassend

- Bereitstellen einer schäumbaren Zusammensetzung, welche umfasst: eine Wasser-Gips-Dispersion, das Hydrophobisierungs-Additiv, welches die im Wasser dispergierten Gipspartikel der Wasser-Gips-Dispersion zumindest teilweise hydrophobisiert, optional weitere Additive;
- Bilden eines Nassschaums durch Aufschäumen der Zusammensetzung, wobei Luftbläschen des Nassschaums durch die zumindest teilweise hydrophobisierten Partikel des Bindemittels stabilisiert werden, indem die Partikel sich an den Wasser-Luft-Grenzflächen anlagern, welche die Wände der Luftbläschen bilden; und
- Abbinden des Nassschaums, wobei der Nassschaum zu dem Feuerfestkörper aushärtet, und wobei die stabilisierten Luftbläschen Makroporen des Feuerfestkörpers bilden, und anschließendes Trocknen des Feuerfestkörpers.

## Claims

**1.** A fire-resistive body, comprising
a gypsum-based porous material having an amphiphilic additive contained therein,
wherein the amphiphilic additive consists of a head group as hydrophilic end and a hydrocarbon chain as hydrophobic end, the amphiphilic additive having a molecular mass of less than 300 g/mol, and the hydrophobic end having a length of 4-8 carbon atoms, optionally plus an ester bond.

**2.** The fire-resistive body according to claim 1, wherein the porous material is foamed, and wherein pores of the porous material at least partially comprise hydrophobic particles on their inner walls.

**3.** The fire-resistive body according to claim 1, wherein the gypsum-based porous material comprises macropores having a median diameter of the macropores of between 0.1 mm and 5 mm, wherein the fire-resistive body has a first region, and wherein the diameter of the macropores within the first region has a spreading width of less than 0.45 times the median diameter of the macropores.

**4.** The fire-resistive body according to claim 1, wherein
the gypsum-based porous material comprises macropores having a median diameter of the macropores of between 0.1 mm and 5 mm, the fire-resistive body having a first region, and wherein
the density of the fire-resistive body in the first region comprises a spreading width of less than 5%, preferably less than 3%, more preferably less than 2%, the density being defined as the average density in regular volumes of 50 ml.

**5.** The fire-resistive body according to the preceding claim, wherein the first region occupies an area of at least 0.3 $m^2$

and/or a volume of at least 0.001 m$^3$.

6. The fire-resistive body according to claim 1, wherein the material is slightly water absorbent, such that its water absorption time determined by buoyancy measurements exceeds 24 hours.

7. The fire-resistive body according to any one of the preceding claims, wherein the fire-resistive body has a density of between 80 and 400 kg/m$^3$.

8. The fire-resistive body according to any one of the preceding claims, wherein the proportion of the closed macropores is at least 70%.

9. The fire-resistive body according to any one of the preceding claims, containing at least 50 wt% of CaSO$_4$ dihydrate and a proportion of inorganic material of at least 90 wt%.

10. A process for manufacturing a fire-resistive body, wherein the manufacturing process includes:

    - providing a frame as a hollow mold;
    - providing a composition, which comprises a water-gypsum dispersion and an amphiphilic additive, wherein the amphiphilic additive consists of a head group as hydrophilic end and a hydrocarbon chain as hydrophobic end, the amphiphilic additive having a molecular mass of less than 300 g/mol, and the hydrophobic end having a length of 4-8 carbon atoms, optionally plus an ester bond;
    - casting the composition in the hollow mold;
    - curing the water-gypsum dispersion to a fire-resistive body in the hollow mold and drying the fire-resistive body, and (a) or (b):

        (a) retaining or reinserting the fire-resistive body in the hollow mold such that the hollow mold forms a frame of the component and the fire-resistive body is fitted within the frame;
        (b) removing the fire-resistive body from the hollow mold before, during or after drying, and inserting the fire-resistive body into a frame of the component, so that the fire-resistive body is fitted in the frame.

11. A component comprising a fire-resistive body according to any one of claims 1 to 9 and a frame, wherein the component has a fire protection class of at least F30 and the fire-resistive body is cast or fitted into the frame, in particular by means of the method according to the preceding claim.

12. A method for producing a fire-resistive body according to any of claims 1 to 9, the method comprising the steps of:

    - providing a foamable composition, comprising: a water-gypsum dispersion, the hydrophobizing additive, which at least partially hydrophobizes the gypsum particles dispersed within the water of the water-gypsum dispersion, optionally further additives;
    - forming a wet foam by foaming the composition, wherein air bubbles of the wet foam are stabilized by the at least partially hydrophobized particles of the binder through the accumulation of the particles at the water-air interfaces, which form the walls of the air bubbles; and
    - curing the wet foam, wherein the wet foam cures to the refractory body, and wherein the stabilized air bubbles form macropores of the refractory body, and subsequent drying of the refractory body.

**Revendications**

1. Corps de résistance au feu comprenant
un matériau poreux à base de plâtre contenant un additif amphiphile,
l'additif amphiphile étant constitué par un groupe de tête en tant qu'extrémité hydrophile et par une chaîne hydrocarbonée en tant qu'extrémité hydrophobe, l'additif amphiphile présentant une masse moléculaire inférieure à 300 g/mole et l'extrémité hydrophobe présentant une longueur de 4-8 atomes de carbone, présentant éventuellement en plus une liaison ester.

2. Corps de résistance au feu selon la revendication 1, le matériau poreux étant moussé et les pores du matériau poreux présentant au niveau de leurs parois internes au moins partiellement des particules hydrophobes.

3. Corps de résistance au feu selon la revendication 1, le matériau poreux à base de plâtre présentant des macropores présentant un diamètre médian des macropores entre 0,1 mm et 5 mm, le corps réfractaire présentant une première zone et les diamètres des macropores dans la première zone présentant une largeur de distribution inférieure à 0,45 fois le diamètre médian des macropores.

4. Corps de résistance au feu selon la revendication 1,
le matériau poreux à base de plâtre présentant des macropores présentant un diamètre médian des macropores entre 0,1 mm et 5 mm, le corps réfractaire présentant une première zone et
la densité du corps de résistance au feu dans la première zone présentant une largeur de distribution inférieure à 5 %, de préférence inférieure à 3 %, de manière particulièrement préférée inférieure à 2 %, la densité étant définie comme densité moyenne dans des volumes réguliers de 50 ml.

5. Corps de résistance au feu selon la revendication précédente, la première zone occupant une surface d'au moins 0,3 m$^2$ et/ou un volume d'au moins 0,001 m$^3$.

6. Corps de résistance au feu selon la revendication 1, le matériau absorbant peu d'eau, de telle sorte que son temps d'absorption d'eau déterminé par mesure de flottabilité dépasse 24 heures.

7. Corps de résistance au feu selon l'une quelconque des revendications précédentes, le corps réfractaire présentant une densité entre 80 et 400 kg/m$^3$.

8. Corps de résistance au feu selon l'une quelconque des revendications précédentes, la proportion de macropores fermés étant d'au moins 70 %.

9. Corps de résistance au feu selon l'une quelconque des revendications précédentes, contenant au moins 50 % en poids de $CaSO_4$ dihydraté et une proportion de matériau inorganique d'au moins 90 % en poids.

10. Procédé de fabrication d'un corps de résistance au feu, le procédé de fabrication comprenant :

   - la mise à disposition d'un cadre en tant que moule creux ;
   - la mise à disposition d'une composition qui comprend une dispersion eau-plâtre et un additif amphiphile, l'additif amphiphile étant constitué par un groupe de tête en tant qu'extrémité hydrophile et par une chaîne hydrocarbonée en tant qu'extrémité hydrophobe, l'additif amphiphile présentant une masse moléculaire inférieure à 300 g/mole et l'extrémité hydrophobe présentant une longueur de 4-8 atomes de carbone, présentant éventuellement en plus une liaison ester;
   - le déversement de la composition dans le moule creux ;
   - la prise de la dispersion eau-plâtre en un corps de résistance au feu dans le moule creux et le séchage du corps de résistance au feu, et (a) ou (b) :

      (a) le fait de laisser ou de replacer le corps de résistance au feu dans le moule creux, de telle sorte que le moule creux forme un cadre de la pièce de construction et que le corps de résistance au feu est ajusté dans le cadre ;
      (b) le fait d'enlever le corps de résistance au feu du moule creux avant, pendant ou après le séchage et le placement du corps de résistance au feu dans un cadre de la pièce de construction, de telle sorte que le corps de résistance au feu est ajusté dans le cadre.

11. Pièce de construction, comprenant un corps de résistance au feu selon l'une quelconque des revendications 1 à 9 et un cadre, la pièce de construction présentant une classe de résistance au feu d'au moins F30 et le corps de résistance au feu étant déversé ou ajusté dans le cadre, en particulier au moyen du procédé selon la revendication précédente.

12. Procédé pour la fabrication d'un corps de résistance au feu selon l'une quelconque des revendications 1 à 9, le procédé comprenant

   - la mise à disposition d'une composition pouvant être moussée qui comprend : une dispersion eau-plâtre, l'additif d'hydrophobisation, qui rend au moins partiellement hydrophobe les particules de plâtre dispersées dans l'eau de la dispersion eau-plâtre, éventuellement d'autres additifs ;
   - la formation d'une mousse humide par moussage de la composition, les bulles d'air de la mousse humide étant stabilisées par les particules rendues au moins partiellement hydrophobes du liant, en ce que les particules s'accumulent aux interfaces eau-air, qui forment les parois des bulles d'air et
- la prise de la mousse humide, la mousse humide durcissant en corps réfractaire et les bulles d'air stabilisées formant les macropores du corps réfractaire, et le séchage consécutif du corps réfractaire.

**FIG. 1**

FIG. 2

FIG. 3

FIG. 6

**FIG. 4**

**FIG. 5**

a)          b)          c)

**FIG. 7**

a)          b)          c)

**FIG. 8**

20

25

22    21    23

24

**FIG. 9a**

20

25

22    21    23

**FIG. 9b**

20

26

21

**FIG. 10a**

20

27

21

**FIG. 10b**

**FIG. 11**

**FIG. 12**

FIG. 13

FIG. 14

**FIG. 15a**

**FIG. 15b**

**FIG. 16a**

**FIG. 16b**

**FIG. 17a**

**FIG. 17b**

## FIG. 18

## FIG. 19

## FIG. 20

**FIG. 21**

**FIG. 22**

**FIG. 30a**

**FIG. 30b**

20    71

A — — A'

B — — B'

**FIG. 23a**

71    **FIG. 23b**

**FIG. 23c**

70   72
          C

**FIG. 24a** C'

74   72
     76
     78

**FIG. 24b**

**FIG. 25a**

**FIG. 25b**

**FIG. 26a**

**FIG. 26b**

**FIG. 26c**

**FIG. 27**

**FIG. 28**

**FIG. 29a**

**FIG. 29b**

FIG. 31a

FIG. 31b

FIG. 31c

FIG. 32a

FIG. 32b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6039800 A
- EP 2045227 A1
- WO 2007068127 A1
- US 5155959 A

### In der Beschreibung aufgeführte Nicht-Patentliteratur

- **ZORA BAZELOVÄ et al.** *THE EFFECT OF SURFACE ACTIVE SUBSTANCE CONCENTRATION ON THE PROPERTIES OF FOAMED AND NON-FOAMED GYPSUM*